(19) Europäisches Patentamt
European Patent Office
Office européen des brevets

(11) **EP 2 982 502 A1**

(12) **EUROPEAN PATENT APPLICATION**
published in accordance with Art. 153(4) EPC

(43) Date of publication:
**10.02.2016 Bulletin 2016/06**

(51) Int Cl.:
***B32B 3/30*** (2006.01)     ***B29C 39/18*** (2006.01)
***B29C 39/20*** (2006.01)     ***B29C 59/02*** (2006.01)
***G02B 1/11*** (2015.01)

(21) Application number: **14779531.4**

(22) Date of filing: **04.04.2014**

(86) International application number:
**PCT/JP2014/060016**

(87) International publication number:
**WO 2014/163198 (09.10.2014 Gazette 2014/41)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **05.04.2013 JP 2013079568
12.08.2013 JP 2013167825**

(71) Applicant: **Mitsubishi Rayon Co., Ltd.
Tokyo 100-8253 (JP)**

(72) Inventors:
• **NAKAI Yusuke
  Otake-shi
  Hiroshima 739-0693 (JP)**
• **OTANI Go
  Otake-shi
  Hiroshima 739-0693 (JP)**
• **OZAWA Satoru
  Otake-shi
  Hiroshima 739-0693 (JP)**
• **JIGAMI Tetsuya
  Otake-shi
  Hiroshima 739-0693 (JP)**

(74) Representative: **Hoffmann Eitle
Patent- und Rechtsanwälte PartmbB
Arabellastraße 30
81925 München (DE)**

(54) **MULTILAYER STRUCTURE, METHOD FOR PRODUCING SAME, AND ARTICLE**

(57)     A multilayer structure wherein a base, an intermediate layer and an outermost layer are sequentially laminated. The intermediate layer has a Martens hardness of 120 N/mm$^2$ or more; the outermost layer has an elastic modulus recovery ratio of 70% or more; and the surface of the outermost layer is provided with a microrelief structure that has a pitch not more than the wavelength of visible light. A method for producing a multilayer structure wherein a base, an intermediate layer and an outermost layer are sequentially laminated, which comprises the following steps (1)-(3).Step (1): a step wherein an active energy ray curable resin composition (X) containing a compound having a polymerizable functional group is arranged on a light-transmitting base, and then first active energy ray irradiation is carried out, thereby forming an intermediate layer in which the rate of reaction of the polymerizable functional group in the surface is 35-85% by moleStep (2): a step wherein an active energy ray curable resin composition (Y) is arranged between the intermediate layer and a mold for microrelief structure transferStep (3): a step wherein second active energy ray irradiation is carried out from the base side, so that the resin composition (Y) is cured so as to form an outermost layer, and then a multilayer structure is released from the mold.

Fig. 1

**Description**

TECHNICAL FIELD

The present invention relates to a multilayer structure, a method for producing the same, and an article.

This application is based upon and claims the benefit of priority of the prior Japanese Patent Application No. 2013-079568 filed in the Japanese Patent Office on April 5, 2013 and the prior Japanese Patent Application No. 2013-167825 filed in the Japanese Patent Office on August 12, 2013, the entire contents of which are incorporated herein by reference.

BACKGROUND ART

Articles having a fine relief structure with a cycle equal to or less than the wavelength of visible light on the surface are known to have an antireflective performance due to a continuous change in refractive index of the fine relief structure.

In addition, the fine relief structure is also known to exert super water repellent performance by the Lotus effect. However, the nanoscale convex portion on the surface of the fine relief structure is easily destroyed and the surface of the fine relief structure exhibits lower abrasion resistance and durability as compared with a smooth surface formed of the same resin.

As a method for producing an article having a fine relief structure on the surface, for example, the following methods have been proposed.

(i) A method in which a fine relief structure is transferred to a thermoplastic resin at the time of injection molding or press molding the thermoplastic resin using a mold (stamper) having the inverted structure of the fine relief structure on the surface.
(ii) A method in which an active energy ray curable resin composition is filled between a mold having the inverted structure of a fine relief structure on the surface and a substrate and cured by being irradiated with an active energy ray and the mold is then released therefrom to transfer the fine relief structure to the cured product.
(iii) A method in which an active energy ray curable resin composition is filled between a mold having the inverted structure of a fine relief structure on the surface and a substrate, the mold is released therefrom to transfer the fine relief structure to the active energy ray curable resin composition, and the active energy ray curable resin composition is then cured by being irradiated with an active energy ray.

Among these, the methods of (ii) and (iii) have received attention from the viewpoint of satisfactory transferability of the fine relief structure, a high degree of freedom in composition of the surface of an article, a possibility of continuous production in a case in which the mold is a belt or a roll, and excellent productivity.

A fine relief structural body in which a fine relief structure is formed by a method to cure a resin composition by irradiating with an active energy ray and to transfer the fine relief structure or a resin composition for forming a fine relief structure has been proposed so far. As the active energy ray curable resin composition used in the methods of (ii) and (iii), for example, the following compositions have been proposed.

(1) A photocurable resin composition containing an acrylate oligomer such as a urethane acrylate, an acrylic resin having a radically polymerizable functional group, a mold releasing agent, and a photopolymerization initiator (Patent Document 1).
(2) An ultraviolet curable resin composition containing a polyfunctional (meth)acrylate, such as trimethylolpropane tri(meth)acrylate, which has a significantly high number of double bonds per molecular weight, a photopolymerization initiator, and a leveling agent such as polyether-modified silicone oil (Patent Document 2). It is described in Patent Document 2 that a fine relief structure having a cycle equal to or less than the wavelength of the visible light is fabricated using a close-packed silica sol as a mold.

However, it is difficult to impart all of the optical performance, the adhesion property to a substrate, the mechanical properties (abrasion resistance, pencil hardness, or the like) and the like to the layer consisting of the cured product of an active energy ray curable resin composition (fine relief structure layer) at a practical level. In particular, abrasion resistance and pencil hardness which are regarded to be important as the mechanical properties have different mechanisms in the occurrence of scratches as to be described below, and thus it is difficult to enhance both the abrasion resistance and the pencil hardness.

The abrasion resistance indicates the degree of being hardly scratched when the surface having a fine relief structure is scratched as an external force is applied thereto mainly in the horizontal direction, the convex portion is folded or buckled, and thus the relief structure cannot be maintained. Meanwhile, the pencil hardness indicates the degree of being scratched when the surface having a fine relief structure is scratched as an external force is applied thereto mainly in the vertical direction (pushing direction), the dent extends to the substrate, and thus an indentation remains on the substrate or the fine relief structure layer.

As a method for enhancing both the antireflective performance and the pencil hardness, a method to provide an intermediate layer between the cured layer (fine relief structure layer) of an active energy curable resin composition having a fine relief structure transferred thereon and a substrate is known (Patent Document 3).

In addition, it is described in Patent Document 4 that a hard coat layer having a fine convex and concave is desirably a resin exhibiting a hardness of "H" or higher in the pencil hardness test conducted in conformity with JIS K5600-5-4. Moreover, a polyfunctional monomer, such as dipentaerythritol hexaacrylate, dipentaerythritol pentaacrylate, and pentaerythritol tetraacrylate, which has a significantly high number of double bonds per molecular weight is used in Examples thereof.

In addition, an intermediate layer for enhancing the adhesion property or adhesive property between the substrate film and the nano-relief structure surface layer is disclosed in Patent Documents 4 and 5. In addition, a laminate body equipped with a refractive index adjusting layer as the lower layer of the surface having a nano-relief structure in order to enhance the antireflective effect is disclosed in Patent Document 6. In addition, an antireflective film including an intermediate layer having a function (self-repair function) to restore the molding sink and a hard coat layer which has a different refractive index from that of the intermediate layer and provided on the intermediate layer is disclosed in Patent Document 7.

CITATION LIST

PATENT DOCUMENT

Patent Document 1: JP 4156415 B1
Patent Document 2: JP 2000-71290 A
Patent Document 3: JP 2011-224957 A
Patent Document 4: JP 2002-107501 A
Patent Document 5: JP 3627304 B1
Patent Document 6: JP 2009-31764 A
Patent Document 7: JP 3676260 B1

SUMMARY OF THE INVENTION

PROBLEM TO BE SOLVED BY THE INVENTION

However, the abrasion resistance is not necessarily sufficient in the case of the method to provide an intermediate layer between the cured layer and the substrate as described in Patent Document 3. Hence, there is a limit to improve the abrasion resistance by enhancing the pencil hardness, and thus it is not easy to enhance both the abrasion resistance and the pencil hardness.

The nano-relief structures described in Patent Documents 2 and 4 to 6 do not necessarily satisfy the abrasion resistance. In particular, the nano-relief structure is brittle when the resin to form the nano-relief structure is hard, and thus the nano-relief structure is destroyed and the antireflective performance is easily lost in the case of conducting the abrasion test with steel wool or the like. In addition, there is a problem that the nano-relief structure is destroyed and the antireflective performance is easily lost in the pencil hardness test as well.

In addition, the intermediate layers described in Patent Documents 4 to 6 are those provided for the purpose of improving the adhesive property or antireflective performance. The antireflective film described in Patent Document 7 includes an intermediate layer having a self-repair function with respect to the dent by the pressing force but this intermediate layer does not necessarily exhibit the function to improve the pencil hardness.

The invention has been made in view of the above circumstances, and an object thereof is to provide a multilayer structure which exhibits excellent optical performance and abrasion resistance and has a high pencil hardness, a method for producing the same, and an article which exhibits excellent optical performance and abrasion resistance and has a high pencil hardness.

MEANS FOR SOLVING PROBLEM

As a result of intensive investigations, the present inventors have found out that it is possible to enhance both the abrasion resistance and the pencil hardness without impairing the optical performance such as antireflective performance by regulating the physical properties of the cured layer having a fine relief structure and the intermediate layer, whereby the invention has been completed.

Furthermore, it has been found out that it is possible to solve the problem of achieving both the abrasion resistance and the pencil hardness by a multilayer structure having an intermediate layer (second layer) satisfying a specific condition, whereby the invention has been completed.

In other words, the invention has the following aspects.

<1> A multilayer structure including a substrate, an intermediate layer, and an outermost layer sequentially layered, in which the Martens hardness of the intermediate layer is 120 N/mm$^2$ or more, an elastic recovery of the outermost layer is 70% or more, and the outermost layer has a fine relief structure having a cycle equal to or less than a wavelength of visible light on a surface.

<2> The multilayer structure according to <1>, in which the cycle of the fine relief structure on the surface of the outermost layer is 400 nm or less.

<3> The multilayer structure according to <1> or <2>, in which the elastic recovery of the outermost layer is 80% or more.

<4> The multilayer structure according to <1> or <2>, in which the Martens hardness of the intermediate layer is 180 N/mm$^2$ or more.

<5> The multilayer structure according to any one of <1> to <4>, in which an elastic recovery of the intermediate layer is 60% or more.

<6> The multilayer structure according to any one of <1> to <5>, in which the intermediate layer has a fine relief structure having a cycle of 1000 nm or less on a surface.

<7> The multilayer structure according to <6>, in which the cycle of the fine relief structure on the surface of the intermediate layer is different from the cycle of the fine relief structure on the surface of the outermost layer.

<8> The multilayer structure according to any one of <1> to <7>, in which the intermediate layer is a cured product of a resin composition containing a polyfunctional (meth)acrylate.

<9> An article including the multilayer structure according to any one of <1> to <8> on a surface.

<10> A method for producing the multilayer structure according to any one of <1> to <8>, in which the fine relief structure is formed by a transfer method using a mold.

<11> A method for producing a multilayer structure including a substrate, an intermediate layer, and an outermost layer sequentially layered, the method including the following steps (1) to (3):

step (1): a step of disposing an active energy ray curable resin composition (X) containing a compound having a polymerizable functional group on a light transmissive substrate and then conducting a first active energy ray irradiation to form an intermediate layer having a reaction rate of the polymerizable functional group on a surface of from 35 to 85% by mole;

step (2): a step of disposing an active energy ray curable resin composition (Y) between the intermediate layer formed in the step (1) and a mold for transfer of a fine relief structure; and

step (3): a step of conducting a second active energy ray irradiation from the substrate side to cure the resin composition (Y) and to form an outermost layer and releasing a multilayer structure including the substrate, the intermediate layer, and the outermost layer sequentially layered from the mold.

<12> A method for producing the multilayer structure according to any one of <1> to <5>, the method including the following steps (1) to (3):

step (1): a step of disposing an active energy ray curable resin composition (X) containing a compound having a polymerizable functional group on a light transmissive substrate and then conducting a first active energy ray irradiation to form an intermediate layer having a reaction rate of the polymerizable functional group on a surface of from 35 to 85% by mole;

step (2): a step of disposing an active energy ray curable resin composition (Y) between the intermediate layer formed in the step (1) and a mold for transfer of a fine relief structure; and

step (3): a step of conducting a second active energy ray irradiation from the substrate side to cure the resin composition (Y) and to form an outermost layer and releasing a multilayer structure including the substrate, the intermediate layer, and the outermost layer sequentially layered from the mold.

<13> The method for producing a multilayer structure according to <11> or <12>, in which a cumulative quantity of light by the first active energy ray irradiation in the step (1) is from 50 to 1000 mJ/cm$^2$.

<14> The method for producing a multilayer structure according to <13>, in which the cumulative quantity of light by the first active energy ray irradiation in the step (1) is from 100 to 500 mJ/cm$^2$.

<15> The method for producing a multilayer structure according to any one of <11> to <14>, in which the intermediate layer is a semi-cured product of a resin composition (X) containing (poly)pentaerythritol (poly)acrylate and a reaction product of (poly)pentaerythritol (poly)acrylate with hexamethylene diisocyanate.

<16> A multilayer structure obtained by the method for producing a multilayer structure according to any one of <11> to <15>, in which a reaction rate of a polymerizable functional group on a surface of an intermediate layer after a first active energy ray irradiation is from 35 to 85% by mole.

EFFECT OF THE INVENTION

The multilayer structure of the invention exhibits excellent optical performance and abrasion resistance and has a high pencil hardness.

According to the method for producing a multilayer structure of the invention, it is possible to produce a multilayer structure which exhibits excellent optical performance and abrasion resistance and has a high pencil hardness.

The article of the invention exhibits excellent optical performance and abrasion resistance and has a high pencil hardness.

In addition, according to the invention, it is possible to provide a multilayer structure (laminate body) excellent in performance to prevent the reflection of light, performance to transmit light, mechanical properties and the like. The mechanical properties include the "resistance to steel wool abrasion" reflecting the scratch resistance and the like and the "pencil hardness" different from the resistance to steel wool abrasion, and these two properties are in a trade-off relationship, but according to the invention, these two properties are both favorable and can be sufficiently subjected to practical use. Hence, specifically, it is possible to provide a multilayer structure exhibiting excellent mechanical properties for an application such as the antireflection with respect to FPD or the like, an improvement in light transmissiveness, and the surface protection.

BRIEF DESCRIPTION OF DRAWINGS

Fig. 1 is a cross-sectional view illustrating an example of a multilayer structure according to a first aspect of the invention;

Fig. 2 is a cross-sectional view illustrating a manufacturing process of a mold having anodized alumina on the surface;

Fig. 3 is a block diagram illustrating an example of an apparatus for producing a multilayer structure;

Fig. 4 is a cross-sectional view illustrating another example of a multilayer structure according to the first aspect of the invention;

Fig. 5 is a cross-sectional view illustrating another example of a multilayer structure according to the first aspect of the invention;

Fig. 6 is a cross-sectional view illustrating another example of a multilayer structure according to the first aspect of the invention;

Fig. 7 is a graph illustrating an example of a load-deformation curve obtained by measuring a cut section of a multilayer structure by an atomic force microscope;

Fig. 8A is a schematic cross-sectional view illustrating an embodiment of a multilayer structure according to a second aspect of the invention.

Fig. 8B is a schematic cross-sectional view illustrating another embodiment of a multilayer structure according to the second aspect of the invention.

MODE(S) FOR CARRYING OUT THE INVENTION

[First aspect]

Hereinafter, the first aspect of the invention will be described in detail.

Incidentally, in the present specification, the uppermost layer of the multilayer structure is referred to as the "outermost layer", the lowermost layer is referred to as the "substrate" or "substrate layer", and the layer that is disposed between the outermost layer and the substrate is referred to as the "intermediate layer".

In addition, in the present specification, the "active energy ray" means visible light, ultraviolet light, an electron beam, plasma, heat rays (infrared rays or the like) and the like.

In addition, in the present specification, the "(meth)acrylate" is a general term for an acrylate and a methacrylate, the "(meth)acrylic acid" is a general term for acrylic acid and methacrylic acid, the "(meth)acrylonitrile" is a general term for acrylonitrile and methacrylonitrile, and the "(meth)acrylamide" is a general term for acrylamide and methacrylamide.

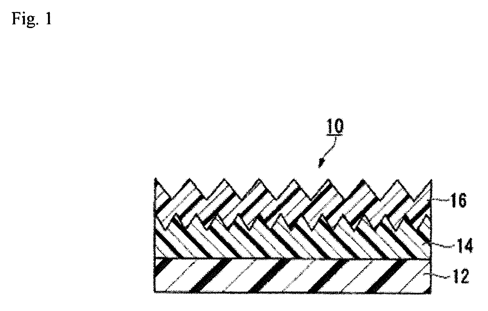

In Fig. 1, each layer is illustrated in the drawing on a different reduced scale in order to illustrate each layer in a recognizable size.

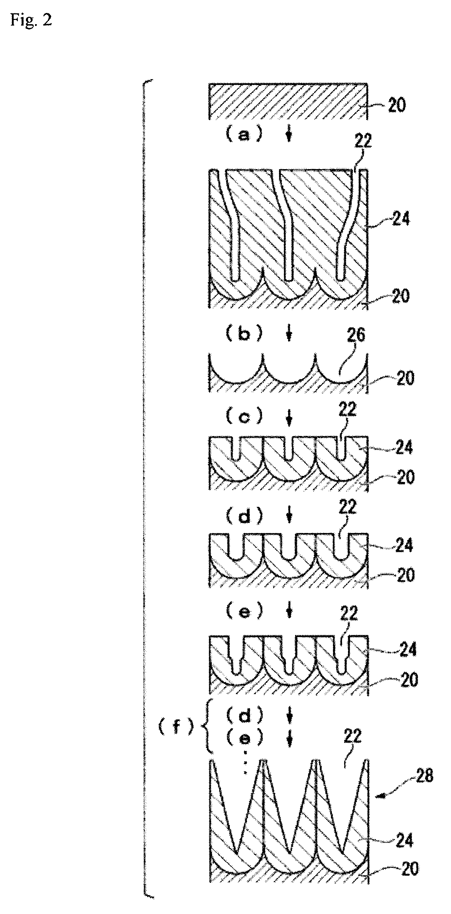

In addition, in Figs. 2 to 6, the same constituent elements as in Fig. 1 are denoted by the same reference numerals and the description thereof may be omitted.

"Multilayer structure"

The multilayer structure according to the first aspect of the invention is constituted by layering at least a substrate, an intermediate layer, and an outermost layer in this order and has a fine relief structure on the surface of the outermost layer.

Fig. 1 is a cross-sectional view illustrating an example of the multilayer structure according to the first aspect of the invention.

A multilayer structure 10 in this example is constituted by sequentially layering a substrate 12, an intermediate layer 14, and an outermost layer 16, and a fine relief structure is formed on the surface of the intermediate layer 14 as well.

Here, the "surface of the outermost layer" refers to the surface on the side of the outermost layer 16 where the outermost layer 16 is not in contact with the intermediate layer 14. Meanwhile, the "surface of the intermediate layer" refers to the surface on the side of the intermediate layer 14 where the intermediate layer 14 is in contact with the outermost layer 16. In addition, the surface on the side of the substrate 12 where the substrate 12 is in contact with the intermediate layer 14 is referred to as the "surface of substrate", and the surface on the side of the substrate 12 where the substrate is not in contact with the intermediate layer 14 is referred to as the "back surface of the substrate". The surface of the outermost layer 16 corresponds to the surface of the multilayer structure 10, and the back surface of the substrate 12 corresponds to the back surface of the multilayer structure.

The concave portion and the convex portion of the fine relief structure of the outermost layer 16 in this example are disposed so as to be different from the concave portion and the convex portion of the fine relief structure of the intermediate layer 14.

Here, the expression "disposed to be different" means that the relief shape of the fine relief structure of an arbitrary layer (for example, outermost layer) in one or more of the cut section obtained by cutting the multilayer structure into plural pieces in the layering direction (longitudinal direction) does not overlap with the shape of the fine relief structure of a remaining layer (for example, intermediate layer) when being moved parallel to the multilayer structure in the thickness direction. In addition, the expression "shapes do not overlap each other" means that the aspect ratio of the convex portion of the fine relief structure of an arbitrary layer is different from the aspect ratio of the convex portion of the fine relief structure of a remaining layer, the fine relief structures of an arbitrary layer and a remaining layer are placed in different positions from each other, the cycles of the fine relief structures of an arbitrary layer and a remaining layer are different from each other, and the like.

Hereinafter, this disposition state is also referred to as the "different disposition".

The shapes of the concave portion and the convex portion of the fine relief structure are not particularly limited, but the so-called moth-eye structure in which a plurality of projections (convex portions) having a substantially conical shape, a pyramid shape, or the like are lined up, or the inverted structure thereof is preferable. In particular, the moth-eye structure in which the fine relief structure of the outermost layer 16 has a cycle equal to or less than the wavelength of visible light (average interval between adjacent convex portions or adjacent concave portions) is effective as an antireflective means since the refractive index continuously increases from the refractive index of air to the refractive index of a material. Meanwhile, in a case in which the fine relief structure of the intermediate layer 14 is the moth-eye structure, it is possible to suppress the reflection at the interface although the refractive indexes of adjacent layers are different from each other and thus the intermediate layer 14 is effective in decreasing the reflectance or in suppressing the interference fringes. In addition, the adhesion property between the intermediate layer 14 and the outermost layer 16 is favorable.

The cycle (average interval between adjacent convex portions or adjacent concave portions) of the fine relief structure of the outermost layer 16 is equal to or less than the wavelength of visible light, and specifically, the cycle is preferably 400 nm or less, more preferably 300 nm or less, and even more preferably 250 nm or less. The reflectance is low and the wavelength dependence of the reflectance is low when the cycle is 400 nm or less. The cycle is preferably 25 nm or more and more preferably 80 nm or more from the viewpoint of ease of formation of the convex portion structure.

The cycle of the fine relief structure of the intermediate layer 14 is preferably 1000 nm or less. When the cycle is 1000 nm or less, the fine relief structure is visually unrecognizable and inconspicuous even in a case in which the refractive indexes of the intermediate layer 14 and the outermost layer 16 are different from each other, and thus the appearance is favorable. In addition, it is easier to obtain the adhesion property between the intermediate layer 14 and the outermost layer 16. The intermediate layer 14 is effective in decreasing the reflectance or in suppressing the interference fringes as described above particularly when the cycle is equal to or less than the wavelength of visible light. In addition, the adhesion property between the intermediate layer 14 and the outermost layer 16 is favorable. The cycle is preferably 25 nm or more and more preferably 80 nm or more from the viewpoint of ease of formation of the convex portion structure. In addition, it is preferable that the cycle of the fine relief structure on the surface of the intermediate layer 14 be different from the cycle of the fine relief structure on the surface of the outermost layer 16 from the viewpoint that it is possible to obtain favorable abrasion resistance by increasing the cycle of the fine relief structure of the outermost layer 16, it is possible to obtain favorable adhesion property or to suppress the generation of useless diffracted light by decreasing the cycle of the fine relief structure of the intermediate layer 14, and the like.

Incidentally, the cycle is a value obtained by measuring the interval between adjacent convex portions (distance from the center of a convex portion to the center of an adjacent convex portion) or the interval between adjacent concave portions (distance from the center of a concave portion to the center of an adjacent concave portion) at 50 points using an electron microscope and averaging these values.

The average height of the convex portions of the fine relief structures of the outermost layer 16 and the intermediate layer 14 is preferably 100 nm or more and more preferably 130 nm or more. The reflectance is low and the wavelength dependence of the reflectance is low when the average height of the convex portions is 100 nm or more. In addition, it is possible to secure the adhesion property between the layers. The average height of the convex portions is preferably 400 nm or less and more preferably 300 nm or less from the viewpoint of ease of formation of the convex portion structure.

Incidentally, the average height of the convex portions is a value obtained by measuring the distance between the topmost part of a convex portion and the bottommost part of a concave portion present between convex portions when the fine relief structure is observed at 30,000 magnifications using the electron microscope at 50 points and averaging these values.

In addition, the aspect ratio of the convex portion (average height of convex portions/average interval between adjacent convex portions) is preferably from 0.8 to 5, more preferably from 1.2 to 4, and even more preferably from 1.5 to 3. The reflection is sufficiently low when the aspect ratio of the convex portion is 0.8 or more. The abrasion resistance of the convex portion is favorable when the aspect ratio of the convex portion is 5 or less.

In the first aspect of the invention, it is important to set the physical properties of the intermediate layer 14 and the outermost layer 16, in particular, the Martens hardness of the intermediate layer 14 and the elastic recovery of the outermost layer 16 in a specific range from the viewpoint of enhancing the mechanical properties, in particular, both the abrasion resistance and the pencil hardness of the multilayer structure.

The Martens hardness of the intermediate layer 14 is 120 N/mm$^2$ or more, preferably from 180 N/mm$^2$ or more, and more preferably 200 N/mm$^2$ or more. In addition, the Martens hardness of the intermediate layer 14 is preferably 400 N/mm$^2$ or less, more preferably 350 N/mm$^2$ or less and even more preferably 300 N/mm$^2$ or less. When the Martens hardness of the intermediate layer 14 is 120 N/mm$^2$ or more, the intermediate layer 14 is not too soft and thus the dent of the intermediate layer 14 is hardly enlarged even if a pushing external force is applied in the pencil hardness test. Hence, it is possible to maintain a high pencil hardness since the dent hardly reaches the substrate 12 and the substrate 12 is hardly plastically deformed. Meanwhile, the intermediate layer 14 is hardly cracked even if a force is applied from the outside when the Martens hardness of the intermediate layer 14 is 400 N/mm$^2$ or less.

In addition, the elastic recovery of the intermediate layer 14 is preferably 50% or more, more preferably 60% or more, and even more preferably 70% or more. The intermediate layer 14 is hardly plastically deformed when the elastic recovery of the intermediate layer 14 is 50% or more, and thus the dent of the intermediate layer 14 formed when the pushing external force is applied in the pencil hardness test is easily recovered to the original state after the test. Hence, it is possible to maintain a higher pencil hardness since this dent hardly remains as an indentation.

Meanwhile, the elastic recovery of the outermost layer 16 is 70% or more, preferably 80% or more, and more preferably 85% or more. When the elastic recovery of the outermost layer 16 is 70% or more, the convex portion is hardly folded or scraped even if an external force is applied to the concave and convex in the lateral direction in the abrasion test, the convex portion is easily recovered to its original state so as to be hardly scratched, and thus the abrasion resistance is improved. In addition, the outermost layer 16 is hardly plastically deformed when the elastic recovery of the outermost layer 16 is 70% or more, and thus the dent of the outermost layer 16 formed when the pushing external force is applied in the pencil hardness test is easily recovered to the original state after the test. Hence, it is possible to maintain a higher pencil hardness since the dent hardly remains as an indentation.

The multilayer structure 10 according to the first aspect of the invention is characterized in that the Martens hardness of the intermediate layer 14 is 120 N/mm$^2$ or more and the elastic recovery of the outermost layer 16 is 70% or more, but there is an optimum combination for these Martens hardness of the intermediate layer 14 and elastic recovery of the outermost layer 16.

It is preferable that the elastic recovery of the outermost layer 16 be 80% or more in a case in which the Martens hardness of the intermediate layer 14 is 120 N/mm$^2$ or more from the viewpoint that the pencil hardness is further improved. In addition, it is preferable that the elastic recovery of the outermost layer 16 be 70% or more in a case in which the Martens hardness of the intermediate layer 14 is 180 N/mm$^2$ or more.

The elastic modulus of the outermost layer 16 is preferably 50 MPa or more, more preferably 80 MPa or more, and even more preferably 110 MPa or more. In addition, the elastic modulus of the outermost layer 16 is preferably 3500 MPa or less, more preferably 3000 MPa or less, and even more preferably 560 MPa or less. When the elastic modulus of the outermost layer 16 is 50 MPa or more, the outermost layer 16 is not too soft, the outermost layer 16 is not significantly scraped or scooped easily to the part that is not the fine relief structure even if a force is applied thereto from the outside, and thus the outermost layer 16 is hardly scratched to exhibit significantly excellent abrasion resistance. Meanwhile, when the elastic modulus of the outermost layer 16 is 3500 MPa or less, the convex portion is hardly folded or scraped and the convex portion can be easily recovered to its original state when the fine relief structure is deformed as a force is applied thereto from the outside.

Here, the Martens hardness, elastic recovery, and elastic modulus of each layer are determined by measuring the Martens hardness, elastic recovery, and elastic modulus of the cured product of the material for each layer using a micro-hardness tester.

Specifically, first, a test piece is fabricated by forming the cured product of the material for each layer on a substrate such as a glass plate. The physical properties of the cured product of the test piece are measured by the evaluation program of [pushing (100 mN/10 seconds)] → [creeping (100 mN, 10 seconds)] → [releasing (100 mN/10 seconds)] using a Vickers indenter and a micro-hardness tester. The Martens hardness, elastic recovery, and elastic modulus of the cured product are calculated from the measurement results thus obtained by the analytical software (for example, "WIN-HCU" developed by Fischer Instruments K.K.), and these are adopted as the Martens Hardness, elastic recovery, and elastic modulus of each layer.

Incidentally, in the case of measuring the Martens hardness, elastic recovery, and elastic modulus of each layer of the multilayer structure 10 produced, it is also possible to determine those of the outermost layer 16 by measuring the surface of the outermost layer 16 at a depth within 1/10 of its film thickness using a micro-hardness meter. Meanwhile, it is also possible to determine those of the intermediate layer 14 by measuring the surface of the intermediate layer 14 exposed by removing the outermost layer 16 at a depth within 1/10 of the film thickness of the intermediate layer 14 using a micro-hardness meter.

In addition, it is difficult to expose the intermediate layer 14 by removing the outermost layer 16 in some cases in a case in which the adhesion strength between the outermost layer 16 and the intermediate layer 14 is strong. Moreover, it is affected by the lower layer at the time of conducting the measurement using a micro-hardness tester in some cases in a case in which the film thickness of each layer is thin. In such a case, it is also possible to measure the Martens hardness, elastic recovery, and elastic modulus of each layer by cutting the multilayer structure 10 in the layering direction and measuring the cut section thereof using a micro-hardness tester. However, it is difficult to distinguish the respective layers from one another and measure them using a micro-hardness tester in some cases in a case in which the film thickness of each layer is thin. In such a case, the measurement is conducted using an atomic force microscope (AFM).

Incidentally, it is required to measure the force curve for the AFM measurement in order to measure the elastic modulus and elastic recovery by the AFM measurement. The force curve measurement is a measurement to detect a force from the deflection of the cantilever generated at the time of pushing the sample surface while reciprocating the cantilever of the AFM with respect to the sample surface in the normal direction. It is possible to measure the respective layers even in a case in which the film thickness is thin since the AFM has a space resolving power of a few nanometers. However, it is not possible to determine the Martens hardness from this force curve measurement, and thus the elastic modulus that is correlated with the Martens hardness may be used. For example, the relationship between the Martens hardness and the elastic modulus of the resin composition used in Examples of the invention is briefly expressed by the following Equation.

$$\text{Martens hardness } [\text{N/mm}^2] = 0.0603 \times \text{elastic modulus [MPa] (square of correlation coefficient } R^2 = 0.981)$$

Hereinafter, an example of a specific method for measuring the elastic modulus and the elastic recovery by the AFM measurement will be described.

The multilayer structure 10 is embedded in an epoxy resin and then cut in the layering direction to expose a smooth cut section. For the cut section (sample), the force curve is measured, for example, at a ramp size of 200 nm, a scan speed of 4 Hz, and a force of a pushing load of 30 nN using an AFM and a cantilever. The proper value of the pushing load varies depending on the material, and the value of about from 10 to 50 nN is proper in the case of a photocured film. At this time, the spring constant of the cantilever is previously obtained by measuring sapphire or the like.

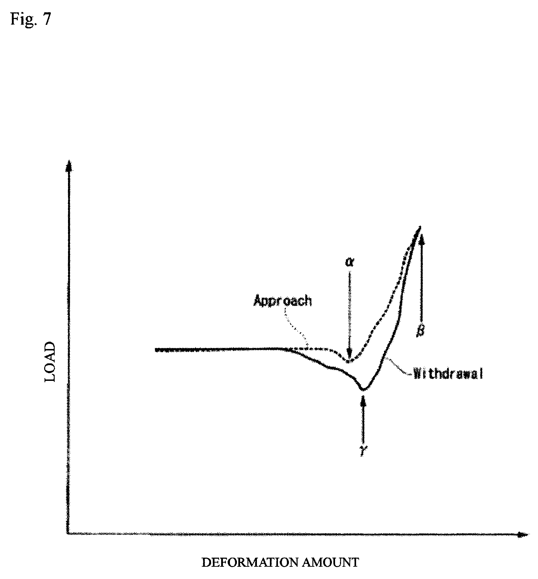

The deformation amount of the sample is determined by the following Equation (I) using the measurement results of the force curve to obtain the load-deformation curve as illustrated in Fig. 7.

$$\text{Deformation amount} = \text{displacement of probe} - \text{deflection of cantilever} \cdots \text{(I)}$$

Here, it can be considered as follows in a case in which the influence of agglutination or friction between the sample and the cantilever is not great.

The position of $\alpha$ in Fig. 7 is where the cantilever touches the sample surface. In addition, the position of $\beta$ is the maximum pushed-in position when the sample surface is pushed. In addition, the position of $\gamma$ is a position where the pushing is released and the cantilever is apart from the sample surface. The elastic recovery is determined by the following Equation (II) based on these.

$$\text{Elastic recovery (\%)} = (\text{deformation amount between } \beta \text{ and } \gamma)/(\text{deformation amount between } \alpha \text{ and } \beta) \times 100 \cdots \text{(II)}$$

In addition, the elastic modulus is determined by fitting a curve from $\beta$ to $\gamma$ using the Hertz contact equation. At this time, the radius of curvature of the tip of the cantilever may be measured or a nominal value may be used, and the Poisson's ratio of the sample may be measured or 0.35 may be adopted in the case of a polymeric material.

The Martens hardness, elastic recovery, and elastic modulus of each layer can be adjusted by the blending composition of the materials for the respective layers. For example, in the case of using an active energy ray curable resin composition to be described later as a material for the intermediate layer 14 or the outermost layer 16, the Martens hardness, the elastic recovery, and the elastic modulus are adjusted as follows. In other words, in order to increase the Martens hardness and the elastic modulus, for example, the crosslink density may be increased using a monomer or oligomer having a small functional group equivalent, a monomer or oligomer having a functional group exhibiting low molecular mobility such as a cyclic structure may be used, or inorganic fine particles may be added to the active energy ray curable resin composition to be described later. In order to increase the elastic recovery, for example, a monomer or oligomer having a structure exhibiting high molecular mobility such as a polyoxyalkylene structure or a polydimethylsiloxane structure may be used.

The film thickness of the intermediate layer 14 is preferably 1 $\mu$m or more and more preferably 3 $\mu$m or more. In addition, the film thickness of the intermediate layer 14 is preferably 20 $\mu$m or less, more preferably 10 $\mu$m or less, and even more preferably 7 $\mu$m or less. It is possible to maintain a higher pencil hardness when the film thickness of the intermediate layer 14 is 1 $\mu$m or more. On the other hand, it is difficult for the multilayer structure 10 to be strongly curled when the film thickness of the intermediate layer 14 is 20 $\mu$m or less. In addition, the intermediate layer 14 is hardly cracked even if a force is applied from the outside.

The film thickness of the outermost layer 16 is preferably 1 $\mu$m or more and more preferably 2 $\mu$m or more. In addition, the film thickness of the outermost layer 16 is preferably 20 $\mu$m or less, more preferably 10 $\mu$m or less, and even more preferably 5 $\mu$m or less. The thickness as a layer is sufficient when the film thickness of the outermost layer 16 is 1 $\mu$m or more, and thus it is possible to maintain significantly excellent abrasion resistance and a higher pencil hardness. On the other hand, the outermost layer 16 is hardly cracked even if a force is applied to the multilayer structure 10 from the outside when the film thickness of the outermost layer 16 is 20 $\mu$m or less. In addition, the dent of the outermost layer 16 formed when a pushing external force is applied in the pencil hardness test is easily recovered to its original state after the test. Hence, it is possible to maintain a higher pencil hardness since this dent hardly remains as an indentation.

The difference between the refractive index of the intermediate layer 14 and the refractive index of the substrate 12 and the difference between the refractive index of the outermost layer 16 and the refractive index of the intermediate layer 14 are preferably 0.2 or less, more preferably 0.1 or less, and even more preferably 0.05 or less, respectively. It is possible to effectively suppress reflection at the interface between the respective layers when the differences in refractive index are 0.2 or less, respectively.

As the substrate 12 that is the lowermost layer of the multilayer structure, a molded body that transmits light is preferable. This is because the active energy ray is irradiated from the substrate side in the case of forming the fine relief structure using a molding which hardly transmits light although the detail will be described later.

Examples of the material for such a substrate 12 may include an acrylic resin (polymethyl methacrylate or the like), a polycarbonate, a styrene (co)polymer, a methyl methacrylate-styrene copolymer, cellulose diacetate, cellulose triacetate, cellulose acetate butyrate, a polyester (polyethylene terephthalate or the like), a polyamide, a polyimide, a polyether sulfone, a polysulfone, a polyolefin (polyethylene, polypropylene, or the like), polymethyl pentene, polyvinyl chloride, polyvinyl acetal, polyether ketone, a polyurethane, and glass. These materials may be used singly or two or more kinds thereof may be used concurrently. In addition, the materials exemplified as a material constituting the substrate in the description on the second aspect to be described later may also be used.

The substrate 12 may be an injection molded body, an extrusion molded body, or a cast molded body. The shape of the substrate 12 can be appropriately selected, and it may be a sheet shape or a film shape.

In addition, the surface of the substrate 12 may be subjected to a coating treatment, a corona treatment or the like in order to improve the adhesion property, antistatic property, abrasion resistance, weather resistance and the like.

Meanwhile, examples of the material for the intermediate layer 14 may include an active energy ray curable resin composition, a thermoplastic resin, and an inorganic material. The intermediate layer 14 is preferably a layer consisting of the cured product of an active energy ray curable resin composition from the viewpoint of easily imparting the hardness and the elastic recovery property. It is easy to form a fine relief structure in a case in which the material for the intermediate layer 14 is an active energy ray curable resin composition.

In addition, the outermost layer 16 is also preferably a layer consisting of the cured product of an active energy ray curable resin composition from the viewpoint of easily imparting the elastic recovery property and easily forming a fine relief structure.

Hereinafter, the active energy ray curable resin composition will be described in detail.

<Active energy ray curable resin composition>

The actinic radiation curable resin composition (hereinafter, simply referred to as the "resin composition") is a resin composition that is cured as a polymerization reaction proceeds by irradiating with an active energy ray.

The resin composition is one which appropriately contains a monomer, an oligomer, and a reactive polymer which have, for example, a radically polymerizable bond and/or a cationically polymerizable bond in the molecule as the polymerizable component. In addition, the resin composition usually contains a polymerization initiator for curing.

(Polymerizable component)

Examples of the monomer having a radically polymerizable bond in the molecule may include a monofunctional monomer such as a (meth)acrylate (methyl (meth)acrylate, ethyl (meth)acrylate, propyl (meth)acrylate, n-butyl (meth)acrylate, i-butyl (meth)acrylate, s-butyl (meth)acrylate, tert-butyl (meth)acrylate, 2-ethylhexyl (meth)acrylate, lauryl (meth)acrylate, alkyl (meth)acrylate, tridecyl (meth)acrylate, stearyl (meth)acrylate, cyclohexyl (meth)acrylate, benzyl (meth)acrylate, phenoxyethyl (meth)acrylate, isobornyl (meth)acrylate, glycidyl (meth)acrylate, tetrahydrofurfuryl (meth)acrylate, allyl (meth)acrylate, 2-hydroxyethyl (meth)acrylate, hydroxypropyl (meth)acrylate, 2-methoxyethyl (meth)acrylate, 2-ethoxyethyl (meth)acrylate, or the like), (meth)acrylic acid, (meth)acrylonitrile, a styrene (styrene, $\alpha$-methylstyrene, or the like), or a (meth)acrylamide ((meth)acrylamide, N-dimethyl(meth)acrylamide, N-diethyl(meth)acrylamide, or dimethylaminopropyl(meth)acrylamide, or the like); a bifunctional monomer such as ethylene glycol di(meth)acrylate, tripropylene glycol di(meth)acrylate, isocyanuric acid ethylene oxide-modified di(meth)acrylate, triethylene glycol di(meth)acrylate, diethylene glycol di(meth)acrylate, neopentyl glycol di(meth)acrylate, 1,6-hexanediol di(meth)acrylate, 1,5-pentanediol di(meth)acrylate, 1,3-butylene glycol di(meth)acrylate, polybutylene glycol di(meth)acrylate, 2,2-bis(4-(meth)acryloxypolyethoxyphenyl)propane, 2,2-bis(4-(meth)acryloxyethoxyphenyl)propane, 2,2-bis(4-(3-(meth)acryloxy-2-hydroxypropoxy)phenyl)propane, 1,2-bis(3-(meth)acryloxy-2-hydroxypropoxy)ethane, 1,4-bis(3-(meth)acryloxy-2-hydroxypropoxy)butane, dimethylol tricyclodecane di(meth)acrylate, bisphenol A ethylene oxide adduct di(meth)acrylate, bisphenol A propylene oxide adduct di(meth)acrylate, hydroxypivalic acid neopentyl glycol di(meth)acrylate, divinylbenzene, or methylenebisacrylamide; a trifunctional monomer such as pentaerythritol tri(meth)acrylate, trimethylolpropane tri(meth)acrylate, trimethylolpropane ethylene oxide-modified tri(meth)acrylate, trimethylolpropane propylene oxide-modified triacrylate, trimethylolpropane ethylene oxide-modified triacrylate, or isocyanuric acid ethylene oxide-modified tri(meth)acrylate; a tetra- or higher functional monomer such as a condensation reaction mixture of succinic acid/trimethylolethane/acrylic acid, dipentaerythritol hexa(meth)acrylate, dipentaerythritol penta(meth)acrylate, ditrimethylolpropane tetraacrylate, or tetramethylolmethane tetra(meth)acrylate; any ethylene oxide adduct or any propylene oxide adduct of these tetra- or higher functional monomers; a bi- or higher functional urethane acrylate, and a bi- or higher functional polyester acrylate. These may be used singly or two or more kinds thereof may be used concurrently. Among these, a bi- or higher functional monomer is preferable, and a bi- or higher functional (meth)acrylate (polyfunctional (meth)acrylate) is more preferable.

Examples of the oligomer and the reactive polymer which have a radically polymerizable bond in the molecule may include an unsaturated polyester (a condensate of an unsaturated dicarboxylic acid with a polyhydric alcohol or the like), a polyester (meth)acrylate, a polyether (meth)acrylate, a polyol (meth)acrylate, an epoxy (meth)acrylate, a urethane (meth)acrylate, a cationically polymerizable epoxy compound, and any homopolymer or copolymer of the above-mentioned monomers having a radically polymerizable bond at the side chain.

The monomer, the oligomer, and the reactive polymer which have a cationically polymerizable bond in the molecule may be a compound (cationically polymerizable compound) having a cationically polymerizable functional group, and it may be any of a monomer, an oligomer, or a prepolymer.

Examples of a highly practically usable functional group as the cationically polymerizable functional group may include a cyclic ether group (an epoxy group, an oxetanyl group, or the like), a vinyl ether group, and a carbonate group (O-CO-O group).

Examples of the cationically polymerizable compound may include a cyclic ether compound (an epoxy compound, an oxetane compound, or the like), a vinyl ether compound, a carbonate-based compound (a cyclic carbonate compound, a dithiocarbonate compound, or the like) and the like.

Specific examples of the monomer having a cationically polymerizable bond in the molecule may include a monomer having an epoxy group, an oxetanyl group, an oxazolyl group, or a vinyloxy group, and a monomer having an epoxy group is particularly preferable among these. Specific examples of the oligomer and the reactive polymer which have a cationically polymerizable bond may include a cationic polymerization-type epoxy compound.

(Polymerization initiator)

Examples of the polymerization initiator may include known ones.

Examples of the photopolymerization initiator in the case of utilizing a photoreaction to cure the resin composition may include a radical polymerization initiator and a cationic polymerization initiator.

The radical polymerization initiator may be known one which generates an acid by being irradiated with an active energy ray, and examples thereof may include an acetophenone-based photopolymerization initiator, a benzoin-based photopolymerization initiator, a benzophenone-based photopolymerization initiator, a thioxanthone-based photopolymerization initiator, and an acylphosphine oxide-based photopolymerization initiator. These radical polymerization initiators may be used singly or two or more kinds thereof may be used concurrently.

Examples of the acetophenone-based photopolymerization initiator may include acetophenone, p-(tert-butyl)-1',1',1'-trichloroacetophenone, chloroacetophenone, 2',2'-diethoxyacetophenone, hydroxyacetophenone, 2,2-dimethoxy-2'-phenylacetophenone, 2-amino-acetophenone, and dialkylaminoacetophenone.

Examples of the benzoin-based photopolymerization initiator may include benzyl, benzoin, benzoin methyl ether, benzoin ethyl ether, benzoin isopropyl ether, benzoin isobutyl ether, 1-hydroxycyclohexyl phenyl ketone, 2-hydroxy-2-methyl-1-phenyl-2-methylpropan-1-one, 1-(4-isopropylphenyl)-2-hydroxy-2-methyl-propan-1-one, and benzyl dimethyl ketal.

Examples of the benzophenone-based photopolymerization initiator may include benzophenone, benzoyl benzoic acid, methyl benzoyl benzoate, methyl-o-benzoyl benzoate, 4-phenylbenzophenone, hydroxybenzophenone, hydroxypropylbenzophenone, acrylbenzophenone, and 4,4'-bis(dimethylamino)benzophenone.

Examples of the thioxanthone-based photopolymerization initiator may include thioxanthone, 2-chlorothioxanthone, 2-methylthioxanthone, diethylthioxanthone, and dimethylthioxanthone.

Examples of the acylphosphine oxide-based photopolymerization initiator may include 2,4,6-trimethylbenzoyldiphenylphosphine oxide, benzoyldiethoxyphosphine oxide, and bis(2,4,6-trimethylbenzoyl)phenylphosphine oxide.

Examples of other radical polymerization initiators may include $\alpha$-acyloxime ester, benzyl-(o-ethoxycarbonyl)-$\alpha$-monooxime, glyoxy ester, 3-ketocoumarin, 2-ethylanthraquinone, camphorquinone, tetramethylthiuram sulfide, azobisisobutyronitrile, benzoyl peroxide, dialkyl peroxide, and tert-butyl peroxypivalate.

The cationic polymerization initiator may be known one which generates an acid by being irradiated with an active energy ray, and examples thereof may include a sulfonium salt, an iodonium salt, and a phosphonium salt. These cationic polymerization initiators may be used singly or two or more kinds thereof may be used concurrently.

Examples of the sulfonium salt may include triphenylsulfonium hexafluorophosphate, triphenylsulfonium hexafluoroantimonate, bis(4-(diphenylsulfonio)-phenyl)sulfide-bis(hexafluorophosphate), bis(4-(diphenylsulfonio)-phenyl)sulfide-bis(hexafluoroantimonate), 4-di(p-tolyl)sulfonio-4'-tert-butylphenylcarbonyl-diphenylsulfide hexafluoroantimonate, 7-di(p-tolyl)sulfonio -2-isopropylthioxanthone hexafluorophosphate, and 7-di(p-tolyl)sulfonio-2-isopropylthioxanthone hexafluoroantimonate.

Examples of the iodonium salt may include diphenyliodonium hexafluorophosphate, diphenyliodonium hexafluoroantimonate, and bis(dodecylphenyl)iodonium tetrakis(pentafluorophenyl)borate.

Examples of the phosphonium salt may include tetrafluorophosphonium hexafluorophosphate, and tetrafluorophosphonium hexafluoroantimonate.

Examples of the thermal polymerization initiator in the case of utilizing a thermal reaction to cure the resin composition may include an organic peroxide (methyl ethyl ketone peroxide, benzoyl peroxide, dicumyl peroxide, tert-butyl hydroperoxide, cumene hydroperoxide, tert-butyl peroxyoctoate, tert-butyl peroxybenzoate, lauroyl peroxide, or the like), an azo-based compound (azobisisobutyronitrile, or the like), and a redox polymerization initiator prepared by combining an amine (N,N-dimethylaniline, N,N-dimethyl-p-toluidine, or the like) with the above organic peroxide.

These thermal polymerization initiators may be used singly or two or more thereof may be used concurrently.

The content of the polymerization initiator is preferably from 0.1 to 10 parts by mass with respect to 100 parts by mass of the polymerizable component. The polymerization easily proceeds when the content of the polymerization initiator is 0.1 parts by mass or more. The cured product obtained is not easily colored or the mechanical strength is not easily lowered when the content of the polymerization initiator is 10 parts by mass or less.

(Other components)

The resin composition may contain a non-reactive polymer.

Examples of the non-reactive polymer may include an acrylic resin, a styrene resin, a polyurethane resin, a cellulose resin, a polyvinyl butyral resin, a polyester resin, and a thermoplastic elastomer.

In addition, the resin composition may contain known additives such as a surfactant, a mold releasing agent, a lubricant, a plasticizer, an antistatic agent, a light stabilizer, an antioxidant, a flame retardant, a flame retardant auxiliary, a polymerization inhibitor, a filler, a silane coupling agent, a colorant, a reinforcing agent, an inorganic filler, inorganic or organic fine particles, an impact modifier, and a small amount of a solvent if necessary in addition to those described above.

(Physical properties of resin composition)

It is preferable that the viscosity of the resin composition not be too high from the viewpoint of easily flowing into the fine relief structure on the surface of the mold although it will be described in detail later. Specifically, the viscosity of the resin composition measured at 25°C by a rotary B type viscometer is preferably 10000 mPa·s or less, more preferably 5000 mPa·s or less, and even more preferably 2000 mPa·s or less.

However, there is no particular problem even when the viscosity of the resin composition exceeds 10000 mPa·s as long as it is possible to lower the viscosity of the resin composition by warming it in advance at the time of being brought into contact with the mold. In this case, the viscosity of the resin composition measured at 70°C by a rotary B type viscometer is preferably 5000 mPa·s or less and more preferably 2000 mPa·s or less.

The lower limit value of the viscosity of the resin composition is not particularly limited, but the viscosity is preferably 10 mPa·s or more since the resin composition is not wet to spread out and the multilayer structure can be efficiently produced.

Incidentally, the materials for the intermediate layer 14 and the outermost layer 16 are not limited to the above-described resin composition. For example, as the resin composition for the intermediate layer 14, the resin composition (X) exemplified in the description on the second aspect to be described later may be used, and as the resin composition for the outermost layer 16, the resin composition (Y) exemplified in the description on the second aspect to be described later may be used.

<Method for producing multilayer structure>

The method for forming the fine relief structures of the intermediate layer 14 and the outermost layer 16 illustrated in Fig. 1 is not particularly limited, but the fine relief structures are formed by a transfer method using a mold, specifically, bringing the materials such as an active energy ray curable resin composition into contact with a mold having the inverted structure of a fine relief structure on the surface and curing it.

According to the transfer method, it is possible to freely design the shape of the fine relief structure of each layer. In addition, it is possible to easily produce a multilayer structure in which the concave portion and the convex portion of the fine relief structure of an arbitrary layer are disposed to be different from at least one among the fine relief structures of the remaining layers.

Hereinafter, an example of the mold used in the transfer method will be described.

(Mold)

The mold has the inverted structure of a fine relief structure on the surface.

Examples of the material for the mold may include a metal (including those having an oxidized film formed on the surface), quartz, glass, a resin, and a ceramic.

Examples of the shape of the mold may include a roll shape, a circular tube shape, a flat plate shape, and a sheet shape.

Examples of the method for fabricating the mold may include the following method (I-1) and method (1-2). The method (1-1) is preferable from the viewpoint of being able to fabricate a large area mold and simple fabrication between the two methods.

(I-1) A method to form the inverted structure of a fine relief structure by a method in which anodized alumina having a plurality of pores (concave portions) is formed on the surface of an aluminum substrate.

(I-2) A method to form the inverted structure of a fine relief structure on the surface of a mold substrate by electron beam lithography, laser beam interferometry, or the like.

As the method (I-1), a method having the following steps (a) to (f) is preferable.

(a) A step of forming an oxide film on the surface of an aluminum substrate by anodizing the aluminum substrate in an electrolytic solution at a constant voltage.
(b) A step of removing a part or the whole of the oxide film to form pore generating points of anodization on the surface of the aluminum substrate.
(c) A step of forming an oxide film having pores at the pore generating points by anodizing the aluminum substrate again in the electrolytic solution after the step (b).
(d) A step of enlarging the diameter of the pores after the step (c).
(e) A step of conducting the anodization again in the electrolytic solution after the step (d).
(f) A step of obtaining a mold in which anodized alumina having a plurality of pores is formed on the surface of an aluminum substrate by repeatedly carrying out the step (d) and the step (e).

Step (a):

As illustrated in Fig. 2, an oxide film 24 having pores 22 is formed by anodizing an aluminum substrate 20.
Examples of the shape of the aluminum substrate may include a roll shape, a circular tube shape, a flat plate shape, and a sheet shape.
It is preferable that the aluminum substrate be subjected to the degreasing treatment in advance since the oil used at the time of machining the aluminum substrate into a predetermined shape adheres thereto in some cases. In addition, it is preferable that the aluminum substrate be subjected to a polishing treatment (mechanical polishing, chemical polishing, electrolytic polishing, or the like) in order to smooth the surface state.
The purity of aluminum is preferably 99% or more, more preferably 99.5% or more, and even more preferably 99.8% or more. When the purity of aluminum is low, a relief structure having a size large enough to scatter visible light by segregation of the impurities is formed when aluminum is anodized or the regularity of the pores obtained by the anodization decreases in some cases.
Examples of the electrolytic solution may include sulfuric acid, oxalic acid, and phosphoric acid.
In the case of using oxalic acid as the electrolytic solution, the concentration of oxalic acid is preferably 0.8 M or less. It is possible to prevent the current value from increasing and thus to suppress roughening of the surface of the oxide film when the concentration of oxalic acid is 0.8 M or less.
In addition, it is possible to obtain anodized alumina having highly regular pores with a cycle of from 100 nm to 200 nm when the formation voltage is from 30 to 100 V. The regularity tends to decrease when the formation voltage is higher or lower than this range. The temperature of the electrolytic solution is preferably 60°C or lower and more preferably 45°C or lower. It is possible to prevent a phenomenon so-called "burning" from occurring and thus suppress the breakage of the pores or the disturbance of regularity of the pores due to melting of the surface as the temperature of the electrolytic solution is 60°C or lower.
In the case of using sulfuric acid as the electrolytic solution, the concentration of sulfuric acid is preferably 0.7 M or less. It is possible to prevent the current value from increasing and thus to maintain a constant voltage when the concentration of sulfuric acid is 0.7 M or less.
In addition, it is possible to obtain anodized alumina having highly regular pores with a cycle of 63 nm when the formation voltage is from 25 to 30 V. The regularity tends to decrease when the formation voltage is higher or lower than this range. The temperature of the electrolytic solution is preferably 30°C or lower and more preferably 20°C or lower. It is possible to prevent a phenomenon so-called "burning" from occurring and thus suppress the breakage of the pores or the disturbance of regularity of the pores due to melting of the surface as the temperature of the electrolytic solution is 30°C or lower.

Step (b):

As illustrated in Fig. 2, it is possible to improve the regularity of the pores as a part or the whole of the oxide film 24 is removed and this is used as the pore generating point of anodization 26. It is possible to accomplish the purpose to remove the oxide film if the part which already exhibits sufficiently high regularity of the oxide film 24 remains even in a state in which the oxide film 24 is not entirely removed but a part thereof remains.

Examples of the method to remove the oxide film 24 may include a method in which the oxide film 24 is removed by being dissolved in a solution that does not dissolve aluminum but selectively dissolves the oxide film 24. Examples of such a solution may include a mixed solution of chromic acid/phosphoric acid.

Step (c):

As illustrated in Fig. 2, the oxide film 24 having cylindrical pores 22 is formed as the aluminum substrate 20 from which the oxide film has been removed is anodized again.

The anodization can be conducted under the same conditions as in the step (a). It is possible to obtain deeper pores as the anodization time is longer.

Step (d):

As illustrated in Fig. 2, a treatment to enlarge the diameter of the pores 22 (hereinafter, referred to as the pore size enlarging treatment) is conducted. The pore size enlarging treatment is a treatment to enlarge the diameter of the pores obtained by immersing and anodizing the oxide film 24 in a solution that can dissolve the oxide film 24. Examples of such a solution may include an aqueous solution of phosphoric acid at about 5% by mass.

The pore size is greater as the time for the pore size enlarging treatment is longer.

Step (e):

As illustrated in Fig. 2, cylindrical pores 22 which further extend down from the bottom part of the cylindrical pores 22 and have a smaller diameter are formed as the anodization is conducted again.

The anodization can be conducted under the same conditions as in the step (a). It is possible to obtain deeper pores as the anodization time is longer.

Step (f):

As illustrated in Fig. 2, the oxide film 24 having the pores 22 having a shape of which the diameter continuously decreases from the opening part in the depth direction is formed as the pore size enlarging treatment of the step (d) and the anodization of the step (e) are repeatedly conducted. A mold 28 having anodized alumina (porous oxide film of aluminum (alumite)) on the surface of the aluminum substrate 20 is obtained by the procedure described above. It is preferable that the step (d) be the final step in this fabrication.

The number of repetitions of these steps is preferably 3 times or more and more preferably 5 times or more in total. The diameter of the pores continuously decreases and a moth-eye structure having a sufficient reflectance decreasing effect is obtained as the number of repetitions is 3 times or more.

Examples of the shape of the pores 22 may include a substantially conical shape, a pyramid shape, and a cylindrical shape, and a shape in which the pore cross-sectional area in a direction orthogonal to the depth direction continuously decreases in the depth direction from the outermost surface, such as a conical shape or a pyramid shape is preferable.

The average interval (cycle) between the adjacent pores 22 is preferably equal to or less than the wavelength of visible light, namely, 400 nm or less, more preferably from 25 to 300 nm, and even more preferably from 80 to 250 nm.

The average interval between the adjacent pores 22 is a value obtained by measuring the interval between the adjacent pores 22 (distance from the center of a pore 22 to the center of an adjacent pore 22) using an electron microscope at 50 points and averaging these values.

The average depth of the pores 22 is preferably from 100 to 400 nm or less and more preferably from 130 to 300 nm.

The average depth of the pores 22 is a value obtained by measuring the distance between the bottommost part of the pore 22 and the topmost part of a convex portion present between the pores 22 as the fine relief structure is observed at 30,000 magnifications using an electron microscope and averaging these values.

The aspect ratio of the pores 22 (average depth of pores 22/average interval between adjacent pores 22) is preferably from 0.3 to 4.0 and more preferably from 0.8 to 2.5.

The surface on the side of the mold where the fine relief structure is formed may be treated with a mold releasing agent. Examples of the mold releasing agent may include a silicone resin, a fluorine resin, a fluorine compound, and an ester of phosphoric acid, and a fluorine compound and an ester of phosphoric acid are preferable.

Examples of the commercially available product of the fluorine compound may include "Fluorolink" manufactured by SOLVAY SPECIALTY POLYMERS JAPAN K.K., a fluoroalkylsilane "KBM-7803" manufactured by Shin-Etsu Chemical Co., Ltd., "MRAF" manufactured by ASAHI GLASS CO., LTD., "OPTOOL HD1100" and "OPTOOL HD2100 series" manufactured by HARVES Co., Ltd., "OPTOOL DSX" manufactured by Daikin Industries, Ltd., "Novec EGC-1720" manufactured by Sumitomo 3M Limited, and "FS-2050" manufactured by Fluoro technology.

As the ester of phosphoric acid, a (poly)oxyalkylene alkyl phosphate compound is preferable, and examples of the commercially available product thereof may include "JP-506H" manufactured by JOHOKU CHEMICAL CO., LTD.; "MoldWiz INT-1856" manufactured by Axel Plastics Research Laboratories, Inc.; and "TDP-10", "TDP-8", "TDP-6", "TDP-2", "DDP-10", "DDP-8", "DDP-6", "DDP-4", "DDP-2", "TLP-4", "TCP-5", and "DLP-10" manufactured by Nikko Chemicals Co., Ltd.

These mold releasing agents may be used singly or two or more kinds thereof may be used concurrently.

In the case of forming a fine relief structure by a transfer method using a mold that is obtained in this manner and has anodized alumina on the surface of an aluminum substrate, the fine relief structure of the multilayer structure is one formed by transferring the fine relief structure on the surface of the anodized alumina.

Hereinafter, a producing apparatus for producing the multilayer structure and an example of a method for producing the multilayer structure using the producing apparatus will be specifically described.

(Producing apparatus and method for producing multilayer structure)

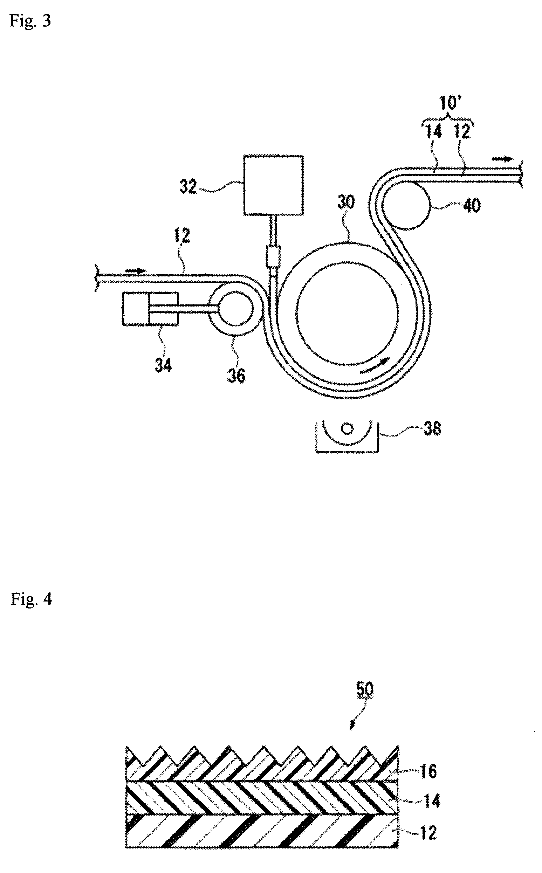

The multilayer structure 10 illustrated in Fig. 1 is produced as follows, for example, using the producing apparatus illustrated in Fig. 3.

A resin composition (active energy ray curable resin composition) for intermediate layer is supplied to between a roll-shaped mold 30 having the inverted structure (not illustrated) of a fine relief structure on the surface and the substrate 12 that is a belt-shaped film moving along the surface of the roll-shaped mold 30 from a tank 32.

The substrate 12 and the resin composition are nipped between the roll-shaped mold 30 and a nip roll 36 of which the nip pressure has been adjusted by a pneumatic cylinder 34. This allows the resin composition to be uniformly spread out between the substrate 12 and the roll-shaped mold 30 and filled in the concave portion of the fine relief structure of the roll-shaped mold 30 at the same time.

The resin composition is irradiated with an active energy ray via the substrate 12 using an active energy ray irradiating device 38 installed below the roll-shaped mold 30 to cure the resin composition. This allows an intermediate layer 14 having a fine relief structure formed by transferring the fine relief structure on the surface of the roll-shaped mold 30 on the surface to be formed.

The substrate 12 on which the intermediate layer 14 having a fine relief structure on the surface is formed is peeled off from the roll-shaped mold 30 by a peeling roll 40, whereby a laminate body 10' having the intermediate layer 14 layered on the substrate 12 is obtained.

For the second time, using the producing apparatus illustrated in Fig. 3, the laminate body 10' instead of the substrate 12 is moved along the surface of the roll-shaped mold 30, the resin composition (active energy ray curable resin composition) for outermost layer is supplied to between the laminate body 10' and the roll-shaped mold 30 from the tank 32, the resin composition is uniformly spread out between the laminate body 10' and the roll-shaped mold 30 and filled in the concave portion of the fine relief structure of the roll-shaped mold 30 at the same time.

Subsequently, the resin composition is irradiated with an active energy ray via the substrate 12 to cure the resin composition. This allows an outermost layer 16 having a fine relief structure formed by transferring the fine relief structure on the surface of the roll-shaped mold 30 on the surface to be formed.

Subsequently, the laminate body 10' on which the outermost layer 16 having a fine relief structure on the surface is formed is peeled off from the roll-shaped mold 30 by the peeling roll 40, whereby the multilayer structure 10 as illustrated in Fig. 1 in which the intermediate layer 14 and the outermost layer 16 which have a fine relief structure on the surface are sequentially layered on the substrate 12 is obtained.

As the active energy ray irradiating device 38, an electrodeless lamp, a high pressure mercury lamp, a metal halide lamp, an LED lamp or the like is preferable, and the photoirradiation energy quantity is preferably from 100 to 10000 mJ/cm$^2$.

Incidentally, the intermediate layer 14 and the outermost layer 16 may be formed using the same producing apparatus or different producing apparatuses.

In the case of using the same producing apparatus, it is possible to prevent the producing apparatus from increasing in size. In this case, the mold is changed to a mold for outermost layer when switching the layer forming process from the intermediate layer 14 to the outermost layer 16 in a case in which the shapes of the concave portion and the convex portion of the fine relief structure differ in each layer.

It is possible to continuously form the intermediate layer 14 and the outermost layer 16 in the case of using different producing apparatuses.

In addition, the method to form the intermediate layer 14 and the outermost layer 16 is not limited to the method described above. For example, the intermediate layer 14 may be formed by the step (1-2) mentioned in the description on the second aspect to be described later. In addition, the outermost layer 16 may be formed by the step (2) and the step (3) mentioned in the description on the second aspect to be described later.

<Effect>

The multilayer structure 10 according to the first aspect described above has a fine relief structure on the surface of the outermost layer 16, and thus it exhibits favorable optical performance such as antireflective performance.

Moreover, the multilayer structure 10 is equipped with the outermost layer 16 having a specific elastic recovery and the intermediate layer 14 which is provided between the outermost layer 16 and the substrate 12 and has a specific Martens hardness, and thus it is possible to enhance both the abrasion resistance and the pencil hardness, and the mechanical properties of the surface of the multilayer structure 10 is improved.

The pencil hardness of the multilayer structure 10 tends to be further improved when the thickness of the intermediate layer 14 is increased or the intermediate layer 14 is formed of a hard material, a material that exhibits strong restoring force, or a material that absorbs stress. Furthermore, the abrasion resistance or the pencil hardness of the surface of the multilayer structure 10 tends to be further improved when the thickness of the outermost layer 16 is decreased or the outermost layer 16 is formed of a material that exhibits strong restoring force, or a material that absorbs stress.

As described above, the multilayer structure 10 exhibits excellent optical performance and abrasion resistance and has a high pencil hardness.

Incidentally, the pencil hardness of the multilayer structure 10 tends to be further improved, for example, when the thickness of the intermediate layer 14 is increased as described above, and the multilayer structure 10 of the invention is equipped with the intermediate layer 14 having a specific Martens Hardness. Hence, a sufficient pencil hardness is obtained even if the thickness of the multilayer structure 10 is decreased by decreasing the thickness of the intermediate layer 14 (for example, about 5 $\mu$m).

Meanwhile, in the case of providing an intermediate layer between a cured layer (outermost layer) having a fine relief structure on the surface and the substrate, adhesion property between the cured layer having a fine relief structure on the surface and the intermediate layer is not sufficiently obtained in some cases. In particular, in a case in which the intermediate layer is a layer consisting of the cured product of an active energy ray curable resin composition, it is difficult to enhance the interlayer adhesion property between the cured layer having a fine relief structure on the surface and the intermediate layer.

As a method for enhancing the adhesion property, a method in which curing of the active energy ray curable resin composition is not conducted or curing is weakly conducted when forming the intermediate layer is known. However, in these methods, the surface of the intermediate layer adheres to the conveying roll or blocking occurs when the films are overlapped each other in some cases.

The multilayer structure 10 illustrated in Fig. 1 has a fine relief structure on the surface of the intermediate layer 14 as well, and thus excellent adhesion property between the intermediate layer 14 and the outermost layer 16 is exhibited by an anchor effect due to the relief structure.

Furthermore, excellent adhesion property between the intermediate layer 14 and the outermost layer 16 is exhibited as the intermediate layer 14 has a fine relief structure on the surface, and thus it is not required that curing of the active energy ray curable resin composition is not conducted or curing is weakly conducted when forming the intermediate layer 14 for the purpose of improving the adhesion property. Hence, in a case in which the substrate 12 has a film shape or a belt shape such as a film shape, a problem that the surface of the intermediate layer 14 adheres to the conveying roll at the time of winding the substrate 12 on which the intermediate layer 14 is formed or blocking occurs when the films are overlapped each other is less likely to occur. Moreover, even in the case of forming the intermediate layer 14 by weakly curing, blocking that is likely to occur in the case of overlapping smooth surfaces hardly occurs as the intermediate layer 14 has a fine relief structure on the surface.

In addition, the fine relief structure is characterized by the pitch of the convex portion, the average height of the convex portions, and an aspect ratio that is a balance between the pitch of the convex portion and the average height of the convex portions. The interlayer adhesion property tends to be excellent, for example, as the pitch of the convex portion is narrower, the average height of the convex portions is higher, and the aspect ratio is greater. On the other hand, the abrasion resistance of the surface of the multilayer structure 10 tends to be improved and a phenomenon that the adjacent convex portions get close to one another to collapse the fine relief structure is less likely to occur as the pitch of the convex portion is wider, the average height of the convex portions is lower, and the aspect ratio is smaller.

In the multilayer structure 10 illustrated in Fig. 1, the fine relief structures of the intermediate layer 14 and the outermost layer 16 have the same average height of the convex portions, but the fine relief structure of the outermost layer 16 has a greater pitch of the convex portion than the fine relief structure of the intermediate layer 14, and the fine relief structure of the outermost layer 16 has a smaller aspect ratio than the fine relief structure of the intermediate layer 14. Hence, the multilayer structure 10 in which a fine relief structure having a greater pitch of the convex portion and a smaller aspect ratio is formed on the surface of the outermost layer 16 and a fine relief structure having a narrower pitch of the convex portion and a greater aspect ratio is formed on the surface of the intermediate layer 14 exhibits a favorable balance between the adhesion property and the abrasion resistance. Moreover, the pitches of the convex portions of the fine relief structures are different between the intermediate layer 14 and the outermost layer 16, and thus it is possible to dispose the fine relief structures of the intermediate layer 14 and the outermost layer 16 to be different from each other by only layering these.

In addition, it is possible to freely design the shape of the fine relief structure of each layer as the fine relief structure is formed by a transfer method using a mold. In addition, it is possible to easily produce a multilayer structure in which the concave portion and the convex portion of the fine relief structure of an arbitrary layer are disposed to be different from those of at least one among the fine relief structures of the remaining layers.

In addition, it is possible to easily form the outermost layer 16 having a uniform thickness in the case of using the transfer method. In addition, the resin composition is sufficiently filled into the concave portion of the intermediate layer 14, and thus a gap is hardly formed between the intermediate layer 14 and the outermost layer 16. Moreover, it is possible to easily form fine relief structures which are different from each other in the pitch of the convex portion, the average height of the convex portions, and the aspect ratio between the intermediate layer 14 and the outermost layer 16 by only being changed to the mold at the time of forming the intermediate layer 14 and at the time of forming the outermost layer 16.

(Application)

The multilayer structure of the first aspect of the invention can be expected to be utilized in applications as various articles such as an antireflective article (an antireflective film, an antireflective membrane or the like), an optical article (an optical waveguide, a relief hologram, a lens, a polarization-separation element or the like), a cell culture sheet, a super water repellent article, and a super hydrophilic article. The multilayer structure is particularly suitable for use as an antireflective article among these.

The article according to the first aspect of the invention is one of which the surface is equipped with the multilayer structure according to the first aspect of the invention.

Examples of the antireflective article may include an antireflective membrane, an antireflective film, and an antireflective sheet which are provided on the surface of an image display device (a liquid crystal display device, a plasma display panel, an electroluminescence display, a cathode ray tube display device, or the like), a lens, a show window, eyeglasses, and the like.

For example, in the case of using the antireflective article in an image display device, the antireflective film may be directly pasted on the image display surface as an antireflective article, the antireflective membrane may be directly formed on the surface of a member constituting the image display surface as an antireflective article, or the antireflective membrane may be formed on the front plate as an antireflective article.

<Other embodiments>

The multilayer structure according to the first aspect of the invention is not limited to those described above. In the multilayer structure 10 illustrated in Fig. 1, the fine relief structure is formed on the surface of the intermediate layer 14 as well, but the fine relief structure may not be formed on the surface of the intermediate layer 14, for example, as the multilayer structure 50 illustrated in Fig. 4.

As illustrated in Fig. 4, the method to form the intermediate layer 14 having a flat surface on the substrate 12 is not particularly limited, and examples thereof may include known methods such as a co-extrusion molding method, a laminate molding method, a casting method, a coating method, and a transfer method.

As the co-extrusion molding method, a method in which the material for the substrate and the material for the intermediate layer are extruded in a molten state by a known method such as a T-die molding method or an inflation molding method, layered, and then cooled by a cooling means such as a cooling roll.

As the laminate molding method, a method in which the substrate is fabricated in advance by an extrusion molding method or the like, and the material for the intermediate layer is extruded on the surface of this substrate in a molten state, layered, and then cooled by a cooling means such as a cooling roll.

As the casting method or the coating method, a method in which the material for the intermediate layer, such as the resin composition described above is dissolved or dispersed in a single substance or a mixture of organic solvents such as toluene, MEK, and ethyl acetate to prepare a solution having a solid matter concentration of from 0 to 70% by mass, and this is developed by an appropriate developing method such as a casting method or a coating method, dried, and cured with an active energy ray if necessary, whereby the intermediate layer is directly provided to the surface of the substrate.

As the transfer method, the material for the intermediate layer, such as the resin composition described above is filled between the transfer roll (mold) of which the surface is a mirror surface and the substrate, the material for the intermediate layer is uniformly spread out between the substrate and the transfer roll, and the material for the intermediate layer is then irradiated with an active energy ray to cure the material for the intermediate layer.

In addition, it is also possible to form the intermediate layer 14 having a flat surface by the step (1) mentioned in the description on the second aspect to be described later. The adhesion property between the intermediate layer 14 having a flat surface and the outermost layer 16 is improved when the intermediate layer 14 is formed by the step (1) to be described later.

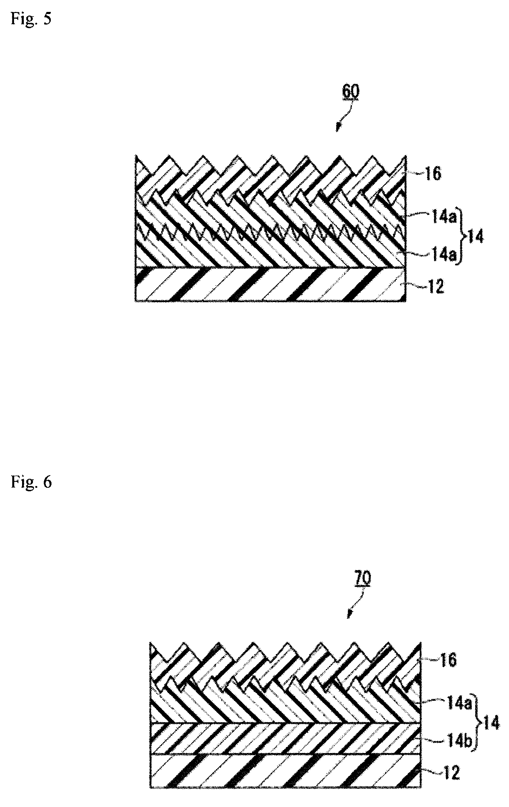

In addition, in the multilayer structures 10 and 50 illustrated in Figs. 1 and 4, the intermediate layer 14 is constituted by one layer, but the intermediate layer 14 may be constituted by a plurality of layers, for example, as illustrated in Figs. 5 and 6. In a case in which the intermediate layer is constituted by a plurality of layers, the materials, film thicknesses, physical properties (mechanical properties, optical properties, or the like) of the respective layers may be the same as or different from one another.

The intermediate layer 14 and the outermost layer 16 are layered in order on the substrate 12 to constitute a multilayer structure 60 illustrated in Fig. 5. The intermediate layer 14 of the multilayer structure 60 consists of two layers of layers 14a and 14a which have a fine relief structure on the surface and the outermost layer 16 also has a fine relief structure on the surface. The concave portion and the convex portion of the fine relief structure of the outermost layer 16 are disposed to be different from the concave portions and the convex portions of the fine relief structures of the layers 14a and 14a which constitute the intermediate layer 14 and have a fine relief structure on the surface, and fine relief structures of the layers 14a and 14a which have a fine relief structure on the surface are also disposed to be different from each other.

The intermediate layer 14 and the outermost layer 16 are layered in order on the substrate 12 to constitute a multilayer structure 70 illustrated in Fig. 6. The intermediate layer 14 of the multilayer structure 70 consists of two layers of a layer 14a which has a fine relief structure on the surface and a layer 14b which does not have a fine relief structure on the surface, and the outermost layer 16 also has a fine relief structure on the surface. The concave portion and the convex portion of the fine relief structure of the outermost layer 16 are disposed to be different from the concave portion and the convex portion of the fine relief structure of the layer 14a which constitutes the intermediate layer 14 and has a fine relief structure on the surface. Examples of the material for the layer 14b which does not have a fine relief structure on the surface may include a thermoplastic resin, an active energy ray curable resin composition, and an inorganic material.

Incidentally, in the multilayer structure 70 illustrated in Fig. 6, the outermost layer 16 is adjacent to the layer 14a having a fine relief structure on the surface but the outermost layer 16 may be adjacent to the layer 14b which does not have a fine relief structure on the surface.

In addition, in the multilayer structures 10, 60, and 70 illustrated in Figs. 1, 5 and 6, the pitches of the convex portion and the aspect ratios of the fine relief structures of the respective layers are different from one another but the pitches of the convex portion and the aspect ratios of the fine relief structures of the respective layers may be the same as one another.

However, it is preferable that the fine relief structures of at least two layers be disposed to be different from one another.

In addition, in the multilayer structures 10, 60, and 70 illustrated in Figs. 1, 5 and 6, the shapes of the concave portions and the convex portions of the fine relief structures of the respective layers are the same as one another (a substantially conical shape in the case of Figs. 1, 5, and 6), but the shapes of the concave portions and the convex portions of the fine relief structures of the respective layers may be different from one another, and the shapes may be appropriately selected depending on the effect required to the fine relief structures.

Furthermore, the back surface of the substrate 12 may be provided with a separate film via an adhesive layer. It is possible to easily paste the multilayer structure to another film-shaped or sheet-shaped article (a front plate, a polarizing element, or the like) as the adhesive layer is provided.

[Second aspect]

Hereinafter, the second aspect of the invention will be described in detail.

"Multilayer structure (laminate body)"

The multilayer structure (laminate body) according to the second aspect of the invention is a multilayer structure (hereinafter, referred to as the "multilayer laminate body" in some cases) constituted by three or more layers including a substrate, an intermediate layer (second layer), and the outermost layer (fine relief structure layer). In the second aspect of the invention, the fine relief structure also includes a nano-relief structure. The number of layers of the intermediate layer may be two or more layers but is desirably one layer from the viewpoint of productivity and cost.

In addition, in the second aspect of the invention, a multilayer structure that is constituted by layering a substrate and an intermediate layer and characterized in that the reaction rate of the polymerizable functional group on the surface of the intermediate layer is from 35 to 85% by mole is referred to as the "two-layer laminate body". This two-layer laminate body is a multilayer structure usable in the production of the multilayer laminate body.

"Substrate"

The nature of the material for the substrate may be any one as long as the substrate is able to support the outermost layer to be the surface layer via the intermediate layer. However, a substrate exhibiting light transmissive property (hereinafter, referred to as the "light transmissive substrate" in some cases) with respect to the active energy ray is preferable since the resin composition for outermost layer is required to be irradiated with an active energy ray via the substrate in order to allow the use of a light-shielding mold (stamper) when producing the multilayer structure as to be described later. The light transmissive substrate is not particularly limited as long as it is a molded body transmitting the above-mentioned active energy ray. Examples of the material constituting the light transmissive substrate may include the following ones. Synthetic polymers such as a methyl methacrylate (co)polymer, a polycarbonate, a styrene (co)polymer, a methyl methacrylate-styrene copolymer, a lactone ring-containing (co)polymer, and a cycloolefin (co)polymer; semisynthetic polymers such as cellulose diacetate, cellulose triacetate, and cellulose acetate butyrate; polyesters such as polyethylene terephthalate and polylactic acid; a polyamide, a polyimide, a polyether sulfone, polysulfone, polyethylene, polypropylene, polymethyl pentene, polyvinyl chloride, polyvinyl acetal, polyether ketone, a polyurethane, any composite of those polymers (for example, a composite of polymethyl methacrylate and polylactic acid and a composite of polymethyl methacrylate and polyvinyl chloride); and glass.

The shape or the producing method of the substrate is not particularly limited. For example, an injection molded body, an extrusion molded body, or a cast molded body can be used. In addition, the shape may be a sheet shape, a film shape, or another three-dimensional shape. The shape is preferably a film shape exhibiting flexibility particularly from the viewpoint of facilitating molding of the intermediate layer. Moreover, the surface of the substrate may be subjected to a coating treatment or a corona treatment for the purpose of improving the properties such as adhesion property, antistatic property, abrasion resistance, and weather resistance.

In a case in which the substrate has a film shape, the thickness thereof is preferably 500 $\mu$m or less. The use of such a film substrate makes it possible to easily produce a molded body having a nano-relief structure on the surface.

[Intermediate layer (second layer)]

The material constituting the intermediate layer (second layer) in the multilayer structure of the second aspect of the invention is a cured product of an active energy ray curable resin composition (X) containing a polymerizable component. As the resin composition (X), a resin composition containing a polymerizable component (a) and an active energy ray polymerization initiator (d) as essential components and another polymerizable component (b), another component (c), and a solvent (e) is suitably used.

The intermediate layer plays a role of imparting the pencil hardness to the multilayer laminate body according to the second aspect of the invention. Specifically, the intermediate layer prevents an indentation from being formed on the substrate when the multilayer laminate body is pricked by the core of a pencil in the pencil hardness test so as to realize a high pencil hardness.

In addition, the intermediate layer is also required to exhibit adhesion property to the substrate and the outermost layer. As the method to secure adhesion property between the substrate and the intermediate layer, a method in which the resin composition (X) for intermediate layer is coated on the substrate using a solvent so as to bring the intermediate layer into close contact with the substrate is mentioned. Other than this, a method in which a component exhibiting adhesion property to substrate is added to the polymerizable component (a) of the resin composition (X) for intermediate layer is mentioned.

The adhesion property between the intermediate layer and the outermost layer can be secured by providing a polymerizable functional group that is copolymerizable with the resin composition (Y) used in the formation of the outermost layer to the surface on the side of the intermediate layer where the intermediate layer is in contact with the outermost layer. This makes it possible to impart adhesion property between the intermediate layer and the outermost layer at the time of polymerizing and curing the resin composition (Y). Specifically, it is possible to impart the adhesion property between the intermediate layer and the outermost layer by intentionally leaving the unreacted polymerizable functional group on the surface of the intermediate layer at the time of polymerizing and curing the resin composition (X) for intermediate layer. As the method to leave the unreacted polymerizable functional group on the surface of the intermediate layer, a method to utilize curing inhibition by oxygen is mentioned in the case of the radically polymerizable functional group. In a case in which a resin composition having a radically polymerizable functional group, such as an (meth)acrylate compound is cured with an active energy ray, the polymerization velocity slows down in the vicinity of the interface of the surface layer part of the intermediate layer with the air due to curing inhibition by oxygen. It is possible to leave a number of radically polymerizable functional groups only on the surface of the intermediate layer although curing proceeds and a sufficient hardness is obtained in the inside of the intermediate layer by utilizing this phenomenon. In the two-layer laminate body according to the second aspect of the invention, the reaction rate of the polymerizable functional group on the surface of the intermediate layer required to secure adhesion property between the intermediate layer and the outermost layer is preferably from 35 to 85% by mole, more preferably from 45 to 75% by mole, and particularly preferably from 55 to 70% by mole. The surface of the intermediate layer is uncured or the coated surface is roughened when being in contact with other things when the reaction rate is 35% by mole or less. In the case of the intermediate layer in such a state, the coated surface is roughened when the coated surface comes into contact with the conveying roll after the formation of the intermediate layer or it is difficult to wind the intermediate layer once after being formed. Furthermore, curing of not only the surface of the intermediate layer but also the inside thereof is insufficient and thus the desired pencil hardness is not obtained in some cases. On the other hand, the quantity of the unreacted polymerizable functional group remaining on the surface of the intermediate layer is too small when the reaction rate exceeds 75% by mole, and thus the adhesion property between the intermediate layer and the outermost layer decreases.

It is possible to determine the reaction rate of the polymerizable functional group on the surface of the intermediate layer by determining the quantity of the remaining carbon-carbon double bond (C=C). As the measuring method, a means such as the infrared spectrometry, the Raman spectrometry, or the analysis of an element such as bromine after the loading reaction can be considered, and the infrared spectrometry is preferable since an efficient and reproducible measurement can be conducted.

Moreover, it is preferable that the reflection at the interface between the substrate and the intermediate layer and between the intermediate layer and the outermost layer be low. As the interface reflection is suppressed to be low, it is possible to suppress the occurrence of interference fringes and also it is possible to sufficiently exert the antireflective performance in a case in which the multilayer laminate body according to the second aspect of the invention exhibits antireflective performance. Examples of the method to suppress the interface reflection include a method in which the composition of one layer is allowed to sufficiently penetrate into the surface of the other layer so that a change in refractive index at the interface between the respective layers is gentle and a method in which a difference in refractive index between the respective layers is decreased. These two methods may be combined or used singly.

"Resin composition (X)"

[Polymerizable component (a)]

The polymerizable component (a) plays a role of imparting the pencil hardness to the multilayer laminate body according to the second aspect of the invention. Specifically, it is possible to impart a high pencil hardness as an indentation is prevented from being formed on the multilayer laminate body when it is pricked by the core of a pencil in the pencil hardness test.

Furthermore, the adhesion property is required to be favorable when the resin composition (X) for intermediate layer is cured by the first active energy ray irradiation and then resin composition (Y) for outermost layer is layered thereon and cured. In order to achieve this purpose, it is important to leave a number of polymerizable functional groups on the surface of the intermediate layer of the two-layer laminate body as described above. As a result of intensive investigations, the present inventors have found out that the reaction rate of the polymerizable functional group on the surface of the intermediate layer is easily adjusted to a preferred range as the resin composition (X) contains a specific polymerizable component (a) and thus the pencil hardness of the multilayer laminate body can also be increased.

Examples of the polymerizable component (a) may include the following ones. A compound having a polymerizable functional group, such as pentaerythritol (tri)tetraacrylate, dipentaerythritol (penta)hexaacrylate, polypentaerythritol polyacrylate, and a reaction product of pentaerythritol (tri)tetraacrylate with diisocyanate, a reaction product of dipentaerythritol (penta)hexaacrylate with diisocyanate, or a reaction product of (poly)pentaerythritol (poly)acrylate with diisocyanate. The polymerizable components (a) may be used in combination of plural kinds or may be used singly.

Among these, the following ones are preferable from the viewpoint of a balance among the hardness, warpage, and adhesion property of the intermediate layer.

• Reaction product of pentaerythritol (tri)tetraacrylate with hexamethylene diisocyanate.
• Combination of (poly)pentaerythritol (poly)acrylate and a reaction product of (poly)pentaerythritol (poly)acrylate with hexamethylene diisocyanate.

Incidentally, it is preferable that the diisocyanate have a structure such as hexamethylene diisocyanate from the viewpoint of achieving both the pencil hardness and the adhesion property.

The content of the polymerizable component (a) is preferably from 30 to 100% by mass and more preferably from 50 to 100% by mass with respect to 100% by mass of the sum of the polymerizable components contained in the resin composition (X). It is preferable that the content be 30% by mass or more from the viewpoint of improving the adhesion property and the pencil hardness, and it is preferable that the content be less than 100% by mass from the viewpoint that it is possible to add "another polymerizable component (b)" other than the polymerizable components (a) and thus it is possible to impart functionality such as adhesion property to substrate, leveling property, adjustment of viscosity, a high hardness, flexibility, control of reactivity, ultraviolet absorbability, antioxidant property, anti-blocking property, gas barrier property, antistatic property, adjustment of color tone, heat resistance, and suppression of curling.

[Polymerizable component (b)]

The polymerizable component (b) is a compound having a polymerizable functional group (provided that the polymerizable component (a) is excluded), and examples thereof may include a radically polymerizable compound, a cationically polymerizable compound, and an anionically polymerizable compound, and a radically polymerizable compound is preferable since the polymerization velocity thereof is faster and it is selected from a wide range of materials. As the radically polymerizable functional group, a (meth)acryloyl group that is highly active energy ray curable and selected from abundant alternative materials is preferable. In addition, a compound that is copolymerizable with the polymerizable components (a) is preferable since the polymerizable component (a) has a (meth)acryloyl group.

Examples of the functions that can be imparted to the polymerizable component (b) may include adhesion property to substrate, leveling property, adjustment of viscosity, a high hardness, flexibility, control of reactivity, ultraviolet absorbability, antioxidant property, anti-blocking property, gas barrier property, antistatic property, adjustment of color tone, heat resistance, and suppression of curling.

Examples of the polymerizable component (b) may include a tri- or higher functional (meth)acrylate, a bifunctional (meth)acrylate, and a monofunctional (meth)acrylate.

Examples of the tri- or higher functional (meth)acrylate may include the following ones. Glycerol triacrylate, diglycerol tetraacrylate, polyglycerol polyacrylate, trimethylolpropane triacrylate, ditrimethylolpropane tetraacrylate, sorbitol hexaacrylate, isocyanuric acid EO-modified triacrylate, and the like. Furthermore, examples thereof may also include any alkylene oxide-modified product and any caprolactone-modified product of the above compounds. Incidentally, the "EO-modified" in the present specification means ethylene oxide-modified.

Examples of the bifunctional (meth)acrylate may include the following ones. Polyethylene glycol di(meth)acrylate, polypropylene glycol di(meth)acrylate, polybutylene glycol di(meth)acrylate, polytetramethylene glycol di(meth)acrylate, polybutadiene-terminated diacrylate, hydrogenated polybutadiene-terminated diacrylate, alkoxylated bisphenol A diacrylate, 1,6-hexanediol di(meth)acrylate, 1,9-nonanediol di(meth)acrylate, 1,10-decanediol di(meth)acrylate, neopentyl glycol di(meth)acrylate, tricyclodecanedimethanol di(meth)acrylate, 2-hydroxy-3-acryloyloxypropyl methacrylate, 9,9-bis[4-(2-acryloyloxyethoxy)phenyl]fluorene, and 1,3-adamantanediol di(meth)acrylate. Furthermore, examples thereof may also include any alkylene oxide-modified product and any caprolactone-modified product of the above compounds.

Examples of the monofunctional (meth)acrylate may include the following ones. Ethoxylated o-phenylphenol (meth)acrylate, methoxypolyethylene glycol (meth)acrylate, phenoxypolyethylene glycol (meth)acrylate, methyl (meth)acrylate, lauryl (meth)acrylate, cetyl (meth)acrylate, (iso)stearyl (meth)acrylate, N,N-dimethylacrylamide, acryloyl morpholine, N,N-diethylacrylamide, dimethylaminoethyl acrylate, hydroxyethylacrylamide, 2-hydroxyethyl (meth)acrylate, 3-(meth)acryloxypropyltrimethoxysilane 2-[2-hydroxy-5-[2-(methacryloyloxy)ethyl]phenyl]-2H-benzotriazole, 1,2,2,6,6-pentamethyl-4-piperidyl-(meth)acrylate, 2,2,6,6-tetramethyl-4-piperidyl-(meth)acrylate, 2-tert-butyl-6-(3-tert-butyl-2-hydroxy-5-methylbenzyl)-4-methylphenyl acrylate, N,N-dimethylaminopropyl acrylamide p-toluenesulfonic acid methyl quaternary salt, $\gamma$-butyrolactone (meth)acrylate, 1-adamantyl (meth)acrylate, dicyclopentenyl (meth)acrylate, dicyclopentenyloxyethyl (meth)acrylate, dicyclopentanyl (meth)acrylate, benzyl (meth)acrylate, nonylphenoxypolyethylene glycol (meth)acrylate, tetrahydrofurfuryl (meth)acrylate, and the like. Furthermore, examples thereof may also include any alkylene oxide-modified product and any caprolactone-modified product of the above compounds.

Examples of the polymerizable component (b) may further include a silicone (meth)acrylate and a fluorine-containing (meth)acrylate.

Furthermore, a compound prepared by modifying the surface of inorganic fine particles such as colloidal silica with a silane coupling agent having a (meth)acryloyl group, and the like are also mentioned as a component effective in improving the pencil hardness or preventing blocking.

[Active energy ray polymerization initiator (d)]

The active energy ray polymerization initiator (d) is a compound that is cleaved by being irradiated with an active energy ray to generate an active species which initiates the polymerization reaction. The active energy ray is preferably ultraviolet light from the viewpoint of equipment cost or productivity. As the active species to be generated, a radical is preferable from the viewpoint of the reaction velocity.

Examples of the active energy ray polymerization initiator (d) which generates a radical by ultraviolet light may include the following ones. Benzophenone, 4,4-bis(diethylamino)benzophenone, 2,4,6-trimethylbenzophenone, methyl o-benzoylbenzoate, 4-phenylbenzophenone, tert-butylanthraquinone, 2-ethylanthraquinone, a thioxanthone (2,4-diethylthioxanthone, isopropylthioxanthone, 2,4-dichlorothioxanthone, or the like), an acetophenone (diethoxyacetophenone, 2-hydroxy-2-methyl-1-phenylpropane-1-one, benzyl dimethyl ketal, 1-hydroxycyclohexyl-phenyl ketone, 2-methyl-2-morpholino(4-thiomethylphenyl)propan-1-one, 2-benzyl-2-dimethylamino-1-(4-morpholinophenyl)- butanone, or the like), a benzoin ether (benzoin methyl ether, benzoin ethyl ether, benzoin isopropyl ether, benzoin isobutyl ether, or the like), an acylphosphine oxide (2,4,6-trimethylbenzoyldiphenylphosphine oxide, bis(2,6-dimethoxybenzoyl)-2,4,4-trimethylpentylphosphine oxide, bis(2,4,6-trimethylbenzoyl)-phenylphosphine oxide, or the like), methyl benzoyl formate, 1,7-bisacridinylheptane, 9-phenylacridine, and the like.

The active energy ray polymerization initiator (d) may be used singly or two or more kinds thereof may be used concurrently. It is preferable to concurrently use two or more kinds having different absorption wavelengths in the case of concurrent use.

In addition, a thermal polymerization initiator such as a persulfate salt (potassium persulfate, ammonium persulfate, or the like), a peroxide (benzoyl peroxide, or the like), or an azo-based initiator may be concurrently used if necessary.

The proportion of the active energy ray polymerization initiator (d) in the resin composition (X) is preferably from 0.01 to 10% by mass, more preferably from 0.1 to 5% by mass, and even more preferably from 0.2 to 3% by mass with respect to 100% by mass of the solid matter of the resin composition (X). The resin composition (X) is not completely cured when the proportion of the active energy ray polymerization initiator (d) is less than 0.01% by mass, and thus it is not possible to impart a sufficient elastic modulus to the intermediate layer and the pencil hardness of the multilayer laminate body decreases in some cases. When the proportion of the active energy ray polymerization initiator (d) exceeds 10% by mass, the unreacted active energy ray polymerization initiator (d) remains in the intermediate layer to act as a plasticizer and thus the elastic modulus of the intermediate layer decreases and the pencil hardness of multilayer laminate body is impaired in some cases. Moreover, it causes coloring in some cases.

[Solvent (e)]

The resin composition (X) can contain a solvent (e) in order to easily coat the resin composition (X) on the substrate. The coating property and the adhesion property to the substrate at the time of coating and drying the resin composition (X) are secured by the solvent (e).

The viscosity of the resin composition (X) to impart favorable coating property to the intermediate layer is preferably from 5 to 200 [mPa·sec] and more preferably from 10 to 100 [mPa·sec] at 25°C. An E-type viscometer or a B-type viscometer can be used for the measurement of viscosity. It is not possible to increase the film thickness of the intermediate layer after drying when the viscosity is too low, and thus it is not possible to have the intended pencil hardness in some cases. The leveling property deteriorates at the time of coating when the viscosity is too high, and thus streak-like irregularity in film thickness is caused in some cases.

The solid matter concentration of the resin composition (X) is preferably 30% by mass or more and 80% by mass or less and preferably 35% by mass or more and 60% by mass or less. The content of the solvent (e) is low when the solid matter concentration is too high, and thus the penetration of the intermediate layer into the substrate is insufficient and the adhesion property of the intermediate layer to the substrate decreases in some cases. It is not possible to increase the film thickness of the intermediate layer after drying when the solid matter concentration is too low, and thus it is not possible for the multilayer laminate body to have the intended pencil hardness in some cases.

It is preferable that the solvent (e) include a solvent which dissolves the substrate in order to secure the adhesion property to the substrate. As the solvent (e) includes a solvent which dissolves the substrate, it is possible to form a relaxed layer in which the interface between the substrate and the intermediate layer is compatibilized and the adhesion property is improved as a result. In such a state, it is possible to decrease the reflection at the interface between the substrate and the intermediate layer and thus an effect capable of suppressing the occurrence of interference fringes is also obtained.

For example, in a case in which the substrate is a triacetylcellulose film, the examples of the solvent to dissolve triacetyl cellulose may include the following ones.

An ether having from 3 to 12 carbon atoms: specifically, dibutyl ether, dimethoxymethane, dimethoxyethane, diethoxyethane, propylene oxide, 1,4-dioxane, 1,3-dioxolane, 1,3,5-trioxane, tetrahydrofuran, anisole, phenetol or the like;

A ketone having from 3 to 12 carbon atoms: specifically, acetone, methyl ethyl ketone, diethyl ketone, dipropyl ketone, diisobutyl ketone, cyclopentanone, cyclohexanone, methylcyclohexanone, or the like;

An ester having from 3 to 12 carbon atoms: specifically, ethyl formate, propyl formate, n-pentyl formate, methyl acetate, ethyl acetate, methyl propionate, ethyl propionate, n-pentyl acetate, $\gamma$-butyrolactone, or the like;

An organic solvent having two or more kinds of functional groups: specifically, methyl 2-methoxyacetate, methyl 2-ethoxyacetate, ethyl 2-ethoxyacetate, ethyl 2-ethoxypropionate, 2-methoxyethanol, 2-propoxyethanol, 2-butoxyethanol, 1,2-diacetoxyacetone, acetylacetone, diacetone alcohol, methyl acetoacetate, ethyl acetoacetate, or the like.

There are those which dissolve the triacetyl cellulose among the halogenated hydrocarbons, but it is preferable not to use them from the viewpoint of the global environment or the working environment.

In addition, as the solvent (e), it is preferable to use a solvent having a fast evaporation rate and a solvent having a slow evaporation rate in combination. It is possible to achieve both a short drying time and an excellent surface state as a solvent having a fast evaporation rate and a solvent having a slow evaporation rate are used in combination. In the case of using only a solvent having a fast evaporation rate, the retention time of the solvent is too short, thus the resin composition (X) cannot secure the time to penetrate into the substrate, and as a result, the adhesion property deteriorates or the surface is roughened and clouded in some cases. On the other hand, in the case of using only a solvent having a slow evaporation rate, the drying time is prolonged, and thus the line speed slows down and the productivity decreases in some cases.

The mass composition ratio "s1 : s2" of a solvent having a fast evaporation rate s1 to a solvent having a slow evaporation rate s2 is preferably in a range of about from 40 : 60 to 90 : 10. The drying time or the penetrability into the substrate varies depending on the kinds of the solvents to be combined, and thus it is required to optimize the composition ratio for each kind of the solvents to be combined.

In addition, it is possible to control the amount of the intermediate layer penetrating into the substrate as a solvent which dissolves the substrate and a solvent which does not dissolve the substrate are combined as the solvent (e).

[Another component (c)]

The resin composition (X) for intermediate layer used in the invention can contain, for example, the following additives if necessary. Known additives such as a surfactant, a lubricant, a plasticizer, an antistatic agent, an ultraviolet absorber, a light stabilizer, a flame retardant, a flame retardant auxiliary, a polymerization inhibitor, a pH adjusting agent, a dispersing auxiliary, a leveling agent, a filler, a silane coupling agent, a colorant, a reinforcing agent, an impact modifier, and a conductivity imparting agent. It is difficult to maintain the shape of the nano-relief structure in some cases particularly when an antistatic agent, an ultraviolet absorber, and a near infrared ray absorbing agent are contained in the outermost layer, and thus it is preferable that these additives not be contained in the outermost layer but contained in the intermediate layer from the viewpoint of the abrasion resistance and reflex inhibition of the multilayer structure.

The antistatic agent keeps the dust from adhering to the multilayer structure. Examples of the antistatic agent may include the following ones. Conductive polymers which are polythiol-based, polythiophene-based, and polyaniline-based, inorganic particles such as carbon nanotubes and carbon black, a lithium salt as exemplified in JP 2007-70449 A, and a quaternary ammonium salt. In addition, these may be used singly or a plurality of them may be used concurrently. Among these, a lithium salt of a perfluoroalkyl acid which does not impair the transparency of the multilayer structure, is relatively inexpensive, and exerts stable performance is preferable as the antistatic agent.

The amount of the antistatic agent added is preferably from 0.5 to 20 parts by mass and more preferably from 1 to 10 parts by mass with respect to the 100 parts by mass of the sum of the polymerizable components in the resin composition (X). It is possible to lower the surface resistance value of the multilayer structure when the added amount is 0.5 part by mass or more, and thus the performance to prevent dust from adhering is exerted. The degree of performance improvement per added amount is favorable and the cost can be suppressed when the added amount is 20 parts by mass or less. In addition, it is preferable to set the thickness of the outermost layer to be layered on the intermediate layer to preferably 100 $\mu$m or less and more preferably 50 $\mu$m or less in order to exert favorable antistatic performance.

The near infrared ray absorbing agent imparts a heat insulating effect to the multilayer structure and can suppress the malfunction of the infrared remote control for various home appliances in a case in which the multilayer structure is used in a plasma display or the like. Examples of the near infrared ray absorbing agent may include the following ones. An organic near infrared ray absorbing agent such as diimonium-based dye, an phthalocyanine-based dye, a dithiol metal complex-based dye, a substituted benzenedithiol metal complex-based dye, a cyanine-based dye, or a squarylium-based dye, or an inorganic near infrared ray absorbing agent such as conductive antimony-containing tin oxide fine particles, conductive tin-containing indium oxide fine particles, tungsten oxide fine particles, or composite tungsten oxide fine particles. These may be used singly or a plurality of these may be used concurrently.

These additives may be added to the outermost layer of the multilayer laminate body. However, it is preferable that these additives not be added to the outermost layer but added to the intermediate layer since it is possible to suppress the occurrence of time-dependent bleeding out as well as to suppress the maintenance of a nano-relief surface shape from being inhibited.

"Resin composition (Y)"

The outermost layer of the multilayer laminate body according to the second aspect of the invention is a layer consisting of the cured product of an active energy ray curable resin composition (Y). It is preferable that this outermost layer have a relief structure in which the interval between adjacent convex portions is equal to or less than the wavelength of visible light.

As the resin composition (Y), a resin composition containing a polymerizable component (g), an active energy ray polymerization initiator (h), and a mold releasing agent (j) is preferably used. It is preferable that the resin composition (Y) be responsible for the abrasion resistant performance of the fine relief structure after being cured to form the outermost layer.

For the multilayer laminate body, it is preferable that both the resin composition (X) and the resin composition (Y) used as starting materials thereof contain a (meth)acrylate compound. It is preferable that both the resin composition (X) and the resin composition (Y) contain a (meth)acrylate compound from the viewpoint that the adhesion property can be improved by copolymerizing these at the interface between the outermost layer and the intermediate layer.

[Polymerizable component (g)]

Examples of the compound which can be used as the polymerizable component (g) may include a radically polymerizable compound, a cationically polymerizable compound, and an anionically polymerizable compound, and a radically polymerizable compound is preferable since the polymerization velocity thereof is faster and it is selected from a wide range of materials. As the radically polymerizable functional group, a (meth)acryloyl group that is highly active energy ray curable and selected from abundant alternative materials is preferable.

The compound which has a (meth)acryloyl group and can be used as the polymerizable component (g) contains preferably a bi- or higher functional (meth)acrylate as a main component and even more preferably a tri- or higher functional (meth)acrylate as a main component in order to enhance the abrasion resistance of the fine relief structure.

In addition, when the cured product of the resin composition (Y) is too hard, the cured product is brittle although the elastic modulus thereof increases, the fine relief structure is easily folded or scraped, and thus it is not possible to obtain high abrasion resistance. Hence, it is effective to enhance the abrasion resistance, for example, by introducing an oxyethylene group into the crosslinked structure to impart flexibility. It is possible to use polyethylene glycol di(meth)acrylate or a tri- or higher functional EO-modified (meth)acrylate in order to introduce the oxyethylene group into the crosslinked structure.

It is preferable to control the hardness of the cured product of the resin composition (Y) by combining a hard component having a low acrylic equivalent and a soft component having a high acrylic equivalent as the polymerizable component (g). The "acrylic equivalent" is a numerical value represented by the molecular weight per one (meth)acryloyl group.

In the polymerizable component (g), in a case in which a (meth)acrylate having an acrylic equivalent of less than 150 [g/eq] is denoted as a hard component and a (meth)acrylate having an acrylic equivalent of 150 [g/eq] or more is denoted as a soft component, examples of the hard component (g1) may include the following ones. Pentaerythritol (tri)tetraacrylate, dipentaerythritol (penta)hexaacrylate, tripentaerythritol polyacrylate, polypentaerythritol polyacrylate, glycerol triacrylate, diglycerol tetraacrylate, polyglycerol polyacrylate, trimethylolpropane triacrylate, ditrimethylolpropane tetraacrylate, sorbitol hexaacrylate, and the like.

Furthermore, a urethane acrylate synthesized by reacting pentaerythritol triacrylate or dipentaerythritol pentaacrylate having a hydroxyl group among the above compounds with an isocyanate compound such as hexamethylene diisocyanate or isophorone diisocyanate, and the like are exemplified.

Examples of the commercially available product of the hard component may include the following ones. ARONIX series: M-309, M-315, M-306, M-305, M-451, M-450, M-408, M-403, M-400, M-402, M-404, M-406, M-405 and the like manufactured by TOAGOSEI CO., LTD. NK Series: A-9300, A-TMM-3, A-TMM-3L, A-TMM-3LM-N, A-TMPT, AD-TMP, A-TMMT, A-9550, and A-DPH manufactured by Shin-Nakamura Chemical Industry Co., Ltd. KAYARAD series: TMPTA, THE-330, PET-30, RP-1040, and DPHA manufactured by Nippon Kayaku Co., Ltd. UA-306H, UA-306T, UA-306I, UA-510H and the like manufactured by KYOEISHA CHEMICAL Co., LTD. The hard components may be used singly or two or more kinds thereof may be used concurrently.

Examples of the soft component (g2) which imparts flexibility to the fine relief structure and improves the abrasion resistance may include the following ones. Polyethylene glycol di(meth)acrylate, pentaerythritol EO-modified tetra(meth)acrylate, dipentaerythritol EO-modified hexaacrylate, tripentaerythritol EO-modified (meth)acrylate, (poly)glycerol EO-modified poly(meth)acrylate, sorbitol EO-modified hexaacrylate, trimethylolpropane EO-modified triacrylate, and the like.

Examples of the commercially available product of the soft component may include the following ones. NK series; A-200, A-400, A-600, A-1000, 4G, 9G, 14G, 23G, A-PG5009E, A-PG5027E, A-PG-5054E, A -GLY-9E, A-GLY-20E, ATM-35E, and the like manufactured by Shin-Nakamura Chemical Industry Co., Ltd. T-200EA, S-130EA and the like manufactured by TOHO Chemical Industry Co., Ltd. KAYARAD series: DPEA-12 and the like manufactured by Nippon Kayaku Co., Ltd. DPHA-30EO, DPHA-36EO, DPHA-42EO, DPHA-48EO, DPHA-54EO, PETA-32EO, PETA-36EO, PETA-40EO, PETA-48EO, PETA-56EO, and the like manufactured by DKS Co., Ltd. The soft components may be used singly or two or more kinds thereof may be used concurrently.

The proportion of the hard component and the soft component in the polymerizable component (g) is appropriately adjusted depending on the compounds used. When the proportion is indicated by the acrylic equivalent of the polymerizable component (g), it is preferable to adjust the acrylic equivalent to about from 130 to 160 [g/eq] in a case in which the structure cycle of the fine relief structure is about 100 nm and to about from 200 to 300 [g/eq] in a case in which the structure cycle of the fine relief structure is about 180 nm. The optimum hardness of the resin is different depending on the structure cycle of the fine relief structure. A phenomenon that a plurality of projections of the concave and convex come into close contact with one another is likely to occur as the structure cycle is smaller, and thus the acrylic equivalent is required to be lowered so that the cured product of the resin composition (Y) is harder.

Examples of other compounds which can be used as the polymerizable component (g) may include a monofunctional (meth)acrylate, a urethane (meth)acrylate, an epoxy (meth)acrylate, a polyester (meth)acrylate, and a reactive polymer other than those mentioned above.

[Active energy ray polymerization initiator (h)]

The active energy ray polymerization initiator (h) is a compound which is cleaved by being irradiated with an active energy ray to generate an active species which initiates the polymerization reaction. The active energy ray is preferably ultraviolet light from the viewpoint of equipment cost or productivity. The active species to be generated is preferably a radical from the viewpoint of the reaction velocity.

Examples of the active energy ray polymerization initiator (h) which generates a radical by ultraviolet light may include the same compounds as the active energy ray polymerization initiator (d).

The active energy ray polymerization initiator (h) may be used singly or two or more kinds thereof may be used concurrently. It is preferable to concurrently use two or more kinds having different absorption wavelengths in the case of concurrent use. In addition, a thermal polymerization initiator such as a persulfate salt (potassium persulfate, ammonium persulfate, or the like), a peroxide (benzoyl peroxide, or the like), or an azo-based initiator may be concurrently used if necessary.

The proportion of the active energy ray polymerization initiator (h) in the resin composition (Y) is preferably from 0.01 to 10% by mass, more preferably from 0.1 to 7% by mass, and even more preferably from 0.2 to 5% by mass with respect to 100% by mass of the polymerizable component (g). The resin composition (Y) is not completely cured when the proportion of the active energy ray polymerization initiator (h) is less than 0.01% by mass, and thus it is not possible to impart a sufficient elastic modulus to the intermediate layer and the pencil hardness of the multilayer laminate body decreases in some cases. When the proportion of the active energy ray polymerization initiator (h) exceeds 10% by mass, the unreacted active energy ray polymerization initiator (h) remains in the cured product to act as a plasticizer and thus the elastic modulus of the cured product decreases and the pencil hardness of the multilayer laminate body is impaired in some cases. Moreover, it causes coloring of the multilayer laminate body in some cases.

[Ultraviolet absorber and/or antioxidant]

The resin composition (Y) may further contain an ultraviolet absorber and/or an antioxidant and the like. Examples of the ultraviolet absorber may include ultraviolet absorbers which are benzophenone-based, benzotriazole-based, hindered amine-based, benzoate-based, and triazine-based. Examples of the commercially available product thereof may include ultraviolet absorbers such as "TINUVIN 400" and "TINUVIN 479" manufactured by Ciba Specialty Chemicals Inc. and "Viosorb110" manufactured by KYODO CHEMICAL CO., LTD. Examples of the antioxidant may include antioxidants which are hindered phenol-based, benzimidazole-based, phosphorus-based, sulfur-based, and hindered amine-based. Examples of the commercially available product thereof may include "IRGANOX" series or "TINUVIN" series manufactured by BASF.

These ultraviolet absorbents and antioxidants may be used singly or two or more kinds thereof may be used concurrently. The proportions of the ultraviolet absorber and/or the antioxidant in the resin composition (Y) are preferably from 0.01 to 5% by mass in total with respect to 100% by mass of the polymerizable component (g).

[Mold releasing agent (j)]

It is preferable that the resin composition (Y) contain a mold releasing agent (j). The mold releasing agent (j) is added in order to maintain the mold releasing property of the resin composition (Y) from the mold over a long period of time in the step of curing the resin composition (Y) and transferring the fine relief structure on the surface of the mold to the cured product thereof.

Examples of the mold releasing agent (j) may include a silicone resin, a fluorine resin, a fluorine compound, and an ester of phosphoric acid, and an ester of phosphoric acid is particularly preferable. As the ester of phosphoric acid, a (poly)oxyalkylene alkyl phosphate compound is preferable, and examples of the commercially available product thereof may include the following ones. JP-506H manufactured by JOHOKU CHEMICAL CO., LTD., MoldWiz INT-1856 manufactured by Axel Plastics Research Laboratories, Inc., and TDP-10, TDP-8, TDP-6, TDP-2, DDP-10, DDP-8, DDP-6, DDP-4, DDP-2, TLP-4, TCP-5, and DLP-10 manufactured by Nikko Chemicals Co., Ltd.

The proportion of the mold releasing agent (j) in the resin composition (Y) is preferably from 0.01 to 1% by mass and more preferably from 0.1 to 0.5% by mass with respect to 100% by mass of the polymerizable component (g).

[Other components]

The resin composition (Y) may contain known additives such as a surfactant, a lubricant, a plasticizer, an antistatic agent, a light stabilizer, a flame retardant, a flame retardant auxiliary, a polymerization inhibitor, a pH adjusting agent, a dispersing auxiliary, a leveling agent, a filler, a silane coupling agent, a colorant, a reinforcing agent, an impact modifier, a conductivity imparting agent, and a solvent if necessary.

[Refractive index of each layer]

The multilayer laminate body according to the second aspect of the invention includes at least a substrate, an intermediate layer, and an outermost layer. It is undesirable that light reflects at the interface between the respective layers of the multilayer laminate body in order to improve the antireflective performance of the surface of the multilayer laminate body by the fine relief structure. Reflection at the interface leads to not only a decrease in antireflective performance but also to the deterioration in appearance due to the occurrence of interference fringes in some cases.

It is more preferable as a difference in refractive index between the substrate and the intermediate layer constituting the multilayer laminate body is smaller. However, as described above, it is possible to form a relaxed layer in which the interface between the substrate and the intermediate layer is compatibilized by coating and drying using a solvent. Meanwhile, for the interface between the intermediate layer and the outermost layer as well, it is possible to form a relaxed layer in the same manner in the case of forming the outermost layer with a solvent-based resin composition (Y). However, the interface between the intermediate layer and the outermost layer is likely to remain in the case of forming the outermost layer with a solventless resin composition (Y). In this case, it is preferable to decrease a difference in refractive index between the outermost layer and the intermediate layer. Specifically, a difference in refractive index between the outermost layer and the intermediate layer is preferably from 0 to 0.1, more preferably from 0 to 0.05, and even more preferably from 0 to 0.01. The control of a difference in refractive index between the respective layers is important since slight surface reflection leads to the occurrence of interference fringes as the antireflective performance by the fine relief structure is higher.

"Method for producing multilayer structure"

The multilayer laminate body according to the second aspect of the invention can be produced by a method including, for example, the following steps (1) to (3).

Step (1): a step of disposing the active energy ray curable resin composition (X) containing a compound having a polymerizable functional group on a light transmissive substrate and then conducting the first active energy ray irradiation to form the intermediate layer having a reaction rate of the polymerizable functional group on the surface of from 35 to 85% by mole.

Step (2): a step of disposing the active energy ray curable resin composition (Y) between the intermediate layer formed in the step (1) and a mold (stamper) for transfer of a fine relief structure.

Step (3): a step of conducting the second active energy ray irradiation from the substrate side to cure the resin composition (Y) and to form an outermost layer and releasing the multilayer structure including the substrate, the intermediate layer, and the outermost layer sequentially layered from the mold.

[Step (1)]

In the step (1), the resin composition (X) for intermediate layer is disposed on the substrate. After disposing the resin composition (X), the resin composition (X) can be dried if necessary.

It is possible to appropriately select the disposing method of the resin composition (X) from various coating methods in consideration of the properties of the resin composition (X). Examples of the disposing method may include a method using a gravure coater, a bar coater, a slot die coater, a lip coater, or a comma coater.

In the first active energy ray irradiation, the resin composition (X) is irradiated with an active energy ray to be polymerized and cured. The reaction rate of the polymerizable functional group on the surface of the intermediate layer of the two-layer laminate body obtained by irradiating with an active energy ray is from 35 to 85% by mole, more preferably from 45 to 75% by mole, and particularly preferably from 55 to 70% by mole. The surface of the intermediate layer is uncured and the coated surface is roughened when being in contact with other things when the reaction rate is 35% by mole or less. In the case of the intermediate layer in such a state, the coated surface is roughened when the coated surface comes into contact with the conveying roll after the formation of the intermediate layer or it is difficult to wind the intermediate layer once after being formed. Furthermore, curing of not only the surface of the intermediate layer but also the inside thereof is insufficient and thus the desired pencil hardness is not obtained in some cases. On the other hand, the quantity of the unreacted polymerizable functional group remaining on the surface of the intermediate layer is too small when the reaction rate exceeds 75% by mole, and thus the adhesion property between the intermediate layer and the outermost layer decreases.

As the active energy ray, it is preferable to use ultraviolet light from the viewpoint of equipment cost or productivity. The irradiation dose of ultraviolet light may be appropriately determined in consideration of the amount of the polymerization initiator (d) contained in the resin composition (X). The light source to emit ultraviolet light is not particularly limited, and known ones such as an ultra-high pressure mercury lamp, a high pressure mercury lamp, a halogen lamp, and various lasers are used. The reference of the cumulative quantity of light is preferably from 50 to 1000 mJ/cm$^2$ and more preferably from 100 to 500 mJ/cm$^2$. When the cumulative quantity of light is too great, the quantity of the polymerizable functional group remaining on the surface of the intermediate layer is out of the preferred range or the light transmissive substrate is damaged by the active energy ray in some cases. On the other hand, the surface of the intermediate layer is not cured but remains in a liquid form when the cumulative quantity of light is too small in some cases.

The thickness of the intermediate layer after curing of the resin composition (X) is preferably about from 1 to 20 $\mu$m and more preferably about from 1 to 10 $\mu$m. It is possible to suppress a phenomenon that pushing deformation by the pencil extends to the substrate to leave an indentation on the multilayer laminate body in the pencil hardness test thereof when the thickness of the intermediate layer is 1 $\mu$m or more. In addition, it is possible to prevent the problem of cracking at the time of bending or warping of the multilayer laminate body when the thickness of the intermediate layer is 20 $\mu$m or less. The thickness precision of the intermediate layer is preferably within $\pm$ 2 $\mu$m and more preferably within $\pm$ 1 $\mu$m.

It is possible to paste a protective film on the intermediate layer after the step (1) is completed. The protective film has a function to prevent the foreign matter from adhering to the intermediate layer or to prevent a back surface of the substrate and the intermediate layer from blocking at the time of being wound once. As the protective film, it is possible to appropriately select from known ones, and examples thereof may include polyethylene terephthalate (PET) and polyethylene (PE). It is possible to subject the surface of the protective film to various surface treatments such as a mold releasing treatment, an anti-blocking treatment, and an antistatic treatment.

[Step (2)]

In the step (2), the resin composition (Y) for outermost layer is disposed between the intermediate layer which is obtained in the step (1) and in a state in which the reaction rate of the polymerizable functional group on the surface is from 35 to 85% by mole and the mold for transfer of fine concave and convex. It is possible to select various known methods as the method to dispose the resin composition (Y).

In a case in which the resin composition (Y) is solventless, there are a method (2-a) in which the resin composition (Y) is coated on the uncured intermediate layer using various coaters and then brought into contact with the mold and a method (2-b) in which a bank consisting of the resin composition (Y) is formed between a roll-shaped mold and the intermediate layer and a curable liquid is supplied to the bank through a nozzle.

In the method (2-a), it is possible to appropriately select the coating method of the curing liquid of the resin composition (Y) from various coating methods in consideration of the properties of the resin composition (Y). Examples of the coating method may include a method using a gravure coater, a bar coater, a slot die coater, a lip coater, or a comma coater.

In the method (2-b), a method in which the nozzle is replaced with a slot die coater or the like and a curtain-shaped resin composition (Y) is supplied to the bank is also mentioned. In this method (2-b), it is possible to control the film thickness of the layer consisting of the resin composition (Y) by the hardness of the nip roll with respect to the roll-shaped mold or the nature of the material for the nip roll and the nip pressure or the gap between the roll-shaped mold and the nip roll.

In a case in which the resin composition (Y) contains a solvent, the resin composition (Y) is coated on the intermediate layer by the same method as the method (2-a) and then dried.

The thickness of the coating layer consisting of the resin composition (Y) is preferably about from 5 to 40 $\mu$m

and more preferably about from 10 to 20 $\mu$m. It is possible to impart sufficient abrasion resistance to the fine relief structure when the thickness of the coating layer is 5 $\mu$m or more. In addition, it is possible to prevent the problem of cracking at the time of bending or warping of the multilayer laminate body when the thickness of the coating layer is 40 $\mu$m or less. The thickness precision of the coating layer is preferably within $\pm$ 2 $\mu$m and more preferably within $\pm$ 1 $\mu$m.

[Step (3)]

In the step (3), the resin composition (Y) is cured by being irradiated with an active energy ray from the substrate side. At this time, it is preferable to allow the unreacted polymerizable functional group present on the surface of the intermediate layer to react so that the curing of the intermediate layer further proceeds. As the active energy ray, it is preferable to use ultraviolet light from the viewpoint of equipment cost or productivity. The irradiation dose of ultraviolet light may be appropriately determined in consideration of the amount of the polymerization initiator (h) contained in the resin composition (Y) and the transmittance of the substrate. The light source to emit ultraviolet light is not particularly limited, and known ones such as an ultra-high pressure mercury lamp, a high pressure mercury lamp, a halogen lamp, and various lasers are used. The reference of the cumulative quantity of light is from 200 to 10000 mJ/cm$^2$.

In addition, in a case in which the substrate absorbs a part of ultraviolet light, there is a possibility that the substrate absorbs ultraviolet light at the time of ultraviolet irradiation, is in an overheated state, and thus is thermally deformed or the like. In that case, it is preferable to provide a measure such as installation of a filter to cut ultraviolet light of the wavelengths which are absorbed by the substrate and thus do not reach the intermediate layer and the outermost layer or cooling of the multilayer structure.

It is possible to obtain the intended multilayer laminate body by releasing it from the mold after the intermediate layer and the outermost layer are cured at the same time in the step (3). It is possible to release the multilayer laminate body from the mold with a low peel force and to prevent the loss of the fine relief structure at the time of releasing by the action of the above-described mold releasing agent (j) added in the resin composition (Y).

In addition, the cured product of the resin having a fine relief structure formed thereon shrinks by the thermal contraction and thus is more easily released in some cases when the temperature at the time of releasing is set to be lower than the temperature at the time of curing.

The total film thickness of the outermost layer and the intermediate layer cured in the step (3) is preferably about from 5 to 80 $\mu$m and more preferably about from 8 to 20 $\mu$m. It is preferable that the total film thickness be thinner since the thickness of the entire multilayer laminate body also decreases, but the film thickness is required to be a certain degree or more so that the multilayer laminate body has a pencil hardness of 2H or higher.


[Another Step]

As a step other than the steps (1) to (3), a step of inspecting a foreign matter, a defect, or the like can be provided at a point in time including the time between the steps (1) to (3). In addition to this, a method to provide a step of conducting post curing to irradiate an active energy ray again from the outermost layer side after the step (3) to complete curing of the intermediate layer and the outermost layer or to decrease the quantity of the uncleaved polymerization initiator, a step of pasting a protective film, or the like is mentioned.

Incidentally, the step (1) described above is a method to form the intermediate layer having a flat surface, but the following step (1-2) may be carried out instead of the step (1) in the case of forming the intermediate layer having a fine relief structure on the surface.

Step (1-2): a step of disposing the active energy ray curable resin composition (X) containing a compound having a polymerizable functional group between a light transmissive substrate and a mold (stamper) for transfer of a fine relief structure, conducting the first active energy ray irradiation from the substrate side to form the intermediate layer having a reaction rate of the polymerizable functional group on the surface of from 35 to 85% by mole, and releasing the two-layer laminate body having the substrate and the intermediate layer sequentially layered from the mold.

As the method to dispose the resin composition (X) between the substrate and the mold, the method exemplified in the description on the step (2) is mentioned.


"Fine relief structure"

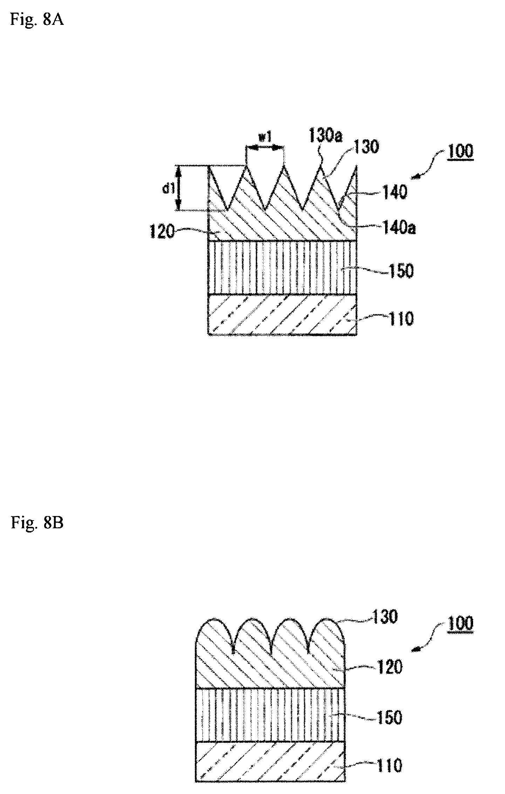

Fig. 8(A) and Fig. 8(B) are schematic cross-sectional views illustrating embodiments of a multilayer structure (multilayer laminate body) according to the second aspect of the invention. In Fig. 8(A) and Fig. 8(B), a multilayer structure 100 formed by sequentially layering an intermediate layer (second layer) 150 and an outermost layer (fine relief structure layer) 120 on a substrate 110 is exemplified. The surface of the outermost layer 120 has a fine relief structure exerting surface antireflective property as illustrated in Fig. 8(A) and Fig. 8(B). Specifically, it is preferable that a convex portion 130 and a concave portion 140 be formed on the surface of the outermost layer 120 at approximately equal intervals.

In particular, the shape of the convex portion 130 in Fig. 8(A) is a conical or pyramid shape, and the shape of the convex portion 130 in Fig. 8(B) is a bell shape. However, the shape of the convex portion 130 of the fine relief structure is not limited to these, and the shape may have a structure in which the occupancy rate of the cross-sectional area when the outermost layer 120 is cut in the transverse section continuously increases. In addition, finer convex portions may coalesce into one to form a fine relief structure. In other words, the shape may be a shape other than Fig. 8(A) and Fig. 8(B) as long as it exhibits antireflective performance as the refractive index continuously increases from the air to the material surface and both a low reflectance and low wavelength dependence are achieved. In particular, a shape in which the cross-sectional area when cut in the plane perpendicular to the height direction of the convex portion continuously increases from the top part toward the bottom part of the convex portion, such as a conical shape, a pyramid shape, or a bell shape is preferable. In addition, finer projections may coalesce into one to form the fine relief structure.

In order to exert excellent antireflective performance, the interval between two adjacent convex portions 130 (w1 in Fig. 8(A)) or the interval between two adjacent concave portions 140 of the fine relief structure is desired to have a size equal to or less than the wavelength of visible light. Here, the "visible light" refers to light having a wavelength of from 380 to 780 nm. It is possible to suppress scattering of visible light when this interval w1 is 400 nm or less (more preferably 380 nm or less). In this case, the multilayer structure according to the second aspect of the invention can be suitably used in an optical application such as an antireflective film. The lower limit value of this interval w1 is not particularly limited as long as it is in a producible range. In the case of forming the fine relief shape by a method to transfer using a mold, the interval w1 is preferably 20 nm or more and more preferably 40 nm or more from the viewpoint of easiness of production of the mold. In addition, the aspect ratio represented by the "height d1/interval w1" is preferably 0.3 or more, more preferably 0.5 or more, and particularly preferably 0.8 or more from the viewpoint of suppressing an increase in the minimum reflectance or the reflectance at a specific wavelength. The lower limit value of these aspect ratios is significant particularly from the viewpoint of a decrease in light reflection and a decrease in incident angle dependency. The upper limit of the aspect ratio is not particularly limited as long as it is in a producible range. In the case of forming the fine relief shape by a method to transfer using a mold, it is preferable that the aspect ratio of the convex portion be 5 or less in order to conduct accurate transfer. The height of the convex portion or the depth of the concave portion (the vertical distance from the bottom point 140a of the concave portion 140 to the top point 130a of the convex portion 130 (vertical distance d1 in Fig. 8(A))) is preferably 60 nm or more and more preferably 90 nm or more. The shape or the producing method of the fine relief structure exerting favorable antireflective performance is described in JP 2009-31764 A or the like, and the same shape or the same producing method as that can be used in the invention as well.

As the size of the fine relief structure on the surface, it is possible to adopt the value obtained by depositing the longitudinal section of the fine relief structure with Pt for 10 minutes, observing it using a field emission scanning electron microscope (SM-7400F: manufactured by JEOL Ltd.) at an accelerating voltage of 3.00 kV, measuring the interval (cycle) between adjacent two convex portions (or two adjacent concave portions) and the depth of the convex portion (or concave portion) at 10 points, respectively, and averaging the values thus obtained.

The multilayer structure (multilayer laminate body) according to the second aspect of the invention is optimal as a functional article having a fine relief structure on the outermost layer. Examples of such a functional article may include an antireflective article or a water repellent article equipped with the multilayer laminate body according to the second aspect of the invention. In particular, a display or an automotive member equipped with the multilayer laminate body according to the second aspect of the invention is suitable as the functional article.

"Antireflective article"

The antireflective article equipped with the multilayer structure according to the second aspect of the invention is equipped with a multilayer laminate body including an outermost layer having a fine relief structure on the surface as the uppermost layer. This antireflective article exerts high abrasion resistance and favorable antireflective performance. The antireflective article has a configuration in which the multilayer laminate body having a fine relief structure is pasted, for example, on the surface of an target object such as an image display device such as a liquid crystal display device, a plasma display panel, an electroluminescence display, or a cathode ray tube display, a lens, a shop window, or a spectacle lens.

"Water repellent article"

The water repellent article equipped with the multilayer structure according to the second aspect of the invention is equipped with a multilayer laminate body including an outermost layer having a fine relief structure on the surface as the uppermost layer. This water repellent article exerts excellent antireflective performance as well as exhibits high abrasion resistance and favorable water repellency. The water repellent article has a configuration in which the multilayer laminate body having a fine relief structure is pasted, for example, on the surface of a window material, a roof tile, outdoor lighting, a curved mirror, a window for vehicle, or a mirror for vehicle.

In a case in which the part of the above respective target objects to which the multilayer structure is pasted is a three-dimensional shape, the intermediate layer and the outermost layer are formed on a substrate which has a shape corresponding thereto in advance to obtain the multilayer structure and then this multilayer structure may be pasted to the predetermined part of the target object.

In addition, in a case in which the target object is an image display device, it is possible to paste the multilayer laminate body according to the second aspect of the invention not only to the surface thereof but also to the front plate thereof, and it is also possible to configure the front plate itself with the multilayer structure according to the second aspect of the invention.

In addition, the multilayer laminate body according to the second aspect of the invention can also be applied to an optical application such as an optical waveguide, a relief hologram, a lens, or a polarization-separation element, and an application such as a cell culture sheet in addition to the applications described above.

"Mold for transfer of fine relief structure (stamper for transfer of fine relief structure)"

The mold is one which has the inverted structure of a fine relief structure on the surface. Examples of the material for the mold may include a metal (including those having an oxidized film formed on the surface), quartz, glass, a resin, and a ceramic. Examples of the shape of the mold may include a roll shape, a circular tube shape, a flat plate shape, and a sheet shape.

Examples of the method for fabricating the mold may include the method (I-1) and the method (1-2) exemplified as the method for fabricating the mold in the description on the first aspect, and the method (1-1) is particularly preferable from the viewpoint of being able to fabricate a large area mold and simple fabrication.

As the method (I-1), the method including the steps (a) to (f) described in the first aspect is preferable.

Examples of the shape of the pores of the mold may include a substantially conical shape, a pyramid shape, and a cylindrical shape, and a shape in which the pore cross-sectional area in a direction orthogonal to the depth direction continuously decreases in the depth direction from the outermost surface, such as a conical shape or a pyramid shape is preferable.

The average interval w between two adjacent pores (the distance from the center of a pore to the center of an adjacent pore) is preferably equal to or less than the wavelength of visible light, namely, 400 nm or less. This average interval w is more preferably from 140 to 260 nm and particularly preferably from 160 to 200 nm. The average interval w is a value obtained by measuring the interval between two adjacent pores through an electron microscopic observation at 50 points and averaging these values.

The depth d of the pores of the mold is preferably from 120 to 250 nm, more preferably from 150 to 220 nm, and particularly preferably from 160 to 190 nm. The depth d is a value obtained by measuring the distance between the bottommost part of a pore and the topmost part of a convex portion present between the pores adjacent to the above pore as the pores are observed at 30,000 magnifications through an electron microscopic observation. The aspect ratio of the pores (depth d of pores/average interval w between pores) is preferably from 0.7 to 1.4 and more preferably from 0.8 to 1.2.

The surface of the side of the mold where the fine relief structure is formed may be treated with a mold releasing agent. Examples of the mold releasing agent may include a silicone resin, a fluorine resin, a fluorine compound, and an ester of phosphoric acid, and the ester of phosphoric acid is particularly preferable. As the ester of phosphoric acid, a (poly)oxyalkylene alkyl phosphate compound is preferable, and examples of the commercially available product thereof may include "JP-506H" manufactured by JOHOKU CHEMICAL CO., LTD.; "MoldWiz INT-1856" manufactured by Axel Plastics Research Laboratories, Inc.; and "TDP-10", "TDP-8", "TDP-6", "TDP-2", "DDP-10", "DDP-8", "DDP-6", "DDP-4", "DDP-2", "TLP-4", "TCP-5", and "DLP-10" manufactured by Nikko Chemicals Co., Ltd.

EXAMPLES

Hereinafter, the invention will be described in more detail with reference to Examples.

[Test 1]

Various kinds of measurements and evaluation methods in Test 1, a method for fabricating a mold, and components used in the respective Examples are as follows.

"Measurement and evaluation"

(1-1) Measurement of pore of mold

A part of a mold was cut, the surface and longitudinal section of the cut mold was deposited with platinum for 1 minute and observed by enlarging 20,000 times at an accelerating voltage of 3.00 kV using a field emission scanning electron microscope ("JSM-7400F" manufactured by JEOL Ltd.), the interval between adjacent pores (distance from the center of a pore to the center of an adjacent pore) was measured at 50 points, and the average value thereof was adopted as the average interval (cycle) between adjacent pores.

In addition, the longitudinal section of the mold was observed by enlarging 30000 times, and the distance between the bottommost part of a pore to the topmost part of a convex portion present between the pores was measured at 50 points, and the average value thereof was adopted as the average depth of the pores.

(1-2) Measurement of convex portion of fine relief structure

The surface and longitudinal section of the sample to be measured was deposited with platinum for 10 minutes at the point in time when the intermediate layer and the outermost layer were formed and observed by enlarging 20,000 times at an accelerating voltage of 3.00 kV using a field emission scanning electron microscope ("JSM-7400F" manufactured by JEOL Ltd.), the interval between adjacent convex portions (distance from the center of a convex portion to the center of an adjacent convex portion) was measured at 50 points, and the average value thereof was adopted as the average interval (cycle) between adjacent convex portions.

In addition, the cross section of the sample to be measured was observed by enlarging 30,000 times, and the distance between the bottommost part of a convex portion and the topmost part of a concave portion present between the convex portions was measured at 50 points, and the average value thereof was adopted as the average height of the convex portions.

(1-3) Measurement of Martens hardness, elastic modulus, and elastic recovery of cured product of active energy ray curable resin composition

A large size glass slide ("large format glass slide, product number: S9213", size: 76 mm $\times$ 52 mm, manufactured by Matsunami Glass Ind., Ltd.) was used as the substrate. An active energy ray curable resin composition was coated on the substrate such that the thickness of the coating film was about 250 $\mu$m, this was irradiated with ultraviolet light at about 1000 mJ/cm$^2$ using a high pressure mercury lamp, thereby fabricating a test piece having the cured product of an active energy ray curable resin composition formed on a substrate. This was used as the test piece for the measurements of Martens hardness, elastic modulus, and elastic recovery.

The physical properties of the cured product of the test piece were measured by the evaluation program of [pushing (100 mN/10 seconds)] $\rightarrow$ [creeping (100 mN, 10 seconds)] $\rightarrow$ [releasing (100 mN/10 seconds)] using a Vickers indenter (tetrahedral diamond cone) and a micro-hardness tester ("FISHERSCOPE HM2000XYp" manufactured by Fischer Instruments K.K.). The measurement was conducted in a thermostatic room (temperature: 23°C, humidity: 50%).

The Martens hardness, elastic recovery, and elastic modulus of the cured product of the active energy ray curable resin composition were calculated from the measurement results thus obtained by the analytical software ("WIN-HCU" developed by Fischer Instruments K.K.).

(1-4) Measurement of elastic modulus and elastic recovery of outermost layer and intermediate layer of multilayer structure

The multilayer structure was embedded in an epoxy resin, and cut in the layering direction with a diamond knife to expose a smooth cut section. For the cut section (sample), the force curve was measured at a ramp size of 200 nm, a scan speed of 4 Hz, and a force of a pushing load of 30 nN using an AFM ("DimensionV" manufactured by Bruker AXS K.K.) and a cantilever ("MPP-21100" manufactured by Bruker AXS K.K.).

The spring constant of the cantilever was measured using sapphire and the result was 4.08 N/m.

The deformation amount of the sample was determined by the following Equation (I) using the measurement results of the force curve to obtain the load-deformation curve as illustrated in Fig. 7.

$$\text{Deformation amount} = \text{displacement of probe} - \text{deflection of cantilever} \cdots \text{(I)}$$

The elastic recovery was determined by the following Equation (II) based on $\alpha$, $\beta$, and $\gamma$ in Fig. 7. In addition, the elastic modulus was determined by fitting the curve from $\beta$ to $\gamma$ using the Hertz contact equation. At this time, 0.8 nm was adopted as the radius of curvature of the tip of the cantilever and 0.35 was adopted as the Poisson's ratio of the sample.

$$\text{Elastic recovery} = (\text{deformation amount between } \beta \text{ and } \gamma)/(\text{deformation amount between } \alpha \text{ and } \beta) \times 100 \cdots \text{(II)}$$

(1-5) Measurement of film thickness of intermediate layer and outermost layer

The film thickness of the laminate film including a substrate, an intermediate layer, and/or an outermost layer was measured using a micrometer at the point in time when the intermediate layer or the outermost layer was formed, and the film thickness of the film including the substrate or the intermediate layer layered was subtracted therefrom, thereby estimating the film thickness of the intermediate layer and the outermost layer.

(1-6) Evaluation on blocking resistance

Two sheets of laminate film (50 × 50 mm) on which the intermediate layer obtained in the "step 1: formation of intermediate layer" to be described later was layered were overlapped each other such that the surface of the intermediate layer was in contact with the surface of the substrate film on which the intermediate layer was not formed, the overlapped films were left to stand for 1 day in a state in which a load of 800 g was applied thereto, and the blocking resistance thereof was then evaluated according to the following evaluation criteria.

○: films have not stuck together
×: films have stuck together

(1-7) Evaluation on adhesion property

The adhesion property was evaluated in conformity with the cross-cut tape peeling test (JIS K 5600-5-6: 1999 (ISO 2409: 1992)) except that the number of squares was 100 squares and the evaluation criteria were as described below.
First, a transparent black acrylic resin plate ("ACRYLITE EX #502", 50 mm × 60 mm, manufactured by Mitsubishi Rayon Co., Ltd.) having a thickness of 2.0 mm was pasted on the back surface (the back surface of the substrate on which the fine relief structure was not transferred) of the multilayer structure having a fine relief structure on the surface via an optical adhesive, 100 squares (10 × 10) of grid-shaped notches were cut in the surface having the fine relief structure at 2 mm intervals with a cutter knife, and adhesive tape ("CELLOTAPE CT-24 (registered trademark) manufactured by NICHIBAN CO., LTD.) was pasted to the grid-shaped part. Thereafter, the adhesive tape was rapidly peeled off therefrom, the peeling state of the outermost layer and/or the intermediate layer was observed, and the adhesion property was evaluated according to the following evaluation criteria.

○: less than 10 squares out of 100 squares were peeled off
Δ: 10 squares or more and less than 50 squares out of 100 squares were peeled off
×: 50 squares or more out of 100 squares were peeled off

(1-8) Measurement of pencil hardness

The pencil hardness was evaluated in conformity with the scratch hardness (pencil method) described in JIS K 5600-5-4: 1999 (ISO 15184: 1996) except that the load was 500 g.
First, the back surface (the back surface of the substrate on which the fine relief structure was not transferred) of the multilayer structure having a fine relief structure on the surface was fixed so as to be in contact with a transparent glass plate ("large format glass slide, product number: S9112", size: 76 mm × 52 mm, manufactured by Matsunami Glass Ind., Ltd.), the scratch test was conducted using a pencil ("Uni pencil for scratch value test" manufactured by MITSUBISHI PENCIL CO., LTD.) having a hardness of from 2B to 3H, the pencil hardness of the surface of the multilayer structure was measured.

(1-9) Evaluation on abrasion resistance

A steel wool ("Bonsuta #0000" manufactured by NihonSteelWool Co., Ltd.) cut into 2 cm × 2 cm was placed on the surface of the multilayer structure having a fine relief structure on the surface and subjected to reciprocating abrasion 10 times at a travel distance of 30 mm and a head speed of 30 mm/sec by applying a load of 100 g, 400 g, and 1000 g using an abrasion testing machine ("HEiDON TRIBOGEAR TYPE-30S" manufactured by Shinto Scientific Co., Ltd.). The appearance of the surface of the multilayer structure after applying the respective loads was evaluated. Upon the evaluation on appearance, a transparent black acrylic resin plate ("ACRYLITE EX #502", 50 mm × 60 mm, manufactured by Mitsubishi Rayon Co., Ltd.) having a thickness of 2.0 mm was pasted on the back surface (the back surface of the substrate on which the fine relief structure was not transferred) of the multilayer structure via an optical adhesive, the resultant was visually observed under the fluorescent light indoors, and the abrasion resistance was evaluated according to the following criteria.

⊙: scratches are not confirmed
○: scratches confirmed are less than 5, and abraded site is not clouded
Δ: scratches confirmed are 5 or more and less than 20, and abraded site is slightly clouded
×: scratches confirmed are 20 or more, and abraded site is clearly clouded
×*: scratches are not almost confirmed, but outermost layer is peeled off

(1-10) Measurement of haze

A transparent glass plate ("large format glass slide, product number: S9112", size: 76 mm × 52 mm, manufactured by Matsunami Glass Ind., Ltd.) was pasted to the back surface (the back surface of the substrate on which the fine relief structure was not transferred) of the multilayer structure having a fine relief structure on the surface via an optical adhesive, and this was used as the sample. The haze of the sample was measured using a haze meter ("NDH2000" manufactured by NIPPON DENSHOKU INDUSTRIES Co., LTD.) to evaluate the transparency.

(1-11) Measurement of reflectance

A transparent black acrylic resin plate ("ACRYLITE EX #502", 50 mm × 60 mm, manufactured by Mitsubishi Rayon Co., Ltd.) having a thickness of 2.0 mm was pasted on the back surface (the back surface of the substrate on which the fine relief structure was not transferred) of the multilayer structure having a fine relief structure on the surface via an optical adhesive, and this was used as the sample. The relative reflectance on the surface (multilayer structure side) of the sample was measured at an incident angle: 5° (using 5° regular reflection attachment device) in a wavelength range of from 380 to 780 nm using a spectrophotometer ("UV-2450" manufactured by Shimadzu Corporation), the luminous reflectance was calculated in conformity with JIS R 3106: 1998 (ISO 9050: 1990), and the antireflective property was evaluated.

"Fabrication of mold"

(Fabrication of mold A)

An aluminum disk having a purity of 99.99% by mass, a thickness of 2 mm, and a diameter of 65 mm was subjected to fabric polishing and electrolytic polishing, and this was used as the aluminum substrate.
A 0.3 M aqueous solution of oxalic acid was adjusted to 16°C, the aluminum substrate was immersed in this and anodized at a direct current of 40 V for 30 minutes, whereby an oxide film having pores was formed on the aluminum substrate (step (a)).
Subsequently, the aluminum substrate having the oxide film formed thereon was immersed in an aqueous solution prepared by mixing 6% by mass phosphoric acid with 1.8% by mass chromic acid at 70°C for 6 hours, whereby the oxide film was dissolved and removed (step (b)).
The aluminum substrate obtained by dissolving and removing the oxide film was immersed in a 0.3 M aqueous solution of oxalic acid adjusted to 16°C and anodized at 40 V for 30 seconds (step (c)).
Subsequently, the aluminum substrate anodized was immersed in a 5% by mass aqueous solution of phosphoric acid adjusted to 32°C for 8 minutes so as to conduct the pore size enlarging treatment to enlarge the pores of the oxide film (step (d)). The anodization and the pore size enlarging treatment were alternately repeated 5 times in total for each in this manner (steps (e) and (f)), whereby a mold having anodized alumina having pores which have an average interval of 100 nm, an average depth of 180 nm, and a substantially conical shape formed on the surface was obtained.
The mold thus obtained was immersed in a mold releasing agent (a 0.1% by mass aqueous solution of "TDP-8" manufactured by Nikko Chemicals Co., Ltd.) for 10 minutes, and this was withdrawn therefrom and air-dried for the night, whereby the mold A subjected to the mold releasing treatment was obtained.

(Fabrication of mold B)

An aluminum disk having a purity of 99.99% by mass, a thickness of 2 mm, and a diameter of 65 mm was subjected to fabric polishing and electrolytic polishing, and this was used as the aluminum substrate.

A 0.3 M aqueous solution of oxalic acid was adjusted to 15°C, the aluminum substrate was immersed in this, and the ON/OFF operation of the power supply of the direct current stabilizing apparatus was repeated to intermittently flow current to the aluminum substrate, whereby the aluminum substrate was anodized. The operation to apply a constant voltage of 80 V for 5 seconds every 30 seconds was repeated 60 times, whereby an oxide film having pores was formed on the aluminum substrate (step (a)).

Subsequently, the aluminum substrate having the oxide film formed thereon was immersed in an aqueous solution prepared by mixing 6% by mass phosphoric acid with 1.8% by mass chromic acid at 70°C for 6 hours, whereby the oxide film was dissolved and removed (step (b)).

The aluminum substrate obtained by dissolving and removing the oxide film was immersed in a 0.05 M aqueous solution of oxalic acid adjusted to 16°C and anodized at 80 V for 7 seconds (step (c)).

Subsequently, the aluminum substrate was immersed in a 5% by mass aqueous solution of phosphoric acid adjusted to 32°C for 20 minutes so as to conduct the pore size enlarging treatment to enlarge the pores of the oxide film (step (d)). The anodization and the pore size enlarging treatment were alternately repeated 5 times in total for each in this manner (steps (e) and (f)), whereby a mold having anodized alumina having pores with an average interval of 180 nm, an average depth of 180 nm, and a substantially conical shape formed on the surface was obtained.

The mold thus obtained was immersed in a mold releasing agent (a 0.1% by mass aqueous solution of "TDP-8" manufactured by Nikko Chemicals Co., Ltd.) for 10 minutes, and this was withdrawn therefrom and air-dried for the night, whereby the mold B subjected to the mold releasing treatment was obtained.

"Preparation of active energy ray curable resin composition"

(Preparation of active energy ray curable resin composition A)

The active energy ray curable resin composition A (resin composition A) was prepared by mixing, 60 parts by mass of dipentaerythritol hexaacrylate ("DPHA" manufactured by Nippon Kayaku Co., Ltd.), 30 parts by mass of pentaerythritol triacrylate ("New frontier PET-3" manufactured by DKS Co., Ltd.), 10 parts by mass of polyethylene glycol diacrylate ("M-260" manufactured by TOAGOSEI CO., LTD.), and 1] part by mass of a mixture of tetrafunctional silicone acrylate/propylene oxide-modified neopentyl glycol diacrylate (mixing ratio: 7/3) ("BYK-3570" manufactured by BYK-Chemie GmbH) as the polymerizable component, 3.0 parts by mass of 1-hydroxycyclohexyl phenyl ketone ("IRGACURE 184" manufactured by Ciba Japan K.K.) and 0.5 part by mass of bis(2,4,6-trimethylbenzoyl)-phenylphosphine oxide ("IRGACURE 819" manufactured by Ciba Japan K.K.) as the polymerization initiator, and 0.1 part by mass of a polyoxyethylene alkyl ether phosphate compound ("TDP-2" manufactured by Nikko Chemicals Co., Ltd.) as the mold releasing agent.

(Preparation of active energy ray curable resin composition B)

The active energy ray curable resin composition B (resin composition B) was prepared by mixing, 40 parts by mass of dipentaerythritol hexaacrylate ("DPHA" manufactured by Nippon Kayaku Co., Ltd.), 44 parts by mass of pentaerythritol triacrylate ("New frontier PET-3" manufactured by DKS Co., Ltd.), 10 parts by mass of polyethylene glycol diacrylate ("M-260" manufactured by TOAGOSEI CO., LTD.), 5 parts by mass of N,N-dimethylacrylamide ("DMAA" manufactured by KOHJIN film and Chemicals Co., LTD.), and 1 part by mass of a mixture of tetrafunctional silicone acrylate/propylene oxide-modified neopentyl glycol diacrylate (mixing ratio: 7/3) ("BYK-3570" manufactured by BYK-Chemie GmbH) as the polymerizable component, 1.0 part by mass of 1-hydroxycyclohexyl phenyl ketone ("IRGACURE 184" manufactured by Ciba Japan K.K.) and 0.5 part by mass of bis(2,4,6-trimethylbenzoyl)-phenylphosphine oxide ("IRGACURE 819" manufactured by Ciba Japan K.K.) as the polymerization initiator, and 0.1 part by mass of a polyoxyethylene alkyl ether phosphate compound ("TDP-2" manufactured by Nikko Chemicals Co., Ltd.) as the mold releasing agent.

(Preparation of active energy ray curable resin composition C)

The active energy ray curable resin composition C (resin composition C) was prepared by mixing, 50 parts by mass of a multifunctional urethane acrylate ("New frontier R-1150D" manufactured by DKS Co., Ltd.), 10 parts by mass of caprolactone-modified dipentaerythritol hexaacrylate ("DPCA-30" manufactured by Nippon Kayaku Co., Ltd.), and 40 parts by mass of 1,6-hexanediol diacrylate ("Viscoat #230" manufactured by OSAKA ORGANIC CHEMICAL INDUSTRY LTD.) as the polymerizable component, 3.0 parts by mass of 1-hydroxycyclohexyl phenyl ketone ("IRGACURE 184" manufactured by Ciba Japan K.K.) and 1.0 part by mass of bis(2,4,6-trimethylbenzoyl)-phenylphosphine oxide ("IRGACURE 819" manufactured by Ciba Japan K.K.) as the polymerization initiator, and 0.1 part by mass of a polyoxyethylene alkyl ether phosphate compound ("TDP-2" manufactured by Nikko Chemicals Co., Ltd.) as the mold releasing agent.

(Preparation of active energy ray curable resin composition D)

The active energy ray curable resin composition D (resin composition D) was prepared by mixing, 50 parts by mass of dipentaerythritol hexaacrylate ("DPHA" manufactured by Nippon Kayaku Co., Ltd.), 25 parts by mass of polyethylene glycol diacrylate ("M-260" manufactured by TOAGOSEI CO., LTD.), and 25 parts by mass of an EO-modified compound of dipentaerythritol hexaacrylate ("DPEA-12" manufactured by Nippon Kayaku Co., Ltd.) as the polymerizable component, 1.0 part by mass of 1-hydroxycyclohexyl phenyl ketone ("IRGACURE 184" manufactured by Ciba Japan K.K.) and 0.5 part by mass of bis(2,4,6-trimethylbenzoyl)-phenylphosphine oxide ("IRGACURE 819" manufactured by Ciba Japan K.K.) as the polymerization initiator, and 0.1 part by mass of a polyoxyethylene alkyl ether phosphate compound ("TDP-2" manufactured by Nikko Chemicals Co., Ltd.) as the mold releasing agent.

(Preparation of active energy ray curable resin composition E)

The active energy ray curable resin composition E (resin composition E) was prepared by mixing, 25 parts by mass of dipentaerythritol hexaacrylate ("DPHA" manufactured by Nippon Kayaku Co., Ltd.), 25 parts by mass of pentaerythritol triacrylate ("New frontier PET-3" manufactured by DKS Co., Ltd.), 25 parts by mass of polyethylene glycol diacrylate ("M-260" manufactured by TOAGOSEI CO., LTD.), and 25 parts by mass of an EO-modified compound of dipentaerythritol hexaacrylate ("DPEA-12" manufactured by Nippon Kayaku Co., Ltd.) as the polymerizable component, 1.0 part by mass of 1-hydroxycyclohexyl phenyl ketone ("IRGACURE 184" manufactured by Ciba Japan K.K.) and 0.5 part by mass of bis(2,4,6-trimethylbenzoyl)-phenylphosphine oxide ("IRGACURE 819" manufactured by Ciba Japan K.K.) as the polymerization initiator, and 0.1 part by mass of a polyoxyethylene alkyl ether phosphate compound ("TDP-2" manufactured by Nikko Chemicals Co., Ltd.) as the mold releasing agent.

(Preparation of active energy ray curable resin composition F)

The active energy ray curable resin composition F (resin composition F) was prepared by mixing, 75 parts by mass of a condensed ester of anhydrous succinic acid/trimethylolethane/acrylic acid (molar ratio of 1 : 2 : 4) ("TAS" manufactured by OSAKA ORGANIC CHEMICAL INDUSTRY LTD.), 20 parts by mass of polyethylene glycol diacrylate ("M-260" manufactured by TOAGOSEI CO., LTD.), and 5 parts by mass of methyl acrylate as the polymerizable component, 1.0 part by mass of 1-hydroxycyclohexyl phenyl ketone ("IRGACURE 184" manufactured by Ciba Japan K.K.) and 0.5 part by mass of bis(2,4,6-trimethylbenzoyl)-phenylphosphine oxide ("IRGACURE 819" manufactured by Ciba Japan K.K.) as the polymerization initiator, and 0.1 part by mass of a polyoxyethylene alkyl ether phosphate compound ("TDP-2" manufactured by Nikko Chemicals Co., Ltd.) as the mold releasing agent.

(Preparation of active energy ray curable resin composition G)

The active energy ray curable resin composition G (resin composition G) was prepared by mixing, 20 parts by mass of pentaerythritol triacrylate ("New frontier PET-3" manufactured by DKS Co., Ltd.) and 80 parts by mass of ethoxylated pentaerythritol tetraacrylate ("ATM-35E" manufactured by SHIN-NAKAMURA CHEMICAL CO., LTD.) as the polymerizable component, 1.0 part by mass of 1-hydroxycyclohexyl phenyl ketone ("IRGACURE 184" manufactured by Ciba Japan K.K.) and 0.5 part by mass of bis(2,4,6-trimethylbenzoyl)-phenylphosphine oxide ("IRGACURE 819" manufactured by Ciba Japan K.K.) as the polymerization initiator, and 0.1 part by mass of a polyoxyethylene alkyl ether phosphate compound ("TDP-2" manufactured by Nikko Chemicals Co., Ltd.) as the mold releasing agent.

(Preparation of active energy ray curable resin composition H)

The active energy ray curable resin composition H (resin composition H) was prepared by mixing, 30 parts by mass of polyethylene glycol diacrylate ("M-260" manufactured by TOAGOSEI CO., LTD.) and 70 parts by mass of an EO-modified compound of dipentaerythritol hexaacrylate ("DPEA-12" manufactured by Nippon Kayaku Co., Ltd.) as the polymerizable component, 1.0 part by mass of 1-hydroxycyclohexyl phenyl ketone ("IRGACURE 184" manufactured by Ciba Japan K.K.) and 0.5 part by mass of bis(2,4,6-trimethylbenzoyl)-phenylphosphine oxide ("IRGACURE 819" manufactured by Ciba Japan K.K.) as the polymerization initiator, and 0.1 part by mass of a polyoxyethylene alkyl ether phosphate compound ("TDP-2" manufactured by Nikko Chemicals Co., Ltd.) as the mold releasing agent.

"Example 1-1"

(Step 1: formation of intermediate layer)

Few drops of the resin composition A was dropped on the surface of the mold A. The resin composition A was covered with a triacetyl cellulose film ("TD80ULM" manufactured by FUJIFILM Corporation, hereinafter also referred to as the "TAC film") having a thickness of 80 $\mu$m as the substrate while pressing and spreading the resin composition A with the TAC film. Thereafter, the resin composition A was cured by being irradiated with ultraviolet light at energy of 1000 mJ/cm$^2$ from the TAC film side using a UV irradiating device (manufactured by Heraeus Noblelight BmbH). The cured product of the resin composition A was released from the mold A together with the TAC film, whereby a laminate film in which an intermediate layer having a fine relief structure having an average interval (cycle) between adjacent convex portions of 100 nm and an average height of the convex portions of 180 nm (aspect ratio: 1.8) on the surface and a film thickness of 5 $\mu$m was layered on the substrate was obtained.

The laminate film thus obtained was subjected to the evaluation on blocking resistance. The result is presented in Table 2.

(Step 2: formation of outermost layer)

Few drops of the resin composition D was dropped on the surface of the mold A. The resin composition D was covered with the laminate film previously obtained while pressing and spreading the resin composition D with the laminate film. Thereafter, the resin composition D was cured by being irradiated with ultraviolet light at energy of 1000 mJ/cm$^2$ from the laminate film side using a UV irradiating device (manufactured by Heraeus Noblelight BmbH). The cured product of the resin composition D was released from the mold A together with the laminate film, whereby a film-shaped multilayer structure in which an outermost layer having a fine relief structure having an average interval (cycle) between adjacent convex portions of 100 nm and an average height of the convex portions of 180 nm (aspect ratio: 1.8) on the surface and a film thickness of 4 $\mu$m was layered on the intermediate layer of the laminate film was obtained.

The Martens hardness, elastic modulus, and elastic recovery of the cured product of the resin composition used in steps 1 and 2 were measured. The results are presented in Table 1.

The multilayer structure thus obtained was subjected to the evaluation on adhesion property, pencil hardness, and abrasion resistance and to the measurements of reflectance and haze. The results are presented in Table 2.

"Examples 1-2"

The multilayer structure was produced in the same manner as in Example 1-1 except that the resin composition D was changed to the resin composition E in the step 2, and the multilayer structure thus obtained was subjected to various kinds of measurements and evaluations. The results are presented in Tables 1 and 2.

Incidentally, the average intervals of adjacent convex portions, average heights of the convex portions, and aspect ratios of the fine relief structures formed on the surfaces of the intermediate layer and the outermost layer were the same as those in Example 1-1.

"Example 1-3"

The multilayer structure was produced in the same manner as in Example 1-1 except that the mold A was changed to mold B, the resin composition A was changed to the resin composition B, and the film thickness of the intermediate layer was changed so as to be 7 $\mu$m in the step 1, and the multilayer structure thus obtained was subjected to various kinds of measurements and evaluations. The results are presented in Tables 1 and 2. In addition, the elastic modulus and elastic recovery of the outermost layer and the intermediate layer of the multilayer structure thus obtained were measured. The results are presented in Table 5.

Incidentally, the average interval of adjacent convex portions, average height of the convex portions, and aspect ratio of the fine relief structure formed on the surface of the intermediate layer were 180 nm, 180 nm, and 1.0, respectively, and the average interval of adjacent convex portions, average height of the convex portions, and aspect ratio of the fine relief structure formed on the surface of the outermost layer were the same as those in Example 1-1.

"Example 1-4"

The multilayer structure was produced in the same manner as in Example 1-1 except that the mold A was changed to mold B, the resin composition A was changed to the resin composition B, and the film thickness of the intermediate layer was changed so as to be 7 $\mu$m in the step 1 and the resin composition D was changed to the resin composition E in the step 2, and the multilayer structure thus obtained was subjected to various kinds of measurements and evaluations. The results are presented in Tables 1 and 2.

Incidentally, the average interval of adjacent convex portions, average height of the convex portions, and aspect ratio of the fine relief structure formed on the surface of the intermediate layer were the same as those in Example 1-3 and the average interval of adjacent convex portions, average height of the convex portions, and aspect ratio of the fine relief structure formed on the surface of the outermost layer were the same as those in Example 1-1.

"Example 1-5"

The multilayer structure was produced in the same manner as in Example 1-1 except that the mold A was changed to an aluminum substrate which did not have the inverted structure of a fine relief structure formed on the surface but has a mirror surface (hereinafter, simply referred to as the "aluminum substrate with a mirror surface") in the step 1, and the multilayer structure thus obtained was subjected to various kinds of measurements and evaluations. The results are presented in Tables 1 and 2.

Incidentally, the average interval of adjacent convex portions, average height of the convex portions, and aspect ratio of the fine relief structure formed on the surface of the outermost layer were the same as those in Example 1-1.

"Example 1-6"

The multilayer structure was produced in the same manner as in Example 1-1 except that the resin composition A was changed to the resin composition C, and the film thickness of the intermediate layer was changed so as to be 7 $\mu$m in the step 1, and the multilayer structure thus obtained was subjected to various kinds of measurements and evaluations. The results are presented in Tables 1 and 2.

Incidentally, the average intervals of adjacent convex portions, average heights of the convex portions, and aspect ratios of the fine relief structures formed on the surfaces of the intermediate layer and the outermost layer were the same as those in Example 1-1.

"Comparative Example 1-1"

The multilayer structure was produced in the same manner as in Example 1-1 except that the mold A was changed to mold B, the resin composition A was changed to the resin composition B, and the film thickness of the intermediate layer was changed so as to be 7 $\mu$m in the step 1 and the resin composition D was changed to the resin composition C in the step 2, and the multilayer structure thus obtained was subjected to various kinds of measurements and evaluations. The results are presented in Tables 1 and 2.

Incidentally, the average interval of adjacent convex portions, average height of the convex portions, and aspect ratio of the fine relief structure formed on the surface of the intermediate layer were the same as those in Example 1-3 and the average interval of adjacent convex portions, average height of the convex portions, and aspect ratio of the fine relief structure formed on the surface of the outermost layer were the same as those in Example 1-1.

"Comparative Example 1-2"

The multilayer structure was produced in the same manner as in Example 1-1 except that the mold A was changed to mold B, the resin composition A was changed to the resin composition B, and the film thickness of the intermediate layer was changed so as to be 7 $\mu$m in the step 1 and the resin composition D was changed to the resin composition F in the step 2, and the multilayer structure thus obtained was subjected to various kinds of measurements and evaluations. The results are presented in Tables 1 and 2.

Incidentally, the average interval of adjacent convex portions, average height of the convex portions, and aspect ratio of the fine relief structure formed on the surface of the intermediate layer were the same as those in Example 1-3 and the average interval of adjacent convex portions, average height of the convex portions, and aspect ratio of the fine relief structure formed on the surface of the outermost layer were the same as those in Example 1-1.

"Reference Example 1-1"

The multilayer structure was produced in the same manner as in Example 1-1 except that the intermediate layer was not provided in the step 1 and the film thickness of the outermost layer was changed so as to be 13 $\mu$m in the step 2, and the multilayer structure thus obtained was subjected to various kinds of measurements and evaluations. The results are presented in Tables 1 and 2.

Incidentally, the average interval of adjacent convex portions, average height of the convex portions, and aspect ratio of the fine relief structure formed on the surface of the outermost layer were the same as those in Example 1-1.

"Reference Example 1-2"

The multilayer structure was produced in the same manner as in Example 1-1 except that the intermediate layer was not provided in the step 1 and the resin composition D was changed to the resin composition E and the film thickness of the outermost layer was changed so as to be 11 μm in the step 2, and the multilayer structure thus obtained was subjected to various kinds of measurements and evaluations. The results are presented in Tables 1 and 2.
Incidentally, the average interval of adjacent convex portions, average height of the convex portions, and aspect ratio of the fine relief structure formed on the surface of the outermost layer were the same as those in Example 1-1.

"Example 1-7"

The multilayer structure was produced in the same manner as in Example 1-1 except that the mold A was changed to mold B and the resin composition D was changed to the resin composition G in the step 2, and the multilayer structure thus obtained was subjected to various kinds of measurements and evaluations. The results are presented in Tables 3 and 4.
Incidentally, the average interval of adjacent convex portions, average height of the convex portions, and aspect ratio of the fine relief structure formed on the surface of the intermediate layer were the same as those in Example 1-1 and the average interval of adjacent convex portions, average height of the convex portions, and aspect ratio of the fine relief structure formed on the surface of the outermost layer were 180 nm, 180 nm, and 1.0, respectively.

"Example 1-8"

The multilayer structure was produced in the same manner as in Example 1-1 except that the mold A was changed to mold B and the resin composition D was changed to the resin composition H in the step 2, and the multilayer structure thus obtained was subjected to various kinds of measurements and evaluations. The results are presented in Tables 3 and 4.
Incidentally, the average interval of adjacent convex portions, average height of the convex portions, and aspect ratio of the fine relief structure formed on the surface of the intermediate layer were the same as those in Example 1-1 and the average interval of adjacent convex portions, average height of the convex portions, and aspect ratio of the fine relief structure formed on the surface of the outermost layer were the same as those in Example 1-6.

"Example 1-9"

The multilayer structure was produced in the same manner as in Example 1-1 except that the resin composition A was changed to the resin composition B and the film thickness of the intermediate layer was changed so as to be 7 μm in the step 1 and the mold A was changed to mold B and the resin composition D was changed to the resin composition G in the step 2, and the multilayer structure thus obtained was subjected to various kinds of measurements and evaluations. The results are presented in Tables 3 and 4. In addition, the elastic modulus and elastic recovery of the outermost layer and the intermediate layer of the multilayer structure thus obtained were measured. The results are presented in Table 5.
Incidentally, the average interval of adjacent convex portions, average height of the convex portions, and aspect ratio of the fine relief structure formed on the surface of the intermediate layer were the same as those in Example 1-3, and the average interval of adjacent convex portions, average height of the convex portions, and aspect ratio of the fine relief structure formed on the surface of the outermost layer were the same as those in Example 1-6.

"Example 1-10"

The multilayer structure was produced in the same manner as in Example 1-1 except that the resin composition A was changed to the resin composition B and the film thickness of the intermediate layer was changed so as to be 7 μm in the step 1 and the mold A was changed to mold B and the resin composition D was changed to the resin composition H in the step 2, and the multilayer structure thus obtained was subjected to various kinds of measurements and evaluations. The results are presented in Tables 3 and 4.
Incidentally, the average interval of adjacent convex portions, average height of the convex portions, and aspect ratio of the fine relief structure formed on the surface of the intermediate layer were the same as those in Example 1-3, and the average interval of adjacent convex portions, average height of the convex portions, and aspect ratio of the fine relief structure formed on the surface of the outermost layer were the same as those in Example 1-6.

"Example 1-11"

The multilayer structure was produced in the same manner as in Example 1-1 except that the resin composition A was changed to the resin composition C and the film thickness of the intermediate layer was changed so as to be 7 μm in the step 1 and the mold A was changed to mold B and the resin composition D was changed to the resin composition G in the step 2, and the multilayer structure thus obtained was subjected to various kinds of measurements and evaluations. The results are presented in Tables 3 and 4.
Incidentally, the average interval of adjacent convex portions, average height of the convex portions, and aspect ratio of the fine relief structure formed on the surface of the intermediate layer were the same as those in Example 1-1, and the average interval of adjacent convex portions, average height of the convex portions, and aspect ratio of the fine relief structure formed on the surface of the outermost layer were the same as those in Example 1-6.

"Example 1-12"

The multilayer structure was produced in the same manner as in Example 1-1 except that the resin composition A was changed to the resin composition C and the film thickness of the intermediate layer was changed so as to be 7 μm in the step 1 and the mold A was changed to mold B and the resin composition D was changed to the resin composition H in the step 2, and the multilayer structure thus obtained was subjected to various kinds of measurements and evaluations. The results are presented in Tables 3 and 4.
Incidentally, the average interval of adjacent convex portions, average height of the convex portions, and aspect ratio of the fine relief structure formed on the surface of the intermediate layer were the same as those in Example 1-1, and the average interval of adjacent convex portions, average height of the convex portions, and aspect ratio of the fine relief structure formed on the surface of the outermost layer were the same as those in Example 1-6.

"Example 1-13"

The multilayer structure was produced in the same manner as in Example 1-1 except that the resin composition A was changed to the resin composition E and the film thickness of the intermediate layer was changed so as to be 7 μm in the step 1 and the mold A was changed to mold B and the resin composition D was changed to the resin composition G in the step 2, and the multilayer structure thus obtained was subjected to various kinds of measurements and evaluations. The results are presented in Tables 3 and 4.
Incidentally, the average interval of adjacent convex portions, average height of the convex portions, and aspect ratio of the fine relief structure formed on the surface of the intermediate layer were the same as those in Example 1-1, and the average interval of adjacent convex portions, average height of the convex portions, and aspect ratio of the fine relief structure formed on the surface of the outermost layer were the same as those in Example 1-6.

"Example 1-14"

The multilayer structure was produced in the same manner as in Example 1-1 except that the resin composition A was changed to the resin composition E and the film thickness of the intermediate layer was changed so as to be 7 μm in the step 1 and the mold A was changed to mold B and the resin composition D was changed to the resin composition H in the step 2, and the multilayer structure thus obtained was subjected to various kinds of measurements and evaluations. The results are presented in Tables 3 and 4.
Incidentally, the average interval of adjacent convex portions, average height of the convex portions, and aspect ratio of the fine relief structure formed on the surface of the intermediate layer were the same as those in Example 1-1, and the average interval of adjacent convex portions, average height of the convex portions, and aspect ratio of the fine relief structure formed on the surface of the outermost layer were the same as those in Example 1-6.

"Example 1-15"

The multilayer structure was produced in the same manner as in Example 1-1 except that the mold A was changed to an aluminum substrate with a mirror surface in the step 1 and the mold A was changed to mold B and the resin composition D was changed to the resin composition G in the step 2, and the multilayer structure thus obtained was subjected to various kinds of measurements and evaluations. The results are presented in Tables 3 and 4.
Incidentally, the average interval of adjacent convex portions, average height of the convex portions, and aspect ratio of the fine relief structure formed on the surface of the outermost layer were the same as those in Example 1-6.

"Comparative Example 1-3"

The multilayer structure was produced in the same manner as in Example 1-1 except that the intermediate layer was not provided in the step 1 and the mold A was changed to mold B, the resin composition D was changed to the resin composition G, and the film thickness of the outermost layer was changed so as to be 10 $\mu$m in the step 2, and the multilayer structure thus obtained was subjected to various kinds of measurements and evaluations. The results are presented in Tables 3 and 4.

Incidentally, the average interval of adjacent convex portions, average height of the convex portions, and aspect ratio of the fine relief structure formed on the surface of the outermost layer were the same as those in Example 1-6.

"Comparative Example 1-4"

The multilayer structure was produced in the same manner as in Example 1-1 except that the intermediate layer was not provided in the step 1 and the mold A was changed to mold B, the resin composition D was changed to the resin composition H, and the film thickness of the outermost layer was changed so as to be 10 $\mu$m in the step 2, and the multilayer structure thus obtained was subjected to various kinds of measurements and evaluations. The results are presented in Tables 3 and 4.

Incidentally, the average interval of adjacent convex portions, average height of the convex portions, and aspect ratio of the fine relief structure formed on the surface of the outermost layer were the same as those in Example 1-6.

[Table 1]

| | Substrate | Intermediate layer | | | | | | Outermost layer | | | | | |
| --- | --- | --- | --- | --- | --- | --- | --- | --- | --- | --- | --- | --- | --- |
| | | Mold | Resin composition | Martens hardness [N/mm²] | Elastic modulus [MPa] | Elastic recovery [%] | Film thickness [mm] | Mold | Resin composition | Martens hardness [N/mm²] | Elastic modulus [MPa] | Elastic recovery [%] | Film thickness [mm] |
| Example 1-1 | TAC | A | A | 217 | 3461 | 73 | 5 | A | D | 139 | 2170 | 77 | 4 |
| Example 1-2 | TAC | A | A | 217 | 3461 | 73 | 5 | A | E | 128 | 2034 | 73 | 4 |
| Example 1-3 | TAC | B | B | 220 | 3778 | 67 | 7 | A | D | 139 | 2170 | 77 | 4 |
| Example 1-4 | TAC | B | B | 220 | 3778 | 67 | 7 | A | E | 128 | 2034 | 73 | 4 |
| Example 1-5 | TAC | Mirror surface | A | 217 | 3461 | 73 | 5 | A | D | 139 | 2170 | 77 | 4 |
| Example 1-6 | TAC | A | C | 170 | 2924 | 67 | 7 | A | D | 139 | 2170 | 77 | 4 |
| Comparative Example 1-1 | TAC | B | B | 220 | 3778 | 67 | 7 | A | C | 170 | 2924 | 67 | 4 |
| Comparative Example 1-2 | TAC | B | B | 220 | 3778 | 67 | 7 | A | F | 101 | 2005 | 49 | 4 |
| Reference Example 1-1 | TAC | - | - | - | - | - | - | A | D | 139 | 2170 | 77 | 13 |
| Reference Example 1-2 | TAC | - | - | - | - | - | - | A | E | 128 | 2034 | 73 | 11 |

EP 2 982 502 A1

[Table 2]

| | Evaluation | | | | | | | |
|---|---|---|---|---|---|---|---|---|
| | Blocking resistance | Close contact property | Pencil hardness | Abrasion resistance | | | Transparency | Antireflective performance |
| | | | | SW 250 g/cm$^2$ | SW 100 g/cm$^2$ | SW 25 g/cm$^2$ | Haze [%] | Luminous reflectance [%] |
| Example 1-1 | ○ | ○ | 3H | × | × | ○ | 0.6 | 0.1 |
| Example 1-2 | ○ | ○ | 3H | × | × | ○ | 0.5 | 0.1 |
| Example 1-3 | ○ | ○ | 3H | × | × | ○ | 0.7 | 0.1 |
| Example 1-4 | ○ | ○ | 3H | × | × | ○ | 0.6 | 0.1 |
| Example 1-5 | ○ | × | 3H | × | × | ○ | 0.6 | 0.1 |
| Example 1-6 | ○ | ○ | H | × | × | ○ | 0.7 | 0.1 |
| Comparative Example 1-1 | ○ | ○ | 2H | × | × | Δ | 0.7 | 0.1 |
| Comparative Example 1-2 | ○ | ○ | 2H | × | × | × | 0.7 | 0.1 |
| Reference Example 1-1 | - | ○ | H | × | × | ○ | 0.6 | 0.1 |
| Reference Example 1-2 | - | ○ | H | × | × | ○ | 0.7 | 0.1 |

[Table 3]

| | Substrate | Intermediate layer | | | | | | Outermost layer | | | | | |
| --- | --- | --- | --- | --- | --- | --- | --- | --- | --- | --- | --- | --- | --- |
| | | Mold | Resin composition | Martens hardness [N/mm²] | Elastic modulus [MPa] | Elastic re-covery [%] | Film thick-ness [mm] | Mold | Resin compo-sition | Martens hardness [N/mm²] | Elastic modulus [MPa] | Elastic re-covery [%] | Film thick-ness [mm] |
| Example 1-7 | TAC | A | A | 217 | 3461 | 73 | 5 | B | G | 14 | 199 | 94 | 4 |
| Example 1-8 | TAC | A | A | 217 | 3461 | 73 | 5 | B | H | 31 | 457 | 83 | 4 |
| Example 1-9 | TAC | A | B | 220 | 3778 | 67 | 7 | B | G | 14 | 199 | 94 | 4 |
| Example 1-10 | TAC | A | B | 220 | 3778 | 67 | 7 | B | H | 31 | 457 | 83 | 4 |
| Example 1-11 | TAC | A | C | 170 | 2924 | 67 | 7 | B | G | 14 | 199 | 94 | 4 |
| Example 1-12 | TAC | A | C | 170 | 2924 | 67 | 7 | B | H | 31 | 457 | 83 | 4 |
| Example 1-13 | TAC | A | E | 128 | 2034 | 73 | 7 | B | G | 14 | 199 | 94 | 4 |
| Example 1-14 | TAC | A | E | 128 | 2034 | 73 | 7 | B | II | 31 | 457 | 83 | 4 |
| Example 1-15 | TAC | Mirror surface | A | 217 | 3461 | 73 | 5 | B | G | 14 | 199 | 94 | 4 |
| Reference Example 1-3 | TAC | - | - | - | - | - | - | B | G | 14 | 199 | 94 | 10 |
| Reference Example 1-4 | TAC | - | - | - | - | - | - | B | H | 31 | 457 | 83 | 10 |

[Table 4]

| | | | | Abrasion resistance | | | Transparency | Antireflective performance |
|---|---|---|---|---|---|---|---|---|
| | Blocking resistance | Close contact property | Pencil hardness | SW 250 g/cm² | SW 100 g/cm² | SW 25 g/cm² | Haze [%] | Luminous reflectance [%] |
| Example 1-7 | ○ | ○ | 3H | ○ | ◎ | ◎ | 0.8 | 0.1 |
| Example 1-8 | ○ | ○ | 3H | × | ○ | ◎ | 0.9 | 0.1 |
| Example 1-9 | ○ | ○ | 2H | ○ | ◎ | ◎ | 0.8 | 0.1 |
| Example 1-10 | ○ | ○ | 2H | × | ○ | ◎ | 0.9 | 0.1 |
| Example 1-11 | ○ | ○ | H | ○ | ◎ | ◎ | 0.9 | 0.1 |
| Example 1-12 | ○ | ○ | H | × | ○ | ◎ | 0.9 | 0.1 |
| Example 1-13 | ○ | ○ | H | ○ | ◎ | ○ | 0.9 | 0.1 |
| Example 1-14 | ○ | ○ | H | × | ○ | ◎ | 0.9 | 0.1 |
| Example 1-15 | ○ | × | 3H | ×* | ×* | ◎ | 0.9 | 0.1 |
| Reference Example 1-3 | - | ○ | 2B | ○ | ◎ | ◎ | 0.8 | 0.1 |
| Reference Example 1-4 | - | ○ | HB | × | ○ | ◎ | 0.9 | 0.1 |

[Table 5]

| | | Elastic recovery [%] | Elastic modulus [MPa] |
|---|---|---|---|
| Example 1-3 | Outermost layer | 78 | 3818 |
| | Intermediate layer | 71 | 4406 |
| Example 1-9 | Outermost layer | 80 | 212 |
| | Intermediate layer | 71 | 4406 |

Incidentally, the "TAC" in Tables 1 and 3 means the TAC film, and the "mirror surface" refers to the aluminum substrate with a mirror surface.

In addition, the "SW" in Tables 2 and 4 means the steel wool, and for example the "250 g/cm²" means that a load of 250 g is applied per unit area of the steel wool.

As can be seen from the results in Tables 1 to 4, the multilayer structures of Examples 1-1 to 1-15 obtained by sequentially layering an intermediate layer formed of a resin having specific physical properties and an outermost layer which had a fine relief structure on the surface and was formed of a resin having specific physical properties on a substrate had a high pencil hardness and exhibited favorable abrasion resistance, antireflective property, and transparency. In addition, the intermediate layers formed in Examples 1-1 to 1-15 exhibited blocking resistance.

In particular, the multilayer structures of Examples 1-1 to 1-4 and 1-6 to 1-14 which have a fine relief structure on the surface of the intermediate layer as well exhibited favorable adhesion property.

Incidentally, the multilayer structure of Example 1-6 in which the Martens hardness of the intermediate layer was 170 N/mm$^2$ and the elastic recovery of the outermost layer was 77% exhibited the same degree of adhesion property, abrasion resistance, antireflective property, and transparency as those of Examples 1-1 to 1-4 but had a lower pencil hardness as compared with Examples 1-1 to 1-4 so as to leave an indentation during the test at a hardness of 2H.

On the other hand, the multilayer structures of Comparative Examples 1-1 and 1-2 in which the elastic recovery of the resin forming the outermost layer was less than 70% exhibited the same degree of adhesion property, pencil hardness, antireflective property, and transparency as those of Examples 1-1 to 1-4 but were inferior in abrasion resistance so as to be conspicuously scratched during the test at a load of 25 g/cm$^2$.

In addition, as can be seen from Reference Examples 1-1 and 1-2, the multilayer structures fabricated in the same manner as in Examples 1-1 to 1-4 except that an intermediate layer was not formed exhibited the same degree of adhesion property, abrasion resistance, antireflective property, and transparency as those of Examples 1-1 to 1-4 but had a lower pencil hardness so as to leave an indentation during the test at a hardness of 2H. Incidentally, the multilayer structure of Reference Example 1-1 had the same degree of pencil hardness as the multilayer structure of Example 1-6, but the thickness of the outermost layer thereof was thicker than the total thickness of the intermediate layer and the outermost layer in Examples 1-6. From this result, it has been indicated that the thickness of the outermost layer in a case in which an intermediate layer is not formed is required to be increased in order to exert the same degree of pencil hardness as in the case of forming an intermediate layer, and thus the thickness of the entire multilayer structure increases.

In addition, as can be seen from Reference Examples 1-3 and 1-4, the multilayer structures fabricated in the same manner as in Examples 1-7 to 1-14 except that an intermediate layer was not formed exhibited the same degree of adhesion property, abrasion resistance, antireflective property, and transparency as those of Examples 1-7 to 1-14 but had a lower pencil hardness.

In addition, as can be seen from Tables 1, 3, and 5, it has been found that there is no significant difference in the measurement results of the elastic recovery and elastic modulus of the outermost layer and the intermediate layer when the elastic recovery and elastic modulus of the cured product of the material (active energy ray curable resin composition) constituting each layer measured using a micro-hardness tester are compared with those of each layer measured in the state of a multilayer structure using an AFM.

[Test 2]

Various kinds of measurements and evaluation methods in Test 2, and the method for fabricating a mold (stamper) are as follows.

"Measurement and evaluation"

(2-1) Abrasion resistance of multilayer laminate body

A steel wool ("Bonsuta #0000" manufactured by NihonSteelWool Co., Ltd.) cut into 2 cm × 2 cm was placed on the surface of the article and reciprocated 10 times at a travel distance: 30 mm and a head speed: 100 mm/sec on the average by applying a load of 400 g (100 gf/cm$^2$) using an abrasion testing machine ("HEiDON TRIBOGEAR TYPE-30S" manufactured by Shinto Scientific Co., Ltd.), and the appearance of the surface of the article was evaluated. Upon the evaluation on appearance, the article was pasted to one side of a black acrylic plate (product name: ACRYLITE manufactured by Mitsubishi Rayon Co., Ltd.) having a thickness of 2.0 mm, and the resultant was held up to the fluorescent light indoors and visually evaluated.

A: scratches confirmed are less than 10 in abraded part.
B: antireflective performance is lost in less than 50% of area of abraded part.
C: antireflective performance is lost in 50% or more of abraded part.
D: antireflective performance is lost in almost entire abraded part.

(2-2) Pencil hardness of multilayer laminate body

The test was conducted at a load of 500 gf in conformity with JIS K5600-5-4. The appearance after the test was visually observed, and the hardness of the pencil which did not leave an indentation was noted. It was noted as "3H" in a case in which it was not scratched at 3H but it was scratched at 4H.

(2-3) Adhesion property between outermost layer and intermediate layer

The cross-cut peeling test was conducted in conformity with JIS K 5400 to evaluate the adhesion property between the outermost layer and the intermediate layer. An acrylic plate having a thickness of 2 mm was used as the base disk. The cross-cut peeling test was conducted for 100 squares of $10 \times 10$, and the number of the squares which were not peeled off among the 100 squares was evaluated.

A: absolutely no square was peeled off.
B: 1 to 99 squares were peeled off.
C: 100 squares were all peeled off.

(2-4) Measurement of reaction rate of surface of intermediate layer

The reaction rate of the surface of the intermediate layer was measured by the following method. The Attenuated Total Reflectance unit (endurance module: manufactured by ST Japan INC.) was mounted on an infrared spectrometer (Avatar330: manufactured by Thermo Fisher Scientific Inc.), and the reaction rate was measured for the surface of the intermediate layer of a two-layer laminate body under the conditions of a cumulative number of 32 times and a resolving power of 4 cm$^{-1}$. From the results, the height of the peak attributed to the C=C bond in the vicinity of 810 cm$^{-1}$ was read as p1 and the height of the peak attributed to C=O of the ester bond in the vicinity of 1730 cm$^{-1}$ was read as r1. In addition, the height p2 of the peak in the vicinity of 810 cm$^{-1}$ and the height r2 of the peak in the vicinity of 1730 cm$^{-1}$ were measured for the polymerizable component (a) used as a starting material, and the value obtained by the following Equation (III) was adopted as the reaction rate (% by mole) of the double bond on the surface of the intermediate layer. [Numerical Formula 1]

$$\text{Double bond reaction rate (\% by mole)} = (1-(p1/r1))/(p2/r2) \times 100 \cdots \text{(III)}$$

(2-5) Curing state of intermediate layer

The curing state of the intermediate layer of the two-layer laminate body was confirmed visually and by touching with a finger and evaluated according to the following evaluation criteria.

A: curing has proceeded to surface.
B: surface is uncured and coated surface is roughened by touching.

(2-6) Measurement of pore of mold (stamper)

The longitudinal section of a part of a mold consisting of anodized porous alumina was deposited with platinum for 1 minute and observed at an accelerating voltage of 3.00 kV using a field emission scanning electron microscope ("JSM-7400F" manufactured by JEOL Ltd.), the interval (cycle) between adjacent pores and the depth of the pore were measured. Specifically, measurement was conducted at 10 points for each and the average values thereof were adopted as the measured values.

(2-7) Measurement of Martens hardness, elastic modulus, and elastic recovery of cured product of active energy ray curable resin composition

A large size glass slide ("large format glass slide, product number: S9213", size: 76 mm $\times$ 52 mm, manufactured by Matsunami Glass Ind., Ltd.) was used as the substrate. An active energy ray curable resin composition was coated on the substrate such that the thickness of the coating film was about 250 $\mu$m, this was irradiated with ultraviolet light at about 1000 mJ/cm$^2$ using a high pressure mercury lamp, thereby fabricating a test piece having the cured product of an active energy ray curable resin composition formed on a substrate. This was used as the test piece for the measurements of Martens hardness, elastic modulus, and elastic recovery.
The physical properties of the cured product of the test piece were measured by the evaluation program of [pushing (100 mN/10 seconds)] $\rightarrow$ [creeping (100 mN, 10 seconds)] $\rightarrow$ [releasing (100 mN/10 seconds)] using a Vickers indenter (tetrahedral diamond cone) and a micro-hardness tester ("FISHERSCOPE HM2000XYp" manufactured by Fischer Instruments K.K.). The measurement was conducted in a thermostatic room (temperature: 23°C, humidity: 50%).
The Martens hardness, elastic recovery, and elastic modulus of the cured product of the active energy ray curable resin composition were calculated from the measurement results thus obtained by the analytical software ("WIN-HCU" developed by Fischer Instruments K.K.).

"Fabrication of mold"

(Fabrication of mold C)

An aluminum disk having a purity of 99.99% by mass, a thickness of 2 mm, and a diameter of 65 mm was used as the aluminum substrate. A 0.3 M aqueous solution of oxalic acid was adjusted to 15°C, the aluminum substrate was immersed in this solution, and the ON/OFF operation of the power supply of the direct current stabilizing apparatus was repeated to intermittently flow current to the aluminum substrate, whereby the aluminum substrate was anodized. The operation to apply a constant voltage of 80 V for 5 seconds every 30 seconds was repeated 60 times, whereby an oxide film having pores was formed on the aluminum substrate (step (a)). Subsequently, the aluminum substrate having the oxide film formed thereon was immersed in an aqueous solution prepared by mixing 6% by mass phosphoric acid with 1.8% by mass chromic acid at 70°C for 6 hours, whereby the oxide film was dissolved and removed (step (b)).

Thereafter, the aluminum substrate obtained by dissolving and removing the oxide film was immersed in a 0.05 M aqueous solution of oxalic acid adjusted to 16°C and anodized at 80 V for 7 seconds (step (c)). Subsequently, the aluminum substrate was immersed in a 5% by mass aqueous solution of phosphoric acid adjusted to 32°C for 20 minutes so as to conduct the pore size enlarging treatment to enlarge the pores of the oxide film (step (d)). The anodization of the step (c) and the pore size enlarging treatment of the step (d) were alternately repeated 5 times in this manner, thereby obtaining the mold C. The interval (cycle) of pores and the depth of pores of the mold C were about 180 nm and about 180 nm, respectively.

The mold C was immersed in a 0.1% by mass aqueous solution of TDP-8 (manufactured by Nikko Chemicals Co., Ltd.) for 10 minutes, withdrawn therefrom, and air-dried for 16 hours, thereby conducting the mold releasing treatment.

(Fabrication of mold D)

The same aluminum disk as in the mold C was used as the aluminum substrate. A 0.3 M aqueous solution of oxalic acid was adjusted to 15°C, the aluminum substrate was immersed in this solution and anodized at a direct current of 40 V for 30 minutes, whereby an oxide film having pores was formed on the aluminum substrate (step (a)). Subsequently, the aluminum substrate having the oxide film formed thereon was immersed in an aqueous solution prepared by mixing 6% by mass phosphoric acid with 1.8% by mass chromic acid at 70°C for 6 hours, whereby the oxide film was dissolved and removed (step (b)).

The aluminum substrate obtained by dissolving and removing the oxide film was immersed in a 0.3 M aqueous solution of oxalic acid adjusted to 16°C and anodized at 40 V for 30 seconds (step (c)). Subsequently, the aluminum substrate anodized was immersed in a 5% by mass aqueous solution of phosphoric acid adjusted to 32°C for 8 minutes so as to conduct the pore size enlarging treatment to enlarge the pores of the oxide film (step (d)). The anodization of the step (c) and the pore size enlarging treatment of the step (d) were alternately repeated 5 times in total for each in this manner, thereby obtaining the mold D. The interval (cycle) of pores and the depth of pores of the mold D were about 100 nm and about 180 nm, respectively.

The mold D was immersed in a 0.1 % by mass aqueous solution of TDP-8 (manufactured by Nikko Chemicals Co., Ltd.) for 10 minutes, withdrawn therefrom, and air-dried for the night, thereby conducting the mold releasing treatment.

"Example 2-1"

(1. Formation of intermediate layer)

The resin composition (X-1) having the composition presented in Table 7 was prepared as the resin composition (X) for intermediate layer. Incidentally, the symbols in the columns for the polymerizable component (a) and the solvent (e) in Table 7 are the compounds presented in Table 6. In addition, the Martens hardness, elasticity modulus, and elastic recovery of the cured product of the resin composition (X) are as presented in Table 7.

A light transmissive triacetyl cellulose film (product name: T40UZ, thickness: 40 $\mu$m, manufactured by FUJIFILM Corporation) was used as the substrate. The resin composition (X-1) was coated on the substrate placed on a glass plate using a bar coater. Subsequently, the resultant was dried for 3 minutes in a dryer adjusted to 70°C, thereby obtaining a laminate body having an uncured intermediate layer formed on the substrate. Subsequently, the intermediate layer was cured by being irradiated with ultraviolet light from the surface of the intermediate layer using an electrodeless type UV lamp (H bulb, manufactured by Fusion UV Systems Japan K.K.) in a state of not conducting purging with an inert gas such as nitrogen so that the cumulative quantity of light measured at a wavelength of 365 nm was 350 mJ/cm$^2$,

thereby obtaining the two-layer laminate body.

The double bond reaction rate (% by mole) was measured by the "method for measuring reaction rate of surface of intermediate layer" described above, and the results thereof are presented in Table 9. In addition, the evaluation results of the two-layer laminate body are presented in Table 9.

(2. Formation of outermost layer)

The resin composition (Y-1) having the composition presented in Table 8 was prepared as the resin composition (Y) for outermost layer. Incidentally, the symbols in the column for the polymerizable component (g) in Table 8 are the compounds presented in Table 6. In addition, the Martens hardness, elasticity modulus, and elastic recovery of the cured product of the resin composition (Y) are as presented in Table 8.

The resin composition (Y-1) was dropped on the mold D in a proper amount, the resin composition was covered with the intermediate layer of the two-layer laminate body so as to be in contact with each other, and the resin composition was uniformly pressed and spread with the intermediate layer. Subsequently, the resin composition (Y-1) and the unreacted resin composition (X-1) in the intermediate layer were reacted and cured by being irradiated with ultraviolet light from the substrate side using an electrodeless type UV lamp (D bulb, manufactured by Fusion UV Systems Japan K.K.) so that the cumulative quantity of light measured at a wavelength of 365 nm was 100 mJ/cm$^2$. Thereafter, the mold was peeled off therefrom, thereby obtaining a multilayer laminate body having a fine relief structure on the surface.

On the surface of this multilayer laminate body, the fine relief structure of the mold was transferred and a nano-relief structure having an average cycle of 100 nm, an average height of 180 nm, and a substantially conical shape was formed. The evaluation results of the multilayer laminate body are presented in Table 9. The thickness of the outermost layer was 5 $\mu$m.

"Examples 2-2 to 2-12 and Comparative Examples 2-1 to 2-4"

The two-layer laminate bodies and the multilayer laminate bodies were obtained in the same manner as in Example 2-1 except that the resin composition (X) for intermediate layer, the resin composition (Y) for outermost layer, and the mold were changed to the combinations presented in Tables 9 and 10 (combinations composed of those with a mark ○). Incidentally, an intermediate layer was not formed and the outermost layer was formed between the substrate and the mold in Comparative Examples 2-1 and 2-2.

The evaluation results are presented in Tables 9 and 10. On the surface of each of the multilayer laminate bodies, the fine relief structure of the mold were transferred, a nano-relief structure having an average cycle of 180 nm, an average height of 180 nm, and a substantially conical shape was formed in the case of using the mold C, and a nano-relief structure having an average cycle of 100 nm, an average height of 180 nm, and a substantially conical shape was formed in the case of using the mold D. The thicknesses of the outermost layers were all 5 $\mu$m.

[Table 6]

| | Product name (Manufacturer) | Compound name and the like |
|---|---|---|
| Polymerizable component (a) | UA-306H (manufactured by KYOEISHA CHEMICAL Co., LTD.) | Pentaerythritol triacrylate hexamethylene diisocyanate urethane prepolymer |
| | UA-510H (manufactured by KYOEISHA CHEMICAL Co., LTD.) | Dipentaerythritol pentaacrylate hexamethylene diisocyanate urethane prepolymer |
| | UA-306I (manufactured by KYOEISHA CHEMICAL Co., LTD.) | Pentaerythritol triacrylate isophorone diisocyanate urethane prepolymer |
| | MEK-AC-4130Y (manufactured by NISSAN CHEMICAL INDUSTRIES. LTD.) | Reaction product or 3-methacryloxypropyltrimethoxysilane with colloidal nanosilica. MEK dispersed solution of about 31% by mass. |

(continued)

|  | Product name (Manufacturer) | Compound name and the like |
|---|---|---|
| Polymerizable component (g) | DPHA (manufactured by Nippon Kayaku Co., Ltd.) | Dipentaerythritol (penta)hexaacrylate |
| | DPHA-12EO (manufactured by DKS Co., Ltd.) | Dipentaerythritol EO-modified hexaacrylate (oxyethylene group: about 12 moles) |
| | ATM-35E (manufactured by Shin-Nakamura Chemical Industry Co., Ltd.) | Dipentaerythritol EO-modified tetraacrylate (oxyethylene group: about 35 moles) |
| | A-600 (manufactured by Shin-Nakamura Chemical Industry Co., Ltd.) | Polyethylene glycol #600 diacrylate |
| Solvent (e) | Methyl ethyl ketone (manufactured by Wako Pure Chemical Industries, Ltd.) | Methyl ethyl ketone (2-butanone) (abbreviation: MEK) |
| | Toluene (manufactured by Wako Pure Chemical Industries, Ltd.) | Toluene (abbreviation: TOL) |
| | Cyclohexane (manufactured by Wako Pure Chemical Industries, Ltd.) | Cyclohexane (abbreviation: ANONE) |

[Table 7]

| Resin composition (X) | Blending ratio of polymerizable component (a) to solvent (e) [% by mass] | Solid matter concentration [% by mass] | Polymerization initiator (d) [% by mass] | Martens hardness [N/mm$^2$] | Elastic modulus [MPa] | Elastic recovery [%] |
|---|---|---|---|---|---|---|
| X-1 | UA-306H/MEK/TOL/ANONE 60/20/10/10 | 60 | 3 | 228 | 4008 | 61 |
| X-2 | UA-510H/MEK/TOL/ANONE 50/25/10/15 | 50 | 3 | 200 | 3456 | 64 |
| X-3 | UA-306I/MEK/TOL/ANONE 50/25/10/15 | 50 | 3 | 222 | 4239 | 54 |
| X-4 | UA-306H/MEK-AC-4130Y/MEK/TOL/ANONE 45/16/14/10/15 | 50 | 3 | 264 | 4535 | 64 |
| X-5 | UA-306H/MEK-AC-4130Y/MEK/TOL/ANONE 45/16/14/10/15 | 50 | 6 | 273 | 4643 | 65 |
| X-6 | UA-306H/MEK-AC-4130Y/MEK/TOL/ANONE 45/16/14/10/15 | 50 | 1 | 226 | 4003 | 61 |
| X-7 | UA-306H/MEK-AC-4130Y/MEK/TOL/ANONE 45/16/14/10/15 | 50 | 10 | 259 | 4341 | 65 |

Solid matter concentration: concentration of polymerizable component (a) in solution of polymerizable component (a) and solvent (e)
Polymerisation initiator (d): Irgacure 184 (manufactured by BASF), numerical value in Table is value with respect to 100% by mass of polymerizable component (a)

[Table 8]

| Resin composition (Y) | Blending ratio of polymerizable component (g) [% by mass] | Polymerization initiator (h) [% by mass] | | Mold releasing agent (j) [% by mass] | Martens hardness [N/mm$^2$] | Elastic modulus [MPa] | Elastic recovery [%] |
|---|---|---|---|---|---|---|---|
| | | Irgacure 184 (manufactured by BASF) | Irgacure 819 (manufactured by BASF) | | | | |
| Y-1 | DPHA/DPHA-12EO/A-600 50/25/25 | 0.1 | 0.5 | 0.01 | 139 | 2170 | 77 |
| Y-2 | DPHA/A-600 20/80 | 0.1 | 0.5 | 0.01 | 24 | 340 | 94 |
| Y-3 | DPHA/ATM-35E 20/80 | 0.1 | 0.5 | 0.01 | 14 | 199 | 94 |

Polymerization initiator (h): numerical value in Table is value with respect to 100% by mass of polymerizable component (g)
Mold releasing agent (j): numerical value in Table is value with respect to 100% by mass of polymerizable component (g)

[Table 9]

| | Resin name | Example 2-1 | Example 2-2 | Example 2-3 | Example 2-4 | Example 2-5 | Example 2-6 | Example 2-7 | Example 2-8 | Comparative Example 2-1 | Comparative Example 2-2 |
|---|---|---|---|---|---|---|---|---|---|---|---|
| Resin composition (X) | X-1 | ○ | ○ | | ○ | ○ | ○ | ○ | | | |
| | X-2 | | | ○ | | | | | | | |
| | X-3 | | | | | | | | ○ | | |
| Resin compostion (Y) | Y-1 | ○ | ○ | ○ | ○ | | | | ○ | ○ | |
| | Y-2 | | | | | ○ | | | | | |
| | Y-3 | | | | | | ○ | ○ | | | ○ |
| Mold | Mold C | | | | | ○ | ○ | ○ | | | ○ |
| | Mold D | ○ | ○ | ○ | ○ | | | | ○ | ○ | |
| Curing condition of intermediate layer | Cumulative quantity of light [mJ/cm$^2$] | 350 | 350 | 350 | 350 | 350 | 350 | 350 | 350 | - | - |
| Evaluation of two-layer laminate body | Reaction rate of double bond on surface of intermediate layer [% by mole] | 60 | 60 | 60 | 67 | 60 | 60 | 67 | 65 | - | - |
| | Curing state | A | A | A | A | A | A | A | A | - | - |
| Evaluation of multilayer laminate body | Film thickness of intermediate layer \|mm\| | 11 | 5 | 5 | 2 | 5 | 5 | 2 | 5 | - | - |
| | Abrasion resistance | B | B | B | B | A | A | A | B | B | A |
| | Pencil hardness | 3H | 3H | 3H | H | 3H | 3H | H | 2H | HB | B |
| | Adhesion property | A | A | A | A | A | A | A | B | C | C |

[Table 10]

| | Resin name | Example 2-9 | Example 2-10 | Example 2-1 | Example 2-12 | Comparative Example 2-3 | Comparative Example 2-4 |
|---|---|---|---|---|---|---|---|
| Resin composition (X) | X-1 | | | | | | |
| | X-2 | | | | | | |
| | X-3 | | | | | | |
| | X-4 | ○ | ○ | | | | |
| | X-5 | | | ○ | ○ | | |
| | X-6 | | | | | ○ | |
| | X-7 | | | | | | ○ |
| Resin composition (Y) | Y-1 | | | ○ | ○ | ○ | ○ |
| | Y-2 | | | | | | |
| | Y-3 | ○ | ○ | | | | |
| Mold | Mold C | ○ | ○ | | | | |
| | Mold D | | | ○ | ○ | ○ | ○ |
| Curing condition of intermediate layer | Cumulative quantity of light [mJ/cm$^2$] | 100 | 500 | 100 | 500 | 200 | 1500 |
| Evaluation of two-layer laminate body | Reaction rate of double bond on surface of intermediate layer [% by mole] | 44 | 69 | 60 | 79 | 12 | 86 |
| | Curing state | A | A | A | A | B | A |
| Evaluation of three-layer laminate body | Film thickness of intermediate layer [mm] | 5 | 5 | 5 | 5 | 5 | 5 |
| | Abrasion resistance | A | A | B | B | B | B |
| | Pencil hardness | 3H | 3H | 3H | 3H | H | 3H |
| | Adhesion property | A | A | A | A | A | C |

"Summary of evaluation result"

The multilayer structures of Examples 2-1 to 2-3 had a favorable pencil hardness of 3H and exhibited favorable adhesion property. The multilayer structure of Example 2-4 had a pencil hardness of H since the film thickness of the intermediate layer was 2 $\mu$m to be relatively thin, but the pencil hardness improving effect and the adhesion property improving effect were confirmed as compared with the multilayer structure of Comparative Example 2-1 which did not include an intermediate layer (pencil hardness: HB, adhesion property: rank C). The multilayer structures of Examples 2-5 to 2-6 had a pencil hardness of 3H to be the same degree as in Example 2-2 even though the resin constituting the outermost layer was softer, and thus it was confirmed that the pencil hardness improving effect of the intermediate layer was high, and the adhesion property was also favorable at the same time.
The multilayer structure of Example 2-7 had a pencil hardness of H since the film thickness of the intermediate

layer was 2 $\mu$m to be thin, but the pencil hardness improving effect and the adhesion property improving effect were confirmed as compared with the multilayer structure of Comparative Example 2-2 which did not include an intermediate layer (pencil hardness: B, adhesion property: rank C). The multilayer structure of Example 2-8 exhibited adhesion property of rank B since the resin composition (X-3) was used for the intermediate layer, but it was confirmed that it was possible to realize adhesion property without any problem for practical use and a high pencil hardness.

The multilayer structures of Examples 2-9 to 2-12 had a favorable pencil hardness of 3H and exhibited favorable adhesion property as well.

The multilayer structure of Comparative Example 2-3 had a pencil hardness after being formed into a three-layer laminate body of H even though the film thickness of the intermediate layer was as thick as 5 $\mu$m since the reaction rate of the polymerizable functional group on the surface of the intermediate layer after the first active energy ray irradiation was 12% by mole to be low and the curing state of the intermediate layer was rank B to be in a state in which the coated surface is roughened by only lightly touching. The multilayer structure of Comparative Example 2-4 exhibited adhesion property of rank C since the reaction rate of the polymerizable functional group on the surface of the intermediate layer after the first active energy ray irradiation was 86% by mole to be high.

INDUSTRIAL APPLICABILITY

The multilayer structure of the invention is useful as an optical article exhibiting excellent optical performance and mechanical properties, particularly an antireflective article such as an antireflective film.

EXPLANATIONS OF LETTERS OR NUMERALS

| | |
|---|---|
| 10 | Multilayer structure |
| 12 | Substrate |
| 14 | Intermediate layer |
| 14a | Layer having fine relief structure on surface |
| 14b | Layer having no fine relief structure on surface |
| 16 | Outermost layer |
| 20 | Aluminum substrate |
| 22 | Pore |
| 24 | Oxide film |
| 26 | Pore generating point |
| 28 | Mold |
| 30 | Roll-shaped mold |
| 32 | Tank |
| 34 | Pneumatic cylinder |
| 36 | Nip roll |
| 38 | Active energy ray irradiating device |
| 40 | Peeling roll |
| 50 | Multilayer structure |
| 60 | Multilayer structure |
| 70 | Multilayer structure |
| 100 | Multilayer structure |
| 110 | Substrate |
| 120 | Outermost layer (fine relief structure layer) |
| 130 | Convex portion |
| 130a | Top point of convex portion |
| 140 | Concave portion |
| 140a | Bottom point of concave portion |
| 150 | Intermediate layer (second layer) |
| w1 | Interval between adjacent convex portions |
| d1 | Vertical distance from bottom point of concave portion to top point of convex portion |

**Claims**

1.  A multilayer structure comprising a substrate, an intermediate layer, and an outermost layer sequentially layered, wherein

    the Martens hardness of the intermediate layer is 120 N/mm$^2$ or more,
    an elastic recovery of the outermost layer is 70% or more, and
    the outermost layer has a fine relief structure having a cycle equal to or less than a wavelength of visible light on a surface.

2.  The multilayer structure according to claim 1, wherein the cycle of the fine relief structure on the surface of the outermost layer is 400 nm or less.

3.  The multilayer structure according to claim 1 or 2, wherein the elastic recovery of the outermost layer is 80% or more.

4.  The multilayer structure according to claim 1 or 2, wherein the Martens hardness of the intermediate layer is 180 N/mm$^2$ or more.

5.  The multilayer structure according to any one of claims 1 to 4, wherein an elastic recovery of the intermediate layer is 60% or more.

6.  The multilayer structure according to any one of claims 1 to 5, wherein the intermediate layer has a fine relief structure having a cycle of 1000 nm or less on a surface.

7.  The multilayer structure according to claim 6, wherein the cycle of the fine relief structure on the surface of the intermediate layer is different from the cycle of the fine relief structure on the surface of the outermost layer.

8.  The multilayer structure according to any one of claims 1 to 7, wherein the intermediate layer is a cured product of a resin composition containing a polyfunctional (meth)acrylate.

9.  An article comprising the multilayer structure according to any one of claims 1 to 8 on a surface.

10. A method for producing the multilayer structure according to any one of claims 1 to 8, wherein the fine relief structure is formed by a transfer method using a mold.

11. A method for producing a multilayer structure including a substrate, an intermediate layer, and an outermost layer sequentially layered, the method comprising the following steps (1) to (3):

    step (1): a step of disposing an active energy ray curable resin composition (X) containing a compound having a polymerizable functional group on a light transmissive substrate and then conducting a first active energy ray irradiation to form an intermediate layer having a reaction rate of the polymerizable functional group on a surface of from 35 to 85% by mole;
    step (2): a step of disposing an active energy ray curable resin composition (Y) between the intermediate layer formed in the step (1) and a mold for transfer of a fine relief structure; and
    step (3): a step of conducting a second active energy ray irradiation from the substrate side to cure the resin composition (Y) and to form an outermost layer and releasing a multilayer structure including the substrate, the intermediate layer, and the outermost layer sequentially layered from the mold.

12. A method for producing the multilayer structure according to claim 1, the method comprising the following steps (1) to (3):

    step (1): a step of disposing an active energy ray curable resin composition (X) containing a compound having a polymerizable functional group on a light transmissive substrate and then conducting a first active energy ray irradiation to form an intermediate layer having a reaction rate of the polymerizable functional group on a surface of from 35 to 85% by mole;
    step (2): a step of disposing an active energy ray curable resin composition (Y) between the intermediate layer formed in the step (1) and a mold for transfer of a fine relief structure; and
    step (3): a step of conducting a second active energy ray irradiation from the substrate side to cure the resin composition (Y) and to form an outermost layer and releasing a multilayer structure including the substrate, the intermediate layer, and the outermost layer sequentially layered from the mold.

13. The method for producing a multilayer structure according to claim 11 or 12, wherein a cumulative quantity of light by the first active energy ray irradiation in the step (1) is from 50 to 1000 mJ/cm$^2$.

14. The method for producing a multilayer structure according to claim 13, wherein the cumulative quantity of light by the first active energy ray irradiation in the step (1) is from 100 to 500 mJ/cm$^2$.

15. The method for producing a multilayer structure according to any one of claims 11 to 14, wherein the intermediate layer is a semi-cured product of a resin composition (X) containing (poly)pentaerythritol (poly)acrylate and a reaction product of (poly)pentaerythritol (poly)acrylate with hexamethylene diisocyanate.

16. A multilayer structure obtained by the method for producing a multilayer structure according to any one of claims 11 to 15, wherein

a reaction rate of a polymerizable functional group on a surface of an intermediate layer after a first active energy ray irradiation is from 35 to 85% by mole.

Fig. 1

Fig. 2

Fig. 3

Fig. 4

Fig. 5

Fig. 6

Fig. 7

DEFORMATION AMOUNT

Fig. 8A

Fig. 8B

## INTERNATIONAL SEARCH REPORT

| International application No. |
| --- |
| PCT/JP2014/060016 |

### A. CLASSIFICATION OF SUBJECT MATTER
*B32B3/30*(2006.01)i, *B29C39/18*(2006.01)i, *B29C39/20*(2006.01)i, *B29C59/02* (2006.01)i, *G02B1/11*(2006.01)i

According to International Patent Classification (IPC) or to both national classification and IPC

### B. FIELDS SEARCHED

Minimum documentation searched (classification system followed by classification symbols)
B32B1/00-43/00, G02B1/10-1/12, B29C39/00-39/24, B29C39/38-39/44, B29C43/00-43/34, B29C43/44-43/48, B29C43/52-43/58, B29C53/00-53/84, B29C57/00-59/18

Documentation searched other than minimum documentation to the extent that such documents are included in the fields searched

| | | | |
| --- | --- | --- | --- |
| Jitsuyo Shinan Koho | 1922–1996 | Jitsuyo Shinan Toroku Koho | 1996–2014 |
| Kokai Jitsuyo Shinan Koho | 1971–2014 | Toroku Jitsuyo Shinan Koho | 1994–2014 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| X<br>A | JP 2011-000856 A (DNP Fine Chemicals Co., Ltd.),<br>06 January 2011 (06.01.2011),<br>claims; paragraphs [0009], [0012], [0022] to [0026], [0042] to [0045], [0052], [0055], [0060], [0071], [0073], [0077]; examples; fig. 3<br>(Family: none) | 16<br>1-15 |
| X<br>A | WO 2012/124498 A1 (Sharp Corp.),<br>20 September 2012 (20.09.2012),<br>claims; paragraphs [0001], [0009] to [0021], [0046], [0049], [0063]; example 3; fig. 20<br>& CN 103415381 A | 16<br>1-15 |

[×] Further documents are listed in the continuation of Box C.      [ ] See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered    to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 01 July, 2014 (01.07.14) | 08 July, 2014 (08.07.14) |

| Name and mailing address of the ISA/<br>    Japanese Patent Office | Authorized officer |
| --- | --- |
| Facsimile No. | Telephone No. |

Form PCT/ISA/210 (second sheet) (July 2009)

EP 2 982 502 A1

**INTERNATIONAL SEARCH REPORT**

International application No.

PCT/JP2014/060016

C (Continuation). DOCUMENTS CONSIDERED TO BE RELEVANT

| Category* | Citation of document, with indication, where appropriate, of the relevant passages | Relevant to claim No. |
|---|---|---|
| A | JP 2013-029828 A (Mitsubishi Rayon Co., Ltd.), 07 February 2013 (07.02.2013), claims; paragraphs [0001], [0007] to [0009], [0014], [0031], [0034], [0039], [0042], [0043], [0047]; examples (Family: none) | 1-16 |
| A | JP 2001-215326 A (Nitto Denko Corp.), 10 August 2001 (10.08.2001), claims; paragraphs [0002], [0014] to [0016]; examples (Family: none) | 1-16 |
| E,A | WO 2014/065136 A1 (Mitsubishi Rayon Co., Ltd.), 01 May 2014 (01.05.2014), entire text (Family: none) | 1-16 |
| E,A | JP 2014-071321 A (Fujifilm Corp.), 21 April 2014 (21.04.2014), claims; paragraphs [0003], [0009], [0021], [0025]; examples (Family: none) | 1-16 |

Form PCT/ISA/210 (continuation of second sheet) (July 2009)

**EP 2 982 502 A1**

**REFERENCES CITED IN THE DESCRIPTION**

**Patent documents cited in the description**

- JP 2013079568 A
- JP 2013167825 A
- JP 4156415 B
- JP 2000071290 A
- JP 2011224957 A

- JP 2002107501 A
- JP 3627304 B
- JP 2009031764 A
- JP 3676260 B
- JP 2007070449 A